# EUROPÄISCHE PATENTSCHRIFT

(11) **EP 3 967 562 B1**
(45) Veröffentlichungstag und Bekanntmachung des Hinweises auf die Patenterteilung: **13.12.2023**
(21) Anmeldenummer: 20195775.0
(22) Anmeldetag: 11.09.2020
(51) Int. Cl.: B60T 7/20, B60T 13/26, B60T 13/66, B60T 13/68, B60T 15/60

(54) **DRUCKLUFTEINRICHTUNG FÜR EINEN ANHÄNGER**
COMPRESSED AIR DEVICE FOR A TRAILER
ÉQUIPEMENT À AIR COMPRIMÉ POUR UNE REMORQUE

(43) Veröffentlichungstag der Anmeldung: 16.03.2022
(73) Patentinhaber: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(56) Entgegenhaltungen:
- DE-A1-102007 053 765
- DE-A1-102008 060 912

## Beschreibung

### TECHNISCHES GEBIET DER ERFINDUNG

Die Erfindung betrifft eine Drucklufteinrichtung für einen Anhänger eines Nutzfahrzeugs. Hierbei kann die Drucklufteinrichtung für einen Anhänger ausschließlich in einem als Baueinheit ausgebildeten Parkventil bestehen. Möglich des Weiteren, dass die Drucklufteinrichtung eine Baueinheit ist, die neben einem Parkventil auch ein Rangierventil aufweist, oder die Drucklufteinrichtung eine als Baueinheit ausgebildete Ventileinrichtung ist, in die mindestens ein weiteres Bauelement integriert sind. Möglich ist aber auch, dass die Drucklufteinrichtung eine Nutzfahrzeuganhänger-Druckluftanlage ist, die über mehrere miteinander kommunizierende Bauelemente und/oder Baueinheiten verfügt und beispielsweise ein Parkventil und eine EBS-Steuereinheit aufweisen kann, optional zumindest Bauelemente einer Luftfederungsanlage und/oder eines weiteren Verbraucherkreises aufweisen kann und sogar die Verbindungen zu einem Kupplungskopf Vorrat und/oder zu einem Kupplungskopf Bremse und/oder Federspeicherbremsen, Betriebsbremsen oder Kombi-Bremszylindern aufweisen kann. In den genannten unterschiedlichen Ausführungsformen kann die Baueinheit ein gemeinsames Gehäuse aufweisen oder Bauelemente der Baueinheit sind als Teilmodule ausgebildet, die dann unmittelbar aneinander befestigt (insbesondere angeflanscht) sind zwecks Bildung des Gesamtmoduls, welches dann die Baueinheit bildet.

### STAND DER TECHNIK

DE 10 2017 118 529 B4 beschreibt eine Anhänger-Bremssteuereinheit, die als eine Baueinheit ausgebildet ist. In diese Baueinheit ist eine elektronisch gesteuerte Modulator-Ventileinrichtung integriert, die dazu dient, einen zur Vermeidung eines Blockierens der Fahrzeugräder modulierten Betriebsbremsdruck zu erzeugen, mit dem dann die Betriebsbremsen des Anhängers beaufschlagt werden. Des Weiteren ist in die Baueinheit eine Federspeicherbrems-Ventileinrichtung integriert, welche einen Federspeicherbremsdruck erzeugt, der für eine Federspeicherbremse bestimmt ist. Hierbei ist der Federspeicherbremsdruck abhängig von dem Bremssteuerdruck, einem Vorratsleitungsdruck, einer elektronischen Ansteuerung und einem vom einem Benutzer vorgegebenen pneumatischen oder elektrischen Signal. Der von der Modulator-Ventileinrichtung erzeugte modulierte Betriebsbremsdruck einerseits und der von der Federspeicherbrems-Ventileinrichtung erzeugte Federspeicherbremsdruck werden jeweils einem Eingang eines als Wechselventil ausgebildeten Anti-Compound-Ventils zugeführt, dessen Ausgang mit den Federspeicherbremszylindern des Anhängers verbunden ist. DE 10 2017 118 529 B4 schlägt vor, dass mit der Federspeicherbrems-Ventileinrichtung eine Federspeicherbremsfunktion ausgeführt werden soll. Beispielhaft werden dabei die folgenden Federspeicherbremsfunktionen genannt:
- Möglich ist, dass die Federspeicherbremsfunktion eine Parkfunktion ist, mittels welcher der Benutzer willkürlich über die Federspeicherbremsen eine Parkbremse betätigen und lösen kann. Hierbei kann der Benutzer beispielsweise die Parkfunktion über einen manuell betätigten Ventilschieber steuern, der dann unmittelbar die Parkfunktion herbeiführen oder eine Vorsteuerung herbeiführen kann. Ebenfalls möglich ist, dass der Benutzer die Parkfunktion über einen elektrischen Signalgeber wie einen elektrischen Schalter oder über ein Smartphone steuert.
- Des Weiteren kann die Federspeicherbremsfunktion eine Löse- oder Rangierfunktion sein. Hierunter wird eine Belüftung einer Federspeicherbremse infolge einer Vorgabe durch den Benutzer verstanden. Mittels der Löse- oder Rangierfunktion ist es möglich, dass der Anhänger-Bremssteuereinheit Druckluft zugeführt wird, wenn an einem Versorgungsanschluss der Anhänger-Bremssteuereinheit kein Druck anliegt, was insbesondere für abgekuppelten Anhänger der Fall ist, um ein Rangieren des Anhängers zu ermöglichen. Hierbei kann die Vorgabe durch den Benutzer durch Betätigung eines Ventilschiebers erfolgen oder durch Betätigung eines elektrischen Signalgebers wie eines elektrischen Schalters.
- Möglich ist, dass die Federspeicherbremsfunktion eine automatische Parkbrems-Lösefunktion ist. Unter einer Parkbrems-Lösefunktion wird hier eine automatisch durch eine elektronische Steuereinheit herbeigeführte Belüftung der Federspeicherbremsen verstanden, mit welcher der Anhänger für einen bevorstehenden oder bereits initiierten Fahrbetrieb mit einer sich von Null erhöhenden Fahrgeschwindigkeit vorbereitet wird. Die Parkbrems-Lösefunktion findet insbesondere dann Einsatz, wenn der Fahrer bei einem Fahrbeginn vergessen hat, manuell die Federspeicherbremsen des Anhängers zu lösen.
- Möglich ist, dass die Federspeicherbremsfunktion eine "Schubvermeidungsfunktion" ist, bei der eine automatische Betätigung der Federspeicherbremsen durch eine elektronische Steuereinheit erfolgt, wenn die elektronische Steuereinheit detektiert, dass sich der Antriebsstrang des Zugfahrzeugs in einem Schubbetrieb befindet, so dass an dem Zugfahrzeug eine Bremswirkung durch den Antriebsstrang erzeugt wird, ohne dass der Benutzer eine Betriebsbremse oder Federspeicherbremse betätigt. Mittels der Schubvermeidungsfunktion kann ein Auflaufen des Anhängers auf das Zugfahrzeug vermieden werden.
- Die Federspeicherbremsfunktion kann auch eine "Notbremsfunktion" sein. Mittels der Notbremsfunktion wird bei einem Abfall eines an einem Versorgungsanschluss der Anhänger-Bremssteuereinheit anliegenden Drucks eine Entlüftung der Federspeicherbremse herbeigeführt, so dass eine Notbremsung des Anhängers über die Federspeicherbremse erfolgt.
- Die Federspeicherbremsfunktion kann eine Override-Funktion sein, mittels welcher eine Ausführung der zuvor erläuterten Notbremsfunktion von einem weiteren Kriterium wie einer Betriebsgröße oder einem Druck abhängig gemacht wird. Mittels der Override-Funktion wird somit trotz eines Abfalls des Drucks an einem Versorgungsanschluss der Anhänger-Bremssteuereinheit temporär eine Entlüftung der Federspeicherbremse verhindert, bis beispielsweise ein Druck in einem Behälter der Betriebsbremse einen Schwellwert unterschreitet, für den noch eine geregelte (Not-)Bremsung über die Betriebsbremse (unter Umständen auch mit einer Antiblockierfunktion) möglich ist. Die Notbremsfunktion über die Federspeicherbremse wird somit verzögert und nur in tatsächlich eine Notbremsung gebietenden Betriebssituationen durchgeführt.
- Die Federspeicherbremsfunktion kann eine "Federspeicher-Immobilisierfunktion" sein, die ein Lösen der Federspeicherbremsen nur dann ermöglicht, wenn zuvor eine Authentifizierung erfolgt ist. Die Federspeicherbremse-Immobilisierfunktion kann auch über ein Mobiltelefon, welches mit der Anhänger-Bremssteuereinheit kommuniziert, aktiviert werden, wenn der Anhänger gestohlen worden ist. Eine Authentifizierung kann über eine Eingabe eines Pins in eine Eingabeeinrichtung der Fahrerkabine oder an anderer Stelle des Nutzfahrzeugs oder des Anhängers erfolgen oder durch Durchführung einer Authentifizierungssequenz wie die Durchführung einer Betätigung einzelner Bedienelemente des Fahrzeugs wie von Pedalen oder des Zündschlüssels in einer vorbestimmten Reihenfolge oder die Authentifizierung kann über ein Mobiltelefon erfolgen.
- Die Federspeicherbremsfunktion kann eine "geregelte Federspeicherbremsfunktion" sein. Hierunter wird eine Regelung des erzeugten Drucks in der Federspeicherbremskammer verstanden, welche zu einer Reduzierung eines Schlupfs zwischen einem der Federspeicherbremse zugeordneten Fahrzeugrad und einer Fahrbahn führt, und/oder eine Verhinderung eines Blockierens des Fahrzeugrads infolge einer Betätigung der Federspeicherbremse gewährleisten soll, womit eine Antiblockierfunktion in die Federspeicherbremse integriert werden kann.
- Die Federspeicherbremsfunktion kann eine "automatische Parkventil-Betätigungsfunktion" sein. Mittels der automatischen Parkventil-Betätigungsfunktion sollen funktionelle Einbußen und Gefahrensituationen vermieden werden, die dadurch entstehen, dass der Fahrer vergisst, in einer Parksituation ein Parkventil zu betätigen. Mit der automatischen Parkventil-Betätigungsfunktion erfolgt eine automatische Überführung eines Parkventils der Feststellbrems-Ventileinrichtung in eine Parkstellung, insbesondere wenn ein Druck in einer Vorratsleitung abfällt, was insbesondere der Fall sein kann, wenn ein Abkuppeln des Anhängers von dem Zugfahrzeug erfolgt.
- Die Federspeicherbremsfunktion kann eine "benutzergesteuerte Federspeicherbremsfunktion" sein, mit der Fahrer dosiert in einer beliebigen Zahl von Stufen oder stufenlos die Federspeicherbremse betätigen kann, um unabhängig von einer Betätigung eines Bremspedals und von der Betriebsbremse eine dosierte Bremswirkung über die Federspeicherbremse herbeizuführen.
- Möglich ist, dass die Federspeicherbremsfunktion eine "Streckbremsfunktion" ist, mit der der aus dem Zugfahrzeug und dem Anhänger bestehende Nutzfahrzeugzug in einem gestreckten Zustand gehalten wird, um eine Querstellung des Anhängers und eine sogenannte unerwünschte Klappmesserbewegung zu vermeiden.

Beliebige elektrische, pneumatische oder elektropneumatische Komponenten und Teil-Baueinheiten können in die Baueinheit der Anhänger-Bremssteuereinheit integriert werden. Hierbei kann es sich um ein Rückschlagventil zur Sicherung eines Drucks an einem Behälteranschluss, ein Anti-Compound-Ventil, ein Schnellentlüftungsventil, ein Handbetätigungsventil oder Ventile handeln, die seitens der Anmelderin unter den Kennzeichnungen TEM, TrCM, TrCM+ (mit der Funktion "save parking") vertrieben werden. Ein Rangierventil und/oder ein Parkventil sollen dabei entweder nicht vorhanden sein oder als separate Ventile ausgebildet sein, die dann an anderer Stelle in dem Fahrzeug platziert werden sollen.

EP 2 121 395 B2 offenbart eine Anhängerbremsanlage, bei der ein Parkventil und ein Rangierventil in eine Baueinheit integriert sind. Der von dieser Baueinheit erzeugte Druck wird Federspeicherbremsen über ein als Wechselventil ausgebildetes Anti-Compound-Ventil zugeführt, dessen anderem Eingang der Druck zugeführt wird, der von einer EBS-Steuereinheit für die Betriebsbremsen des Anhängers ausgesteuert wird. In einer Verbindungsleitung zwischen einem Vorratsbehälter für die Betriebsbremsen und einem Vorratsbehälter für eine Luftfederung ist hier ein Überströmventil angeordnet, welches der Sicherung des Drucks in der Luftfederung dient. EP 2 121 395 B2 schlägt ergänzend vor, in die Baueinheit auch ein Parklösesicherheitsventil, ein Hebe-Senk-Ventil, das Anti-Compound-Ventil und das Überströmventil zu integrieren, womit dann bis auf die EBS-Steuereinheit und das mechanische Niveauregelventil alle Komponenten in einem Gehäuse zusammengefasst sein sollen.

DE 10 2005 019 479 B3 offenbart ein Anhängerbremsventil, welches eingangsseitig mit den beiden Kupplungsköpfen des Anhängers verbunden ist, während dieses ausgangsseitig einerseits mit Federspeicherbremsen und andererseits über eine EBS-Steuereinheit mit Betriebsbremsen des Anhängers verbunden ist. Vorgeschlagen wird, in das Anhängerbremsventil ein Parkventil zu integrieren. Behälteranschlüsse für einerseits einen Vorratsbehälter für einen Betriebsbremskreis und andererseits einen Vorratsbehälter für einen Luftfederkreis sind über ein Überströmventil miteinander verbunden. Das Anhängerbremsventil verfügt über ein Notbremsventil, dessen Ventilstellung abhängig ist von dem Druck an dem Kupplungskopf Vorrat. Für an dem Kupplungskopf Vorrat anliegenden Druck leitet das Notbremsventil den Druck an dem Kupplungskopf Bremse weiter an die EBS-Steuereinheit, die einen geeigneten Bremsdruck für die Betriebsbremsen aussteuert. Bricht hingegen, beispielsweise infolge eines Leitungsabrisses oder einer Leckage, der Druck an dem Kupplungskopf Vorrat ein, wird das Notbremsventil umgeschaltet in eine Betriebsstellung, in der der pneumatische Steueranschluss der EBS-Steuereinheit über das Notbremsventil mit dem Druck aus dem Vorratsbehälter für die Betriebsbremse beaufschlagt wird, womit eine Abbremsung des Nutzfahrzeugs unter Ausführung einer Druckmodulation erfolgen kann. DE 10 2005 019 470 B3 schlägt des Weiteren vor, in das Anhängerbremsventil auch ein Hebe-Senk-Ventil zum willkürlichen Heben und Senken des Fahrzeugaufbaus zu integrieren. Das Hebe-Senk-Ventil verfügt über eine elektro-pneumatische Reset-to-Ride-Funktion.

EP 2 757 006 B1 und EP 2 757 010 B1 offenbaren eine als Baueinheit ausgebildete Ventileinrichtung, in die ein Parkventil, ein Rangierventil und ein Notbremsventil integriert sind. Ein Kupplungskopf Bremse ist mit einem Versorgungsanschluss der Ventileinrichtung verbunden, während ein Parkbremsanschluss der Ventileinrichtung über ein als Wechselventil ausgebildetes Anti-Compound-Ventil und ein Schnellentlüftungsventil mit Federspeicherbremsen verbunden ist. Der Kupplungskopf Vorrat ist unter Umgehung der Ventileinrichtung (über ein Wechselventil) mit einem Steueranschluss einer EBS-Steuereinheit verbunden. Der von der EBS-Steuereinheit ausgesteuerte modulierte Bremsdruck wird einer Betriebsbremse und dem anderen Eingang des Anti-Compound-Ventils zugeführt. In die Ventileinrichtung kann auch ein Überströmventil mit begrenzter Rückführung integriert sein, über welches eine Versorgung eines Luftfederkreises erfolgt. Vorgeschlagen wird in diesen Druckschriften darüber hinaus, in die Ventileinrichtung eine Ventileinheit zu integrieren, die die Beaufschlagung von Luftfederbälgen und eines Liftbalgs auf Grundlage eines gemessenen Niveausignals elektronisch regelt.

WO 2016/135567 A1 offenbart eine als Baueinheit ausgebildete Ventileinrichtung, in der eine zweikreisige Betriebsbremssteuerung mittels zweier EBS-Teileinheiten möglich ist. Des Weiteren sind in die Ventileinrichtung Ventile zur Steuerung der Luftfederbälge und einer Liftachse integriert. Schließlich verfügt die Ventileinrichtung über ein auf die Betriebsbremsen einwirkendes Notbremsventil. Die Ansteuerung des Hebens und Senkens der Luftfederbälge einerseits und die Betätigung des Notbremsventils andererseits erfolgen hier über pneumatische Steueranschlüsse der Ventileinrichtung.

Weiterer Stand der Technik ist beispielsweise aus EP 1 188 634 B2 und DE 10 2008 060 912 A1 bekannt.

Den nächstliegenden Stand der Technik bildet DE 10 2007 053 765 A1.

### AUFGABE DER ERFINDUNG

Der Erfindung liegt die Aufgabe zugrunde, eine Drucklufteinrichtung für einen Anhänger eines Nutzfahrzeugs vorzuschlagen, welche bei kompakter Ausgestaltung einen erweiterten Funktionsumfang gewährleistet.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die erfindungsgemäße Drucklufteinrichtung verfügt über ein Parkventil. Das Parkventil weist einen Parkbremsanschluss auf, der (direkt über eine Rohrleitung oder indirekt unter Zwischenschaltung pneumatischer Bauelemente) mit mindestens einer Federspeicherkammer einer Federspeicherbremse oder eines Kombi-Bremszylinders verbunden ist. Das Parkventil weist eine Parkstellung und eine Lösestellung auf (wobei dieses lediglich diese beiden Stellungen aufweist oder durchaus noch weitere Stellungen aufweisen kann). In der Parkstellung ist der Parkbremsanschluss entlüftet, was immer der Fall sein kann oder von weiteren Betriebsbedingungen oder der Stellung eines weiteren Ventils abhängig sein kann. Der Parkbremsanschluss ist in der Lösestellung des Parkventils belüftet, was ebenfalls zwingend der Fall sein kann oder von weiteren Betriebsbedingungen oder einer Ventilstellung eines weiteren Ventils abhängig sein kann. Das Parkventil verfügt über mindestens ein manuelles Betätigungselement. Das manuelle Betätigungselement ermöglicht eine manuelle Betätigung des Parkventils, mit der einerseits das Parkventil von der Parkstellung in die Lösestellung überführt werden kann und andererseits das Parkventil von der Lösestellung in die Parkstellung überführt werden kann. Grundsätzlich sind die Lösestellung und die Parkstellung jeweils stabil, so dass diese nach einer manuellen Betätigung des Betätigungselements beibehalten werden können. Insoweit kann das Parkventil auch gemäß aus dem Stand der Technik bekannten Parkventilen ausgebildet sein.

Erfindungsgemäß wird vorgeschlagen, dass das Parkventil über zwei elektrisch betätigbare Aktuatoren verfügt. Mittels eines ersten Aktuators ist es möglich, das Parkventil von der Parkstellung in die Lösestellung zu überführen und/oder in der Lösestellung zu halten. Hingegen ist es über den zweiten Aktuator möglich, das Parkventil von der Lösestellung in die Parkstellung zu überführen und/oder das Parkventil in der Parkstellung zu halten. Die beiden Aktuatoren wirken dabei vorzugsweise in entgegengesetzte Wirkrichtungen auf ein Ventilelement des Parkventils ein. Über die beiden Aktuatoren sind erfindungsgemäß die Möglichkeiten für eine Beeinflussung der Betriebsstellung des Parkventils und damit der Drucklufteinrichtung und auch der Nutzfahrzeuganhänger-Druckluftanlage erweitert:

In der erfindungsgemäßen Drucklufteinrichtung weist eine elektronische Steuereinheit Steuerlogik auf. Mittels der Steuerlogik können alternativ oder kumulativ (in einer beliebigen Kombination und beliebigen Anzahl der folgenden Funktionen) durch geeignete elektrische Ansteuerung der beiden Aktuatoren die folgenden zusätzlichen Funktionen bereitgestellt werden:
a) Möglich ist, dass die Steuerlogik eine Berechtigung für den Betrieb des Anhängers prüft.

Die Prüfung der Berechtigung kann beispielsweise darin bestehen, dass geprüft wird, ob ein Diebstahlschutz oder eine Wegfahrsperre von einem Benutzer aktiviert worden ist. Diese Aktivierung kann beispielsweise über ein Bedienelement des Anhängers oder Zugfahrzeugs erfolgen, welches mit der Steuereinheit (drahtlos oder drahtgebunden) kommuniziert, um die Betätigung der Wegfahrsperre oder des Diebstahlschutzes an die Steuereinheit zu übermitteln. Möglich ist auch, dass die Aktivierung der Wegfahrsperre oder des Diebstahlschutzes über ein Mobiltelefon erfolgt, welches dann drahtlos (direkt oder unter Zwischenschaltung weiterer Sende- und/oder Empfangseinrichtungen und Steuereinheiten) mit der prüfenden Steuereinheit kommuniziert. Möglich ist des Weiteren, dass ein Benutzer oder Fahrer eine Berechtigung in Form einer Authentifizierung vornimmt, beispielsweise über die Eingabe eines Pins in eine Eingabeeinrichtung der Fahrerkabine oder an anderer Stelle des Nutzfahrzeugs oder des Anhängers, so dass über die Authentifizierung Fahrer oder Benutzer unterschieden werden können, die berechtigt sind, den Anhänger zu bewegen, und solche, die hierzu nicht berechtigt sind. Auch möglich ist, dass eine derartige Authentifizierung durch Durchführung einer Authentifizierungssequenz erfolgt. Die Authentifizierungssequenz kann beispielsweise die Durchführung einer Betätigung einzelner Bedienelemente des Fahrzeugs wie von Pedalen oder des Zündschlüssels in einer vorbestimmten Reihenfolge sein. Möglich ist auch, dass sich ein Benutzer oder Fahrer über ein Mobiltelefon authentifiziert. Des Weiteren möglich ist, dass die Prüfung der Berechtigung in der Prüfung besteht, ob ein Zugfahrzeug, welches mit dem Anhänger gekoppelt werden soll oder gekoppelt ist, berechtigt ist für eine Bewegung des Anhängers. Dies kann beispielsweise über die Übermittlung eines Typs des Zugfahrzeugs oder einer Kennzeichnung des Zugfahrzeugs erfolgen, wobei dann in der Steuereinheit oder einer zugeordneten Speichereinheit abgelegt sein kann, welcher Typ von Zugfahrzeug oder welche Kennzeichnungen von Zugfahrzeugen zur Bewegung des Anhängers berechtigt sind. Möglich ist beispielsweise, dass die Kennzeichnung Zugfahrzeuge eines Fuhrpark kennzeichnet, die berechtigt sind, mit dem spezifischen Anhänger des Fuhrparks betrieben zu werden.

Ergibt die Prüfung der Berechtigung, dass keine Berechtigung vorliegt, wird eine Immobilisierfunktion ausgeführt, indem der zweite Aktuator so betätigt wird, dass das Parkventil von der Lösestellung in die Parkstellung überführt wird oder das Parkventil in der Parkstellung gehalten wird. Dies führt zu einer Entlüftung der Federspeicherkammern, die mit dem Parkbremsanschluss des Parkventils verbunden sind, womit eine Aktivierung der Feststellbremsen erfolgt und der Anhänger nicht bewegt werden kann.

b) Alternativ oder kumulativ möglich ist, dass die Steuerlogik der Steuereinheit das Vorliegen eines Notbremskriteriums überprüft.

Das Notbremskriterium kann beispielsweise sein, dass geprüft wird, ob die mechanische Kopplung, die elektrische Kopplung und/oder die pneumatische Kopplung zwischen dem Zugfahrzeug und dem Anhänger intakt ist. Ist dies nicht der Fall, liegt ein Notbremskriterium vor. So kann beispielsweise als Notbremskriterium ausgewertet werden, ob der Druck an einem Kupplungskopf Vorrat unterhalb eines Schwellwerts liegt, was als Indiz dafür gewertet werden kann, dass ein Abriss des Kupplungskopfs Vorrat erfolgt ist oder eine Leckage an dem Kupplungskopf Vorrat oder in einer Versorgungsleitung auftritt oder die Bereitstellung von Druckluft von dem Zugfahrzeug nicht ordnungsgemäß ist. Das Entsprechende gilt, wenn an einer elektrischen oder elektropneumatischen Schnittstelle zwischen Zugfahrzeug und Anhänger ein Defekt festgestellt wird.

Ein weiteres Notbremskriterium kann die Überwachung eines Betriebszustands des Anhängers und hier insbesondere der Nutzfahrzeuganhänger-Druckluftanlage sein wie beispielsweise die Feststellung einer Überhitzung einer Radbremse des Anhängers, eine Leckage in der Nutzfahrzeuganhänger-Druckluftanlage oder einem Vorratsbehälter, insbesondere für einen Betriebsbremskreis des Anhängers oder die Feststellung eines Defekts eines Bauelements (wie eines Ventils) der Nutzfahrzeuganhänger-Druckluftanlage u. ä.

Möglich ist auch, dass ein Notbremskriterium von einem Kollisionsüberwachungssystem des Zugfahrzeugs bereitgestellt wird, wobei eine Notbremsung dann ausgelöst werden soll, wenn die Gefahr einer Kollision besteht.

Für diese Variante der Erfindung führt die Steuerlogik bei Vorliegen des Notbremskriteriums eine Notbremsfunktion aus, indem der zweite Aktuator so betätigt wird, dass das Parkventil von der Lösestellung in die Parkstellung überführt wird oder das Parkventil in der Parkstellung gehalten wird. Somit kann im Fahrbetrieb des Anhängers über die Überführung des Parkventils in die Parkstellung eine Notbremsung des Anhängers herbeigeführt werden, indem die Federspeicherkammern entlüftet werden und die Feststellbremsen aktiviert werden.

c) Alternativ oder kumulativ kann zunächst mittels der Steuerlogik ein Vorliegen eines Notbremskriteriums geprüft werden, wie dies zuvor erläutert worden ist. Zusätzlich erfolgt durch die Steuerlogik auch die Prüfung des Vorliegens eines Drucks in einem Vorratsbehälter des Anhängers für eine Betriebsbremse oberhalb eines Schwellwerts.

Liegt der Druck in dem Vorratsbehälter oberhalb des Schwellwerts, gewährleistet dieser Druck, dass noch eine ordnungsgemäße Abbremsung des Anhängers über die Betriebsbremsen desselben möglich ist. Diese Abbremsung über die Betriebsbremse hat den Vorteil, dass abgestufte Betriebsbremsung (also keine Vollbremsung) und/oder eine Druckmodulation der Betätigung der Betriebsbremse zwecks Optimierung oder Gewährleistung der Traktion möglich ist, was für einige Ausführungsformen bei einer Notbremsung über die Federspeicherbremsen nicht gewährleistet ist. Liegt der Druck in dem Vorratsbehälter oberhalb des Schwellwerts, kann eine Betriebsbremsung als Notbremsung über die Betriebsbremse ausgesteuert werden oder es erfolgt keine Notbremsung und es ist weiterhin gewährleistet, dass eine Betätigung der Betriebsbremsen des Anhängers von dem Zugfahrzeug (hier in Abhängigkeit von einer Betätigung des Bremspedals durch den Fahrer oder in Abhängigkeit eines Bremssignals durch ein autonomes Fahrsystem) erfolgt. Liegt sowohl das Notbremskriterium vor als auch der Druck oberhalb des Schwellwerts, führt die Steuerlogik der Steuereinheit eine Notbremsfunktion-Overridefunktion durch. Diese Notbremsfunktion-Overridefunktion kann dadurch herbeigeführt werden, dass der zweite Aktuator nicht so betätigt wird, dass das Parkventil von der Lösestellung in die Parkstellung überführt wird oder das Parkventil in der Parkstellung gehalten wird. Vielmehr erfolgt dies erst dann, wenn der Druck (insbesondere durch mindestens eine erfolgte Betriebsbremsung des Anhängers) unterhalb des Schwellwerts gesunken ist. Möglich ist aber im Rahmen der Erfindung auch, dass zwar grundsätzlich für das Vorliegen sowohl des Notbremskriteriums als auch des Druck oberhalb des Schwellwerts der zweite Aktuator zur Ausführung der Notbremsfunktion betätigt wird. In diesem Fall wird dann aber auch der erste Aktuator betätigt. Die Betätigung des ersten Aktuators ist gegenüber der Auslösung der Notbremsfunktion durch den zweiten Aktuator priorisiert derart, dass die Betätigung des ersten Aktuators dazu führt, dass das Parkventil (trotz der Betätigung des zweiten Aktuators) von der Parkstellung in die Lösestellung überführt wird oder in der Lösestellung gehalten wird.

d) Alternativ oder kumulativ möglich ist, dass die Steuerlogik der Steuereinheit das Vorliegen einer Parksituation prüft.

Die Prüfung des Vorliegens einer Parksituation kann beispielsweise darauf basieren, dass detektiert wird, dass der Anhänger von dem Zugfahrzeug abgekuppelt wird oder worden ist, was beispielsweise erkannt werden kann dadurch, dass der Kupplungskopf Vorrat gelöst wird und somit in einer Versorgungsleitung des Anhängers kein Druck mehr ansteht, was durch einen Drucksensor erfasst werden kann. Alternativ oder kumulativ möglich ist, dass das Abkuppeln des Anhängers erfasst wird durch einen mechanischen Kopplungssensor zwischen Zugfahrzeug und Anhänger. Des Weiteren möglich ist, dass das Abkuppeln dadurch erkannt wird, dass eine Relativbewegung zwischen Zugfahrzeug und Anhänger erkannt wird. Alternativ oder kumulativ kann die Parksituation erkannt werden durch Erfassung der Betätigung einer Parkbremse des Zugfahrzeugs, durch eine Detektierung, dass der Fahrer die Fahrerkabine verlässt u. ä. Beispielsweise kann das Verlassen der Fahrerkabine erkannt werden durch einen Sitzbelegungssensor für den Fahrersitz, einen Türsensor, der das Öffnen der Fahrertür detektiert u. ä. Des Weiteren kann das Vorliegen einer Parksituation erkannt werden aus Betriebsgrößen des Zugfahrzeugs wie beispielsweise die Deaktivierung der Zündung des Zugfahrzeugs. Möglich ist des Weiteren, dass das Vorliegen einer Parksituation erkannt wird anhand von Betriebsgrößen des Zugfahrzeugs oder des Anhängers wie beispielsweise anhand der manuellen Betätigung eines Hebe-Senk-Ventils zwecks Veränderung des Niveaus des Fahrzeugaufbaus, beispielsweise für eine Anpassung des Niveaus an eine Rampe. Es sind aber auch vielfältige andere Kriterien für die Prüfung des Vorliegens einer Parksituation im Rahmen der vorliegenden Erfindung möglich.

Ist von der Steuerlogik das Vorliegen einer Parksituation erkannt, betätigt die Steuerlogik den zweiten Aktuator so, dass eine Parksicherheitsfunktion ausgeführt wird, indem das Parkventil von der Lösestellung in die Parkstellung überführt wird und/oder das Parkventil in der Parkstellung gehalten wird. Hierdurch kann einerseits eine (Teil-)Automatisierung erfolgen, indem zumindest in einigen Betriebssituationen die manuelle Betätigung des Parkventils durch den Fahrer entbehrlich gemacht wird. Andererseits kann die Parksicherheitsfunktion zur Erhöhung der Sicherheit führen, da eine Betätigung der Parkbremse auch gewährleistet ist, wenn der Fahrer vergisst, das Parkventil manuell in die Parkstellung zu überführen.

Der erste und zweite Aktuator können auf demselben oder unterschiedlichen Konstruktionsprinzipien beruhen. Hierbei können die Aktuatoren direkt oder indirekt, insbesondere unter Zwischenschaltung einer Antriebsverbindung oder getrieblichen Verbindung, auf ein Ventilelement des Parkventils wie einen Ventilschieber oder eine Schaltwelle einwirken.

Möglich ist, dass die Aktuatoren einen das Parkventil beeinflussenden Betriebszustand sowie einen das Parkventil nicht beeinflussenden Betriebszustand aufweisen, wobei es sich bei dem beeinflussenden Betriebszustand um den elektrisch betätigten Betriebszustand des Aktuators handeln kann oder um den nicht elektrisch betätigten Betriebszustand des Aktuators. In der nicht beeinflussenden Betriebsstellung des Aktuators übt der Aktuator keine Beeinflussungskraft auf das Parkventil, hier insbesondere das Ventilelement aus, so dass dieses beispielsweise manuell oder durch den anderen Aktuator bewegt werden kann. Hingegen führt der Aktuator in dem beeinflussenden Betriebszustand mit einer von diesem erzeugten Beeinflussungskraft die Überführung in die jeweilige Stellung (nämlich für den ersten Aktuator die Überführung des Parkventils von der Parkstellung in die Lösestellung und für den zweiten Aktuator die Überführung des Parkventils von der Lösestellung in die Parkstellung) aus.

Die Aktuatoren können rein elektrische Aktuatoren sein, insbesondere in Form eines Elektromagneten, der insbesondere über einen Anker direkt oder indirekt das Ventilelement des Parkventils mit der Beeinflussungskraft beaufschlagt. Ebenfalls möglich ist, dass die Aktuatoren elektropneumatisch ausgebildet sind mit einem elektropneumatischen Vorsteuerventil, bei dem ein Magnetventil entsprechend der elektrischen Betätigung einen Vorsteuerdruck steuert. Dieser Vorsteuerdruck wird dann einem pneumatischen Steueranschluss oder einem Kolben zugeführt, der dann die Beeinflussungskraft erzeugt, die auf das Ventilelement des Parkventils wirkt.

Für einen weiteren Vorschlag der Erfindung verfügt die Drucklufteinrichtung über eine Ventileinrichtung, die als Baueinheit ausgebildet ist. In diese Ventileinrichtung können dann alternativ oder kumulativ (in beliebiger Kombination und Anzahl der genannten Bauelemente) die folgenden Bauelemente integriert sein:
a) Möglich ist, dass in die Baueinheit das zuvor erläuterte Parkventil integriert ist.
b) Möglich ist, dass die Baueinheit ein Rangierventil aufweist. Hierbei handelt es sich vorzugsweise um ein manuell betätigbares Rangierventil, welches beispielsweise als 3/2-Wege-Ventil ohne elektrische Ansteuerung ausgebildet sein kann. Das Rangierventil kann einen Versorgungsanschluss, einen Ausgangsanschluss und einen Behälteranschluss aufweisen. Bei Druckbeaufschlagung des Versorgungsanschlusses nimmt das Rangierventil automatisch eine Fahrtstellung ein. In der Fahrtstellung ist der Ausgangsanschluss des Rangierventils mit dem Versorgungsanschluss des Rangierventils verbunden, während der Behälteranschluss abgesperrt ist. Ist hingegen der Versorgungsanschluss drucklos, was insbesondere der Fall ist, wenn der Anhänger von dem Zugfahrzeug abgekuppelt ist, kann das Rangierventil manuell in eine Rangierstellung, die auch als Lösestellung bezeichnet werden kann, überführt werden. In der Rangierstellung ist der Ausgangsanschluss des Rangierventils mit dem Behälteranschluss verbunden. Der Druck an dem Behälteranschluss (und damit an dem angeschlossenen Vorratsbehälter) ersetzt somit für abgekuppeltem Anhänger den Vorratsdruck des Zugfahrzeugs für angekuppelten Anhänger, so dass "simuliert" wird, dass das Zugfahrzeug angekuppelt ist und ein Rangieren des Anhängers ohne das Zugfahrzeug möglich ist.
c) Möglich ist, dass die Baueinheit eine Hebe-Senk-Ventileinrichtung aufweist, über die der Fahrer bei abgestelltem Anhänger ein manuelles Heben und/oder Senken des Fahrzeugaufbaus herbeiführen kann. Vorzugsweise verfügt die Hebe-Senk-Ventileinrichtung auch über eine sogenannte Reset-to-Ride-Funktion (vgl. insbesondere EP 0 520 148 B1), deren elektrische Auslösung auch von der genannten Steuereinheit gewährleistet werden kann.
d) Alternativ oder kumulativ möglich ist, dass die Baueinheit eine Niveauregelventileinrichtung aufweist, bei der es sich um ein mechanisches Niveauregelventil handeln kann. Vorzugsweise handelt es sich aber um eine elektronische Niveauregelventileinrichtung, welche auf Grundlage mindestens eines elektrischen Niveausignals eines Fahrzeugrads, einer Achse oder des Fahrzeugaufbaus des Anhängers Niveauregelventile zum Be- und Entlüften von Luftfederbälgen, die dem Fahrzeugrad oder der Fahrzeugachse zugeordnet sind, steuert. Möglich ist alternativ oder kumulativ auch, dass mittels der elektronisch gesteuerten Niveauregelventileinrichtung ein manuell ausgelöstes und elektropneumatisch durchgeführtes Heben und Senken des Fahrzeugaufbaus durch Betätigung von entsprechenden elektrischen Schaltern oder Bedienelementen durch den Fahrer ermöglicht wird. Auch möglich ist, dass mittels der elektronisch gesteuerten Niveauregelventileinrichtung eine dynamische automatische Niveauregelung während des Fahrbetriebs erfolgt, um eine Steuerung oder Regelung hinsichtlich eines Wankens, Nickens oder Gierens während der Fahrt zu gewährleisten. Möglich ist auch, dass über die elektrisch gesteuerte Niveauregelventileinrichtung unterschiedliche Fahrniveaus, beispielsweise je nach Geschwindigkeit, gewährleistet werden können.
e) Alternativ oder kumulativ kann die Baueinheit eine Liftachsventileinrichtung aufweisen, bei der beispielsweise beladungsabhängig die Aktivierung und Deaktivierung einer Liftachse gesteuert wird durch Be- und Entlüftung einerseits eines Tragbalgs und umgekehrte Be- oder Entlüftung eines Liftbalgs.
f) Alternativ oder kumulativ kann die Baueinheit einen Drucksensor aufweisen. Dieser Drucksensor kann beispielsweise einen Druck an dem Versorgungsanschluss erfassen oder einen Druck erfassen, der einen Kolben einer Park-Sicherheitseinrichtung oder einer Notbremseinrichtung beaufschlagt. Möglich ist bspw. auch, dass der Drucksensor einen Druck an dem Parkbremsanschluss des Parkventils erfasst.
g) Alternativ oder kumulativ kann ein Überströmventil in der Baueinheit angeordnet sein. Beispielsweise kann in der Baueinheit auch eine Zweigleitung zu einem weiteren Verbraucherkreis vorhanden sein, für den die Drucklufteinrichtung (zusätzlich zu der Ansteuerung der Federspeicherbremsen und ggf. auch der Betriebsbremsen) zuständig sein kann. Beispielsweise kann ein derartiger Zweigleitung zu einem Luftfederkreis führen. In diesem Fall kann das Überströmventil zwischen die unterschiedlichen Verbraucherkreise zwischengeschaltet sein und in die vorgenannte Zweigleitung integriert sein, um einerseits eine Querströmung zwischen den unterschiedlichen Verbraucherkreisen zu ermöglichen und andererseits eine die Betriebssicherheit gewährleistende Drucksicherung zu gewährleisten.

Für eine Variante der Erfindung ist die elektronische Steuereinheit, die die Steuerlogik für die Durchführung der Immobilisierfunktion, der Notbremsfunktion, der Notbremsfunktion-Override-funktion und/oder der Parksicherheitsfunktion aufweist, Teil der Ventileinrichtung und damit Teil der von der Ventileinrichtung ausgebildeten Baueinheit. Diese elektronische Steuereinheit kann dann (drahtgebunden oder drahtlos über eine Sende- und/oder Empfangseinrichtung) mit weiteren Steuereinheiten des Anhängers, insbesondere einer EBS-Steuereinheit und/oder Steuereinheiten des Zugfahrzeugs, kommunizieren.

Für eine andere Variante der Erfindung ist die die vorgenannte Steuerlogik aufweisende Steuereinheit als EBS-Steuereinheit ausgebildet. In diesem Fall verfügt das Parkventil oder verfügt die Ventileinrichtung über einen elektrischen Steueranschluss. Dieser elektrische Steueranschluss ist dann über eine Steuerleitung mit einem entsprechenden Steueranschluss der EBS-Steuereinheit verbunden. Über diese Steuerleitung und den elektrischen Steueranschluss des Parkventils oder der Ventileinrichtung kann dann die EBS-Steuereinheit den ersten Aktuator und/oder den zweiten Aktuator steuern. Die EBS-Steuereinheit ist damit multifunktional ausgebildet, da diese einerseits für die Aussteuerung des Betriebsbremsdrucks für die Betriebsbremsen, unter Umständen mit einer Modulation, und andererseits für die Ansteuerung des Parkventils, hier der Aktuatoren, zuständig ist.

Die Erfindung umfasst Drucklufteinrichtungen, bei denen ein Kupplungskopf Bremse über die vorgenannte, als Baueinheit ausgebildete Ventileinrichtung mit der EBS-Steuereinheit verbunden ist. Hierbei kann eine Beeinflussung des Bremssteuerdrucks, der über den Kupplungskopf Bremse übertragen wird, durch die Ventileinrichtung erfolgen oder die Ventileinrichtung leitet diesen Bremssteuerdruck lediglich durch. Möglich ist aber auch, dass die Ventileinrichtung ein Anhängerbremsventil aufweist, das in einer Notbremssituation, insbesondere bei einem Einbruch des Drucks an dem Kupplungskopf Vorrat, einen Bremssteuerdruck erzeugt, auch wenn kein Bremssteuerdruck über den Kupplungskopf Bremse übertragen wird, wobei dieser von dem Anhängerbremsventil erzeugte Bremssteuerdruck dann an den entsprechenden Bremssteueranschluss der EBS-Steuereinheit übertragen wird, so dass die EBS-Steuereinheit eine Notbremsung über die Betriebsbremsen herbeiführen kann.

Für eine andere Variante der Erfindung ist die EBS-Steuereinheit unter Umgehung der Ventileinrichtung mit dem Kupplungskopf Bremse verbunden, so dass der von dem Zugfahrzeug an den Anhänger übertragene Bremssteuerdruck unmittelbar an den Bremssteuereingang der EBS-Steuereinheit übertragen wird. In diesem Fall ist die EBS-Steuereinheit mit dem Parkbremsanschluss des Parkventils verbunden, so dass der von dem Parkventil ausgesteuerte Druck an die EBS-Steuereinheit übertragen wird und die EBS-Steuereinheit entsprechend die Federspeicherkammern der Federspeicherbremsen des Anhängers beaufschlagen kann.

Durch die direkte Verbindung zwischen dem Kupplungskopf Bremse und der EBS-Steuereinheit kann eine einfache Leitungsverbindung genutzt werden, wobei auf zwischengeschaltete pneumatische Ventilelemente, Drosseln u. ä. verzichtet werden kann. Auf diese Weise kann beispielsweise ein unmittelbares und unverfälschtes Ansprechen der Betriebsbremsen auf den mittels des Kupplungskopfs Bremse vorgegebenen Bremssteuerdruck gewährleistet werden, da etwaige in eine Bremssteuerleitung integrierte pneumatisch Elemente, wie auch eine integrierte Ventileinrichtung zu einer Verfälschung des Bremssteuerdrucks führen könnten. Auch eine etwaige Drosselwirkung zwischengeschalteter pneumatischer Elemente im Bereich von Engstellen, Übertrittsquerschnitten oder Ventilquerschnitten der Ventileinrichtung könnte zu einer Verzögerung eines Aufbaus oder eines Abbaus des Bremssteuerdrucks an dem Bremssteuereingang der EBS-Steuereinheit führen. Derartige Verzögerungen führen zu einer unzureichenden Dynamik bei der Betätigung der Betriebsbremsen.

Ein weiterer Vorschlag der Erfindung betrifft eine besondere Ausgestaltung eines Aktuators, hier des zweiten Aktuators. Für diesen Vorschlag weist der zweite Aktuator eine Druckkammer auf. Die Druckkammer ist mit dem Druck an dem Versorgungsanschluss des Parkventils beaufschlagt. Die Druckkammer ist durch einen Kolben begrenzt, auf den somit der Druck an dem Versorgungsanschluss einwirkt. Der Kolben ist von einer Feder beaufschlagt, so dass diese ohne Druck an dem Versorgungsanschluss infolge der Wirkung der Feder eine erste Betriebsstellung einnimmt, während die Druckbeaufschlagung der Druckkammer zu der zweiten Betriebsstellung führt. Der Kolben ist mit einem Stößel gekoppelt. Der Stößel bildet für eine Überführung des Parkventils von der Lösestellung in die Parkstellung eine mechanische Antriebsverbindung mit einem Ventilelement des Parkventils aus. Im einfachsten Fall kommt der Stößel mit einer Stirnseite oder Betätigungsfläche zur Anlage an die Schaltwelle oder den Ventilschieber. Möglich ist dabei, dass die Ausbildung dieses Kontakts und damit die Überführung von der Lösestellung in die Parkstellung mit der Druckbeaufschlagung der Druckkammer erfolgt. Vorzugsweise erfolgt diese Ausbildung des Kontakts und die Überführung des Parkventils von der Lösestellung in die Parkstellung aber für die Druckentlastung der Druckkammer, so dass die Beeinflussungskraft erzeugt wird durch die Feder, während diese Beeinflussungskraft mit der Druckbeaufschlagung der Druckkammer beseitigt werden kann. Im Rahmen der Erfindung kann somit der Stößel lose mit dem Ventilelement gekoppelt sein. In der beeinflussenden Betriebsstellung des Parkventils ist somit die mechanische Antriebsverbindung geschaffen und mit der Beeinflussungskraft beaufschlagt, während in der nicht beeinflussenden Betriebsstellung der Stößel beabstandet von dem Ventilelement angeordnet sein kann oder lediglich lose an diesem anliegen kann, womit auch möglich ist, dass das Ventilelement manuell frei zwischen der Parkstellung und der Lösestellung bewegt wird. Möglich ist auch, dass der Stößel und das Ventilelement über ein Spiel, ein Langloch u. ä. miteinander gekoppelt sind, so dass ein begrenzter Freiheitsgrad zwischen dem Stößel und dem Ventilelement vorhanden ist. Die mechanische Antriebsverbindung für die Überführung des Parkventils von der Lösestellung in die Parkstellung ist dann gewährleistet durch die Begrenzung des Freiheitsgrads zwischen dem Stößel und dem Ventilelement.

Grundsätzlich möglich ist, dass die Druckkammer permanent mit dem Versorgungsanschluss verbunden ist oder dies nur in ausgewählten Betriebssituationen der Fall ist, so dass zwischen der Druckkammer und dem Versorgungsanschluss auch mindestens ein weiteres Ventilelement angeordnet sein kann. Für einen Vorschlag der Erfindung ist die Druckkammer über ein elektrisches Notbremsfunktion-Overrideventil mit dem Versorgungsanschluss verbunden.

Während bei permanenter Verbindung der Druckkammer mit dem Versorgungsanschluss der Druckabfall an dem Versorgungsanschluss zwingend den Druckabfall in der Druckkammer und damit die Überführung des Parkventils von der Lösestellung in die Parkstellung zur Folge hätte, kann die hierdurch ausgelöste Notbremsfunktion von der Betriebsstellung des elektrischen Notbremsfunktion-Overrideventils abhängig gemacht werden: Bei einem Abfall des Drucks an dem Versorgungsanschluss wird die Notbremsfunktion-Overridefunktion ausgeführt, indem das Notbremsfunktion-Overrideventil die Druckkammer mit einem Vorratsbehälter verbindet. Der Druck in dem Vorratsbehälter unterbindet somit die Durchführung der Notbremsfunktion. Wird dann detektiert, dass der Druck in dem Vorratsbehälter ebenfalls abfällt, insbesondere unter einen Schwellwert, für den die Betriebsbremsung unter Nutzung des Vorratsbehälters nicht mehr möglich ist, kann das Notbremsfunktion-Overrideventil so umgeschaltet werden, dass dann die Notbremsfunktion ausgeführt wird.

Für eine alternative Ausgestaltung der Erfindung verfügt das Parkventil über einen Steueranschluss. Ein elektrisches Notbremsfunktion-Overrideventil verbindet in einer Overridestellung den Steueranschluss des Parkventils mit einem Vorratsbehälter, insbesondere dem Vorratsbehälter für den Betriebsbremskreis. Die Druckbeaufschlagung des Steueranschlusses mit dem Druck in dem Vorratsbehälter überführt das Parkventil in die Lösestellung (insbesondere wenn das Parkventil kurz zuvor mit der Notbremsfunktion in die Parkstellung überführt worden war) oder hält das Parkventil in der Lösestellung, ohne dass das Parkventil durch die Notbremsfunktion in die Parkstellung überführt werden kann. Somit kann zunächst weiterhin eine Abbremsung des Nutzfahrzeugs (mit oder ohne Notbremsfunktion) über die Betriebsbremse erfolgen, während dann später eine Notbremsfunktion über die Federspeicherbremse herbeigeführt werden kann, wenn der Druck in dem Vorratsbehälter gesunken ist.

Für eine Ausführungsform der erfindungsgemäßen Drucklufteinrichtung weist der zweite Aktuator ein Immobilisierventil auf. Das Immobilisierventil kann dabei dem Parkventil vorgeordnet oder nachgeordnet sein. Das Immobilisierventil weist zwei Betriebsstellungen auf, nämlich eine Immobilisier-Betriebsstellung und eine Mobilisier-Betriebsstellung. In der Immobilisier-Betriebsstellung ist eine Strömung von dem Parkventil zu der EBS-Steuereinheit nicht möglich, aber eine Strömung von der EBS-Steuereinheit zu dem Parkventil möglich. Dies bedeutet, dass eine Belüftung des zugeordneten Parkbremsanschlusses der EBS-Steuereinheit über das Parkventil nicht möglich ist. Somit kann beispielsweise ohne ordnungsgemäße Berechtigung keine Belüftung des Parkbremsanschlusses der EBS-Steuereinheit und damit kein Lösen der Parkbremse erfolgen. Hingegen kann in der Immobiliser-Betriebsstellung durch eine Strömung von der EBS-Steuereinheit zu dem Parkventil eine Entlüftung der Parkbremse erfolgen, so dass eine Betätigung der Federspeicherbremsen durch deren Entlüftung nicht unterbunden ist. Nimmt hingegen das Immobilisierventil die Mobilisier-Betriebsstellung ein, sind sowohl eine Strömung von dem Parkventil zu der EBS-Steuereinheit als auch eine Strömung von der EBS-Steuereinheit zu dem Parkventil möglich. Somit beeinflusst das Immobilisierventil in der Mobilisier-Betriebsstellung die weiteren Funktionen nicht. Im einfachsten Fall wird in der Mobilisier-Betriebsstellung lediglich die Strömung zwischen dem Parkventil und der EBS-Steuereinheit in beide Richtungen durchgeleitet.

Das Immobilisierventil kann beliebige Schaltstellungen und eine beliebige Schaltlogik aufweisen, wobei auch möglich ist, dass das Immobilisierventil durch pneumatische Beaufschlagung über ein weiteres Steuerventil oder elektrische Bestromung in der Mobilisier-Betriebsstellung gehalten werden muss, damit dieses nicht von selber in die Immobilisier-Betriebsstellung zurückkehrt. Für einen Vorschlag der Erfindung nimmt das Immobilisierventil die Mobilisier-Betriebsstellung ein (oder hält diese aufrecht), wenn der Druck in der zu der EBS-Steuereinheit führenden Parkbremsleitung einen Schwellwert überschreitet. Für diese Ausführungsform muss lediglich gewährleistet werden, dass das Immobilisierventil die Mobilisier-Betriebsstellung für eine gewisse Zeitspanne einnimmt, damit der Druck in der Parkbremsleitung ansteigt. Ist dieser Anstieg soweit erfolgt, dass der Schwellwert überschritten ist, hält dieser Druck das Immobilisierventil automatisch in der Mobilisier-Betriebsstellung, so dass keine weiteren Steuerungsmaßnahmen erforderlich sind, um eine unerwünschte Rückkehr des Immobilisierventils in die Immobilisier-Betriebsstellung zu vermeiden.

Durchaus möglich ist im Rahmen der Erfindung, dass das Immobilisierventil unmittelbar elektrisch gesteuert ist und somit als Magnetventil ausgebildet ist. Für einen anderen Vorschlag ist das Immobilisierventil durch ein Vorsteuerventil elektropneumatisch vorgesteuert. Hierbei ist für eine besonderen Vorschlag das Vorsteuerventil als Notbremsfunktion-Overrideventil ausgebildet. Somit kann in diesem Fall das Notbremsfunktion-Overrideventil multifunktional genutzt werden.

Für einen Vorschlag der Erfindung wird dies gewährleistet, in dem ein pneumatischer Steueranschluss des Immobilisierventils alternativ einerseits mit dem Vorsteuerventil oder dem Notbremsventil-Overrideventil und andererseits mit der Parkbremsleitung verbindbar ist. Dies kann beispielsweise erfolgen durch Einsatz eines Wechselventils, dessen Ausgang mit dem pneumatischen Steueranschluss des Immobilisierventils verbunden ist, während ein Eingang des Wechselventils mit der Parkbremsleitung und der andere Eingang des Wechselventils mit dem Vorsteuerventil oder dem Notbremsventil-Overrideventil verbunden ist. Möglich ist aber durchaus auch, dass die alternative Verbindung gewährleistet wird durch Einsatz eines Umschaltventils, welches einen mit dem pneumatischen Steueranschluss des Immobilisierventils verbundenen Ausgangsanschluss aufweist und zwei alternative Eingangsanschlüsse, von denen einer mit dem Vorsteuerventil oder Notbremsventil-Overrideventil und der andere mit der Parkbremsleitung verbunden ist.

Für die unterschiedlichen im Rahmen der Erfindung in die Ventileinrichtung integrierbaren Funktionen können einzelne elektrisch gesteuerte Ventile verwendet werden. Für einen besonderen Vorschlag der Erfindung ist das Notbremsfunktion-Overrideventil multifunktional ausgebildet. In diesem Fall steuert das Notbremsfunktion-Overrideventil sowohl die Notbremsventil-Overridefunktion als auch eine Reset-to-Ride-Funktion einer Hebe-Senk-Ventileinrichtung. Dieser Ausgestaltung liegt die Erkenntnis zugrunde, dass eine Wechselwirkung der Notbremsventil-Overridefunktion und der Reset-to-Ride-Funktion der Hebe-Senk-Ventileinrichtung nicht möglich ist, da die Reset-to-Ride-Funktion lediglich beim Losfahren des Fahrzeugs zu einer Beeinflussung führt, während die Notbremsventil-Overridefunktion lediglich bei fahrendem Fahrzeug ausgeführt wird. Somit kann unter Umständen derselbe Ausgangsdruck oder Druckimpuls des Notbremsfunktion-Overrideventils für die Auslösung und Bereitstellung sowohl der Notbremsventil-Overridefunktion als auch für die Reset-to-Ride-Funktion der Hebe-Senk-Ventileinrichtung genutzt werden.

Gemäß einem weiteren Vorschlag der Erfindung weist die Ventileinrichtung eine drahtlose Sende- und/oder Empfangseinrichtung auf, wobei es sich hierbei um eine unidirektionale Sende- oder Empfangseinrichtung handeln kann, mittels welcher die Ventileinrichtung ausschließlich Daten empfängt oder ausschließlich Daten versendet, oder die drahtlose Sende- und Empfangseinrichtung ist bidirektional ausgebildet, womit die Ventileinrichtung über die drahtlose Sende- und Empfangseinrichtung dann sowohl Daten empfangen als auch senden kann. Bei diesen Daten handelt es sich beispielsweise um Messdaten und/oder Steuervorgaben oder Steuersignale.

Möglich ist im Rahmen der Erfindung auch, dass in die Ventileinrichtung eine Eingabe- und/oder Ausgabeeinrichtung integriert ist.

Bei der Eingabe- und/oder Ausgabeeinrichtung kann es sich um ein Display, eine akustische Signaleinrichtung, einen Touchscreen, Schalter, eine Tastatur u. ä. handeln. Die Eingabe- und/oder Ausgabeeinrichtung dient bspw. der Kommunikation mit einem Benutzer in Form der Übermittlung von Betriebszuständen des Zugfahrzeugs, des Anhängers und/oder der Nutzfahrzeuganhänger-Druckluftanlage an den Benutzer und/oder zur Eingabe von Wünschen durch den Benutzer hinsichtlich einer Änderung des Betriebszustands derselben.

Eine Kommunikation einer elektronischen Steuereinheit der EBS-Steuereinheit oder der Ventileinrichtung mit einer anderen Steuereinheit und/oder Sensoren sowie der Eingabe- und/oder Ausgabeeinrichtung kann über übliche drahtgebundene oder drahtlose Verbindungen, Bussysteme, CAN, LIN oder eine Funkschnittstelle erfolgen.

Die Eingabe- und/oder Ausgabeeinrichtung ermöglicht insbesondere die folgenden Funktionen, Eingaben und/oder Ausgaben:
- Möglich ist, dass an der Ausgabeeinrichtung mindestens ein Status eines angeschlossenen Systems angezeigt wird. Beispielsweise kann ein Betriebszustand der EBS-Steuereinheit, ein Druck in mindestens einem Reifen, der mittels eines ReifendruckÜberwachungssystems übermittelt worden ist und/oder eine Ausgabe eines Telematik-Systems angezeigt werden. Ist der Anhänger mit einer Kühleinheit ausgestattet, kann über die Ausgabeeinrichtung eine Ausgabe der aktuellen Kühltemperatur der Kühleinheit erfolgen. Ausgegeben werden kann ein Betriebszustand eines CAN-Hubs und/oder eines CAN-Routers. Angezeigt werden kann der Betriebszustand einer Rückwärtsfahreinrichtung und entsprechenden Warneinrichtung und/oder ein Bild einer Rückfahrkamera. Es kann auch ein Betriebszustand der Rückfahrkamera angezeigt werden. Möglich ist, dass der Status eines Beleuchtungssystems ausgegeben wird.
- Möglich ist, dass eine Veränderung einer Betriebsgröße über die Eingabeeinrichtung möglich ist. So kann beispielsweise eine veränderte Temperatur der Kühleinheit vorgegeben werden oder eine veränderte Betriebsweise der EBS-Steuereinheit oder eines Reifendrucküberwachungssystems herbeigeführt werden.
- Möglich ist, dass über die Eingabe und/oder Ausgabeeinrichtung eine Diagnose der angeschlossenen Systeme, insbesondere der Ventileinrichtung erfolgt und/oder eine Ausgabe eines Ergebnisses der Diagnose der angeschlossenen Systeme, beispielsweise System X "vollfunktionsfähig", "eingeschränkt funktionsfähig" oder "nicht funktionsfähig", erfolgt.
- Möglich ist, dass über die Eingabe- und/oder Ausgabeeinrichtung ein Auslesen von Systemparametern ermöglicht wird, so dass die Ausgabeeinrichtung auch eine geeignete Schnittstelle für ein derartiges Auslesen aufweist.
- Möglich ist, dass die Eingabe- und/oder Ausgabeeinrichtung auch eine Schnittstelle für eine Durchführung eines Software-Updates aufweist.
- Möglich ist, dass über eine Eingabe- und/oder Ausgabeeinrichtung eine Ausgabe oder ein Wunsch nach einer Veränderung eines Werts eines angeschlossenen Systems erfolgen kann, beispielsweise ein Beladungszustand, ein Balgdruck, ein Reifendruck, eine Temperatur, eine Fahrzeugrahmenhöhe, eine Temperatur des Laderaums, eine Türverriegelung, eine Abstützung bei einem Semi-Trailer.
- Möglich ist, dass über die Eingabe- und/oder Ausgabeeinrichtung eine Eingabe einer Authentifizierung oder eines Passworts erfolgt. So kann beispielsweise über die Eingabe- und/oder Ausgabeeinrichtung die für die Immobilisiereinrichtung erforderliche Authentifizierung durch den Benutzer oder Fahrer erfolgen.
- Möglich ist, dass über die Eingabe- und/oder Ausgabeeinrichtung eine Eingabe von Systemparametern der angeschlossenen Systeme erfolgt.
- Möglich ist, dass über die Eingabe- und/oder Ausgabeeinrichtung eine Vorgabe von Funktionsanforderungen (beispielsweise Sollhöhen des Fahrzeugrahmens, ein manuelles Heben und/oder Senken des Fahrzeugrahmens beispielsweise an einer Rampe, die Anforderung eines Anhebens oder Absenkens einer Liftachse und/oder einer Sattelstütze, ein Verriegeln und/oder Entriegeln des Laderaums) vorgegeben werden können.
- Möglich ist, dass über die Eingabe- und/oder Ausgabeeinrichtung eine Aktivierung und/oder Deaktivierung eines Diebstahlschutzsystems oder Diebstahlwarnsystems erfolgt.
- Möglich ist, dass über die Eingabe- und/oder Ausgabeeinrichtung eine Ausführung von Reset-Funktionen ausgelöst werden kann.
- Möglich ist, dass über die Eingabe- und/oder Ausgabeeinrichtung ein Lösen oder Betätigen der Parkbremse vorgegeben werden kann, sofern entsprechende Parameter erfüllt sind wie beispielsweise das Ankuppeln des Anhängers an das Zugfahrzeug, dass ein Vorratsdruck vorhanden ist, der größer ist als ein Schwellwert, dass das System in Ordnung ist u. ä.
- Möglich ist, dass über die Eingabe- und/oder Ausgabeeinrichtung, ggf. mit einer zugeordneten Schnittstelle oder einer drahtlosen Sende- und/oder Empfangseinrichtung, eine Kommunikation mit einem Smartphone beispielsweise des Fahrers und beispielsweise via Bluetooths, WLAN oder Mobilfunk erfolgt.
- Entsprechend kann eine Kommunikation mit Servern, beispielsweise eines Logistikunternehmens, einer Werkstatt, eines Fahrzeugherstellers oder eines Systemherstellers, erfolgen.
- Möglich ist, dass mittels der Eingabe- und/oder Ausgabeeinrichtung eine Kommunikation mit Cloudservern erfolgt, welche beispielsweise zum Datenmanagement, für eine Datenspeicherung und -dokumentation und/oder eine Datenanalyse erfolgen kann.
- Möglich ist auch, dass die Eingabe- und/oder Ausgabeeinrichtung einer Kommunikation mit eine Telematik-System, insbesondere des Zugfahrzeugs, der Umgebung oder einem satellitengesteuerten Telematik-System, dient.

Eine Integration der Eingabe- und/oder Ausgabeeinrichtung in die Ventileinrichtung nutzt aus, dass diese Ventileinrichtung infolge der Aufnahme des manuell betätigten Parkventils und des manuell betätigten Rangierventils an einer Stelle des Anhängers angeordnet werden muss, an welcher die manuellen Betätigungselemente des Parkventils und des Rangierventils gut zugänglich sind für den Benutzer. Ist dann an dieser Stelle auch die Eingabe- und/oder Ausgabeeinrichtung angeordnet, kann der Benutzer hier (neben der Betätigung des Parkventils und des Rangierventils) auch die erforderlichen Eingaben vornehmen und dem Benutzer können Ausgaben, insbesondere Informationen, zur Kenntnis gebracht werden, insbesondere angezeigt werden. Die Ventileinrichtung stellt damit eine "zentrale Stelle" für die Wechselwirkung des Benutzers mit der Ventileinrichtung und damit mit der Nutzfahrzeuganhänger-Druckluftanlage zur Verfügung. Auch wenn eine Kommunikation der Eingabe- und/oder Ausgabeeinrichtung mit der drahtlosen Sende- und/oder Empfangseinrichtung erfolgt, hat es sich als vorteilhaft erwiesen, wenn diese Sende- und/oder Empfangseinrichtung an der Stelle des Parkventils und des Rangierventils angeordnet ist, die üblicherweise im lateralen Seitenbereich des Anhängers angeordnet sind. Hier ist die drahtlose Übertragung von und zu der Sende- und/oder Empfangseinrichtung nicht durch andere Bauelemente gestört, sondern diese kann im Bereich der Außenseite des Anhängers erfolgen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

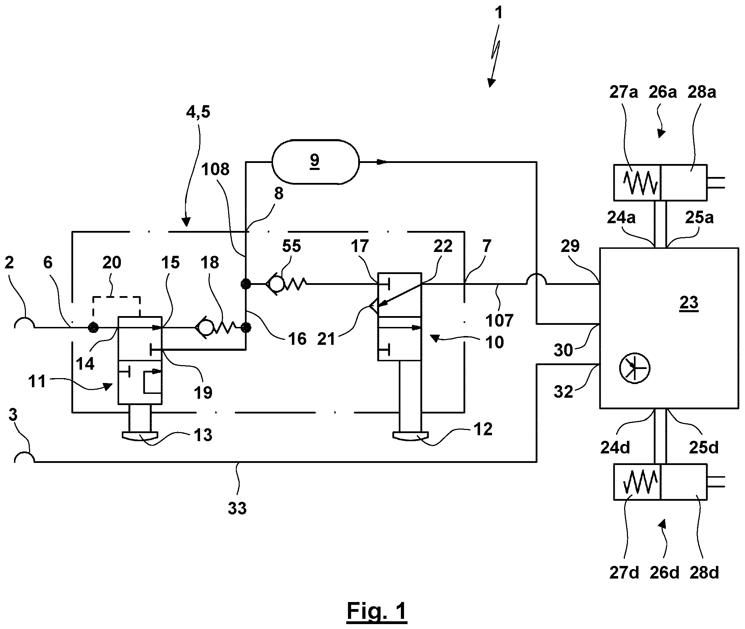

- **Fig. 1 bis** 20: zeigen schematisch unterschiedliche Ausgestaltungen von Nutzfahrzeuganhänger-Druckluftanlagen oder in einer Nutzfahrzeuganhänger-Druckluftanlage einsetzbaren Drucklufteinrichtungen, wobei die Nutzfahrzeuganhänger-Druckluftanlagen oder Drucklufteinrichtungen gemäß Fig. 1, 6, 7, 13 bis 18 und 20 nicht vom Wortlaut der Patentansprüche umfasst sind und somit nicht in den Geltungsbereich der Erfindung gemäß der beigefügten Patentansprüche fallen.

### FIGURENBESCHREIBUNG

In den Figuren werden teilweise für Komponenten, die sich hinsichtlich der Gestaltung und/oder Funktionen zumindest teilweise entsprechen, dieselben Bezugszeichen verwendet. Finden in derselben Zeichnung dieselben Komponenten mehrfach Einsatz, sind diese Komponenten mit denselben Bezugszeichen und einem ergänzenden, unterscheidenden Buchstaben a, b, ... gekennzeichnet. Auf diese Komponenten wird dann mit oder ohne den ergänzenden Buchstaben a, b, ... Bezug genommen, womit dann lediglich eine Komponente, ein Teil der Komponenten in beliebiger Anzahl oder sämtliche Komponenten gemeint sein können, die mit diesem Bezugszeichen gekennzeichnet sind.

In den Figuren sind Nutzfahrzeuganhänger-Druckluftanlagen mit unterschiedlicher Komplexität, unterschiedlichen Funktionsumfängen, unterschiedlichen Verbraucherkreisen, ein- und zweikreisiger Betriebsbremsanlage, mit und ohne Luftfederkreis und/oder Liftachse und zugeordneten Lift- und Tragbälgen dargestellt. Es kann und soll im Rahmen der vorliegenden Offenbarung eine Verknüpfung der einzelnen Komponenten und Funktionalitäten, wie diese in unterschiedlichen Figuren dargestellt sind, miteinander erfolgen, wobei aber auch möglich ist, dass einzelne Komponenten und/oder Funktionalitäten entfallen können.

**Fig.** 1 zeigt eine Nutzfahrzeuganhänger-Druckluftanlage 1 gemäß dem Stand der Technik. Hier erfolgt eine Beaufschlagung von Kombi-Bremszylindern 26 mit Federspeicherkammer 27 und Betriebsbremskammer 28 über einen zugeordneten Parkbremsanschluss 24 und einen Betriebsbremsanschluss 25 einer EBS-Steuereinheit 23. Die Nutzfahrzeuganhänger-Druckluftanlage 1 verfügt über eine als Baueinheit 5 ausgebildete Ventileinrichtung 4, in die ein Parkventil 10 und ein Rangierventil 11 integriert sind. Gemäß dem Stand der Technik ist die Ventileinrichtung 4 passiv ausgebildet, so dass die Betriebsstellungen des Parkventils 10 und des Rangierventils 11 ausschließlich von dem Druck in einer Steuerleitung 20 und der manuellen Betätigung von Betätigungsknöpfen 12, 13 des Parkventils 10 und des Rangierventils 11 abhängen. Ein Eingangs- oder Versorgungsanschluss 14 sowie die Steuerleitung 20 sind über einen Versorgungsanschluss 6 der Ventileinrichtung 4 mit einem Kopplungskopf Vorrat 2 verbunden. Der in der Fahrstellung des Rangierventils 11 mit dem Eingangs- oder Versorungsanschluss 14 verbundene Ausgangsanschluss 15 des Rangierventils 11 ist über eine Verbindungsleitung 16 mit einem Eingangsanschluss 17 des Parkventils 10 verbunden. In die Verbindungsleitung 16 sind Rückschlagventile 18, 55 integriert, die von dem Rangierventil 11 in Richtung des Parkventils 10 öffnen und in entgegengesetzte Richtung sperren. Zwischen den Rückschlagventilen 18, 55 zweigt eine Zweigleitung 108 ab, die über einen Behälteranschluss 8 der Ventileinrichtung 4 mit einem Vorratsbehälter 9 verbunden ist. Die Zweigleitung 108 ist auch mit einem Behälteranschluss 19 des Rangierventils 11 verbunden. In der in Fig. 1 nicht wirksamen Rangierstellung verbindet das Rangierventil 11 den Behälteranschluss 19 mit dem Ausgangsanschluss 15, während der Eingangs- oder Versorgungsanschluss 14 abgesperrt ist. In der in Fig. 1 wirksamen Parkstellung des Parkventils 10 sind ein Parkbremsanschluss 22 des Parkventils 10 und ein hiermit verbundener Parkbremsanschluss 7 der Ventileinrichtung 4 mit einem Entlüftungsanschluss 21 verbunden, während der Eingangsanschluss 17 abgesperrt ist. Hingegen ist in der in Fig. 1 nicht wirksamen Lösestellung des Parkventils 10 der Eingangsanschluss 17 mit dem Parkbremsanschluss 22 verbunden. Der Parkbremsanschluss 7 der Ventileinrichtung 4 ist über eine Parkbremsleitung 107 mit einem Parkbremsanschluss 29 der EBS-Steuereinheit 23 verbunden. Ein Behälteranschluss 30 der EBS-Steuereinheit 23 ist mit dem Vorratsbehälter 9 verbunden. Ein Bremssteueranschluss 32 der EBS-Steuereinheit 23 ist über eine Bremssteuerleitung 33 mit einem Kupplungskopf Bremse 3 verbunden.

Die Nutzfahrzeuganhänger-Druckluftanlage 1 gemäß Fig. 1 ermöglicht die folgenden Betriebszustände:
Erfolgt ein Anschluss der Kupplungsköpfe 2, 3 an entsprechende Kupplungsköpfe eines Zugfahrzeugs und erfolgt über den Kupplungskopf Vorrat 2 eine Bereitstellung eines Vorratsdrucks, führt die Druckbeaufschlagung der Steuerleitung 20 zur Umschaltung des Rangierventils 11 in die in Fig. 1 wirksame Fahrstellung. Druckluft gelangt von dem Kupplungskopf Vorrat 2 über das Rückschlagventil 18 zu dem Vorratsbehälter 9, welcher somit befüllt werden kann. Befindet sich gemäß Fig. 1 das Parkventil 10 noch in der Parkstellung, sind über das Parkventil 10 die Parkbremsanschlüsse 22, 7, 29 entlüftet, was zur Folge hat, dass die Federspeicherkammern 27 entlüftet sind und die Park- oder Federspeicherbremsen aktiviert sind. Durch manuelle Umschaltung des Parkventils 10 wird die Lösestellung des Parkventils 10 herbeigeführt. Bei hinreichendem Druck in dem Vorratsbehälter 9 erfolgt die Druckbeaufschlagung der Parkbremsanschlüsse 22, 7, 29, die zur Folge hat, dass die EBS-Steuereinheit 23 die Federspeicherkammern 27 belüftet, womit die Federspeicherbremsen gelöst werden. Das Fahrzeug ist somit fahrbereit.

Wird während des Fahrbetriebs an dem Zugfahrzeug, insbesondere über den Fahrer mittels des Bremspedals oder mittels eines autonomen Fahrsystems, ein Bremssteuerdruck erzeugt und an den Kupplungskopf Bremse 3 übertragen, gelangt dieser an den Bremssteueranschluss 32 der EBS-Steuereinheit 23, die dann eine entsprechende Druckbeaufschlagung der Betriebsbremskammern 28 herbeiführt. Hierbei kann zur Gewährleistung der Traktion eine Druckmodulation der Druckbeaufschlagung der Betriebskammern 28 durch die EBS-Steuereinheit 23 erfolgen, indem bei Erkennung eines Schlupfs an einem Fahrzeugrad der Druck in einer zugeordneten Betriebsbremskammer 28 so lange reduziert wird, bis die Traktion wiederhergestellt ist.

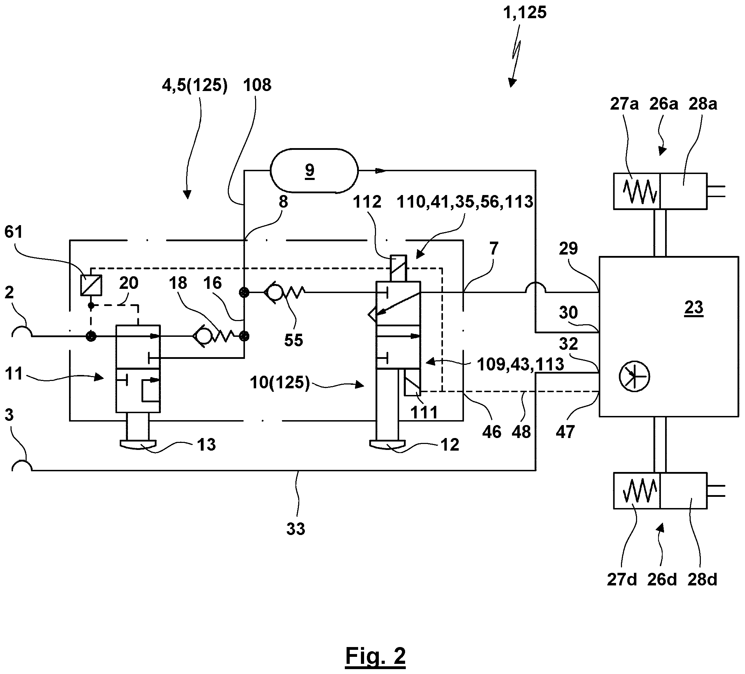

Für die im Folgenden angeführten Figuren gilt grundsätzlich das zu Fig. 1 Gesagte. Für das Ausführungsbeispiel gemäß **Fig. 2** ist aber die Ventileinrichtung 4 nicht passiv ausgebildet. Vielmehr verfügt die Ventileinrichtung 4 über einen ersten Aktuator 109, über den das Parkventil 10 elektronisch von der Lösestellung in die Parkstellung überführt werden kann, und über eine zweiten Aktuator 110, über den das Parkventil 10 elektronisch von der Parkstellung in die Lösestellung überführt werden. Für das in Fig. 2 dargestellte Ausführungsbeispiel sind die Aktuatoren 109, 110 jeweils als elektromagnetische Aktuatoren ausgebildet, welche entsprechend der elektrischen Bestromung zugeordneter Steueranschlüsse 111, 112 eine Magnetkraft erzeugen, die auf das Parkventil 10, hier ein Ventilelement des Parkventils 10 wie eine Schaltwelle oder ein Ventilschieber, so einwirken, dass die genannte Änderung der Betriebsstellung infolge der Magnetkraft herbeigeführt wird.

Während grundsätzlich (wie auch im Folgenden noch gezeigt wird) möglich ist, dass die elektronische Ansteuerung der Steueranschlüsse 111, 112 durch eine elektronische Steuereinheit erfolgt, die in die Ventileinrichtung 4 integriert ist, verfügt für das in Fig. 2 dargestellte Ausführungsbeispiel die Ventileinrichtung 4 über einen elektrischen Steueranschluss 46, über welchen mittels einer Steuerleitung 48 ein Steuersignal von einem Steueranschluss 47 der EBS-Steuereinheit 23 übertragen werden kann. Somit ist die EBS-Steuereinheit 23 für dieses Ausführungsbeispiel für die Ansteuerung des Parkventils 10 verantwortlich.

Optional kann in die Ventileinrichtung 4 ein Drucksensor 61 integriert sein, der hier den Druck in der Steuerleitung 20 und damit an dem Kupplungskopf Vorrat 2 erfasst. Das Messsignal des Drucksensors 21 kann über die Steuerleitung 48 an die EBS-Steuereinheit 23 übertragen werden, so dass es sich bei der Steuerleitung 48 auch um eine bidirektionale elektrische Leitung handeln kann, ein Datenbussystem u. ä.

Die elektronische Ansteuerung des Parkventils 10 kann alternativ oder kumulativ die folgenden Funktionen gewährleisten, wozu die zugeordnete elektronische Steuereinheit, hier die EBS-Steuereinheit 23, die entsprechende Steuerlogik aufweisen kann:
a) Möglich ist, dass mittels der Ansteuerung des Aktuators 110 eine Notbremseinrichtung 41 zwecks Gewährleistung einer Notbremsfunktion bereitgestellt ist. Wird eine Notbremssituation von der steuernden Steuereinheit erkannt, erfolgt durch Bestromung des Steueranschlusses 112 die Überführung des Parkventils 10 in die Parkstellung, womit dann auch im Fahrbetrieb des Anhängers die Federspeicherbremsen aktiviert werden können, womit eine Notbremsung herbeigeführt wird. Die Erkennung der Notbremssituation kann beispielsweise mittels einer Verkehrsüberwachung, eines Unfallvermeidungssystems oder bei Erkennung einer gesundheitsbedingten mangelnden Fahrtüchtigkeit des Fahrers erfolgen. Vorzugsweise erfolgt die Ausführung der Notbremsfunktion mittels der Bestromung des Steueranschlusses 112 ausschließlich oder auch dann, wenn erkannt wird, dass der Druck an dem Kupplungskopf Vorrat 2 abfällt. Dies kann insbesondere detektiert werden mittels des Drucksensors 61. Ein derartiger Druckabfall kann im Fahrbetrieb des Anhängers erfolgen, wenn sich im Bereich des Kupplungskopfs Vorrat 2 ein Abriss oder eine Leckage ergibt oder die Druckluftversorgung von dem Zugfahrzeug anderweitig einbricht.
b) Möglich ist, dass der Aktuator 110 eine Immobilisiereinrichtung 56 bildet. Diese Immobilisiereinrichtung 56 überführt das Parkventil 10 in die Parkstellung oder hält die Parkstellung desselben aufrecht, wenn keine hinreichende Authentifizierung dafür vorliegt, dass ein Fahrbetrieb des Anhängers zugelassen wird.

Eine derartige Authentifizierung kann beispielsweise darin bestehen, dass die steuernde Steuereinheit erkennt, dass die Kupplungsköpfe 2, 3 und unter Umständen auch ein elektrisches oder elektronisches Interface des Anhängers an entsprechende Kupplungsköpfe und ein Interface des Zugfahrzeugs angeschlossen sind, welches mit dem Anhänger betrieben werden darf, während für die Erkennung eines anderen Zugfahrzeugs keine Authentifizierung erfolgt. So können beispielsweise in der Steuereinheit die Zugfahrzeuge abgespeichert sein, die in einem Fuhrpark vorhanden sind und berechtigt sind, den Anhänger desselben Fuhrparks zu ziehen.

Des Weiteren möglich ist, dass die Immobilisiereinrichtung 56 in die Parkstellung überführt wird, wenn sich nicht der Fahrer des Zugfahrzeugs authentifiziert hat. Dies kann durch Eingabe eines Passworts oder anderweitigen Codes, beispielsweise in ein Smartphone oder eine Eingabeeinrichtung in der Fahrerkabine, erfolgen. Möglich ist auch, dass die Authentifizierung durch eine Abfrage einer vorgegebenen Betätigungsreihenfolge für Bedienelemente des Zugfahrzeugs wie Pedale, Schalter u. ä. erfolgt.

Alternativ oder kumulativ möglich ist, dass die Immobilisiereinrichtung 56 in die Parkstellung umgeschaltet wird, wenn über eine dann vorhandene Funkverbindung der steuernden Steuereinheit mitgeteilt wird, dass der Anhänger gestohlen worden ist oder unberechtigt bewegt worden ist, womit dann eine Wegfahrsperre bereitgestellt ist.
c) Möglich ist, dass die Betätigung des Aktuators 110 zwecks Bereitstellung einer Park-Sicherheitseinrichtung 35 betätigbar ist. Diese Park-Sicherheitseinrichtung 35, die bei der Anmelderin auch unter der Kennzeichnung "Safe Parking" vertrieben wird, gewährleistet, dass für den Fall, dass der Anhänger von dem Fahrer abgestellt wird, und der Fahrer vergisst, das Parkventil 10 manuell in die Parkstellung zu überführen, die Kupplungsköpfe 2, 3 des Anhängers von dem Zugfahrzeug abgekuppelt werden und der Anhänger somit ohne die Betätigung der Parkbremsen wegrollen könnte, automatisch eine Überführung des Parkventils 10 in die Parkstellung erfolgt. Eine Ansteuerung des Steueranschlusses 112 für die Gewährleistung der Park-Sicherheitseinrichtung 35 kann somit erfolgen, wenn erkannt wird, dass ein Abkoppeln des Zugfahrzeugs von dem Anhänger erfolgt. Dies kann durch einen mechanischen Kopplungssensor zwischen Zugfahrzeug und Anhänger, den Drucksensor 61, der die Entlüftung des Kupplungskopfs Vorrat 2 mit dem Abkoppeln erkennt oder auch durch Detektierung einer Vergrößerung der Entfernung zwischen dem Zugfahrzeug und dem Anhänger erkannt werden. Bei derartiger Erkennung steuert die EBS-Steuereinheit 23 den Aktuator 110 so an, dass die Parkstellung des Parkventils 10 herbeigeführt wird.
d) Möglich ist auch, dass der Aktuator 109 eine Notbremsfunktion-Overrideeinrichtung 43 bildet. Die Notbremsfunktion-Overrideeinrichtung 43 stellt eine Notbremsfunktion-Overridefunktion bereit. Würde ohne Bestromung des Steueranschlusses 111 des Aktuators 109 eine Notbremsfunktion durch Umschalten des Parkventils 10 in die Parkstellung erfolgen (insbesondere durch Betätigung der Notbremseinrichtung 41), kann durch Betätigung der Notbremsfunktion-Overrideeinrichtung 43 die Notbremsfunktion unterbunden werden, so dass bis auf Weiteres das Parkventil 10 in der Lösestellung verbleibt. Erkennt beispielsweise die Steuereinheit einen Abfall des Drucks an dem Kupplungskopf Vorrat 2 infolge eines Abrisses eines Kupplungkopfs oder einer Leckage, würde die unmittelbare Ausführung der Notbremsfunktion durch die Notbremseinrichtung 41 dazu führen, dass der Anhänger über die Feststellbremsen abgebremst würde, obwohl der Druck in dem Vorratsbehälter 9 gegenüber einem Druckabfall über den Kupplungskopf Vorrat 2 gesichert wäre und der Druck in dem Vorratsbehälter 9 noch abgestufte und modulierte Betriebsbremsungen über den Bremssteuerdruck an dem Kupplungskopf Bremse 3 über die EBS-Steuereinheit 23 und entsprechende Beaufschlagung der Betriebsbremskammern 28 ermöglichen würde. In diesem Fall unterbindet die Notbremsfunktion-Overrideeinrichtung 43 so lange die Notbremsfunktion, wie noch eine zuverlässige Abbremsung über die Betriebsbremsen gewährleistet ist. Die Notbremsfunktion wird dann beispielsweise lediglich erst dann zugelassen, indem die Betätigung der Notbremsfunktion-Overrideeinrichtung 43 beendet wird, wenn der Druck in dem Vorratsbehälter 9 einen Schwellwert unterschritten hat, wobei dieser Schwellwert vorzugsweise mit dem erforderlichen Druck für eine Betätigung der Betriebsbremsen zwecks Gewährleistung einer minimalen Betriebsbremskraft oder einer vorbestimmten Anzahl einer Abbremsung des Anhängers bis zum Stillstand entspricht.
e) Möglich ist des Weiteren, dass durch ein Zusammenspiel der Aktuatoren 109, 110 eine Herbeiführung einer Abbremsung des Anhängers über die Federspeicherbremsen erfolgt, bei welchen die Federspeicherkammern 27 nicht vollständig entlüftet werden, sondern eine abgestufte oder sogar modulierte Abbremsung über die Federspeicherbremsen möglich ist. Durch Hin- und Herschalten des Parkventils 10 kann in der Parkstellung eine Druckreduktion in den Federspeicherkammern 27 erfolgen, während durch Überführung des Parkventils 10 mittels der Aktuatoren 109, 110 in die Lösestellung eine Druckerhöhung erfolgen kann, indem die Federspeicherkammern 27 mit dem Vorratsbehälter 9 verbunden werden.

Um lediglich einige die Erfindung nicht beschränkende Beispiele zu nennen, kann auf diese Weise eine abgestufte Bremsung herbeigeführt werden, wenn erkannt wird, dass der Anhänger auf das Zugfahrzeug aufläuft. Dies kann beispielsweise anhand eines Kopplungskraftsensors zwischen dem Zugfahrzeug und dem Anhänger erkannt werden.

Möglich ist auch, dass auf diese Weise eine abgestufte Bremskraft über die Feststellbremsen herbeigeführt wird, welche einem Schleppmoment des Zugfahrzeugs entspricht. Bei diesem Schleppmoment handelt es sich um eine Bremskraft in dem Zugfahrzeug, die entsteht, ohne dass die Betriebsbremsen des Zugfahrzeugs betätigt werden. Beispielsweise kann diese Bremskraft auf der erforderlichen Beschleunigung einer trägen Masse des Antriebsstrangs bei einem Herunterschalten, Reibung im Antriebsstrang und insbesondere in dem Getriebe oder auf dem Schleppmoment infolge der Bewegung der Kolben der Brennkraftmaschine und einer etwaigen Verdichtung in den Zylindern der Bremskraftmaschine beruhen.

Möglich wäre auch, dass im Fall eines Defekts oder in ausgewählten Betriebssituationen eine Erfassung des Drucks an dem Kupplungskopf Bremse 3 erfolgt und anstelle der Aussteuerung eines Betriebsbremsdrucks für die Betriebsbremskammern 28 mittels der Ansteuerung der Aktuatoren 109, 110 ein abgestufter Bremsdruck für die Federspeicherkammern ausgesteuert wird, der eine Bremskraft über die Feststellbremsen erzeugt, die der Bremskraft entspricht, die sich aus dem Bremssteuerdruck an dem Kupplungskopf Vorrat 3 ergibt.

Mit dem Zusammenspiel der Aktuatoren 109, 110 zur Erzeugung eines abgestuften, konstanten veränderlichen oder modulierten Drucks für die Federspeicherkammern ist eine Bremsstufeinrichtung 113 gebildet.

Die vorgenannten Funktionen und die Park-Sicherheitseinrichtung 35, die Notbremseinrichtung 41, die Notbremsfunktion-Overrideeinrichtung 43, die Immobilisiereinrichtung 56 und/oder die Bremsstufeinrichtung 113 können mittels der Aktuatoren 109, 110 und der steuernden Steuerlogik der elektronischen Steuereinheit, hier der EBS-Steuereinheit 23 bereitgestellt werden. Hierbei umfasst eine Steuerung auch eine Regelung.

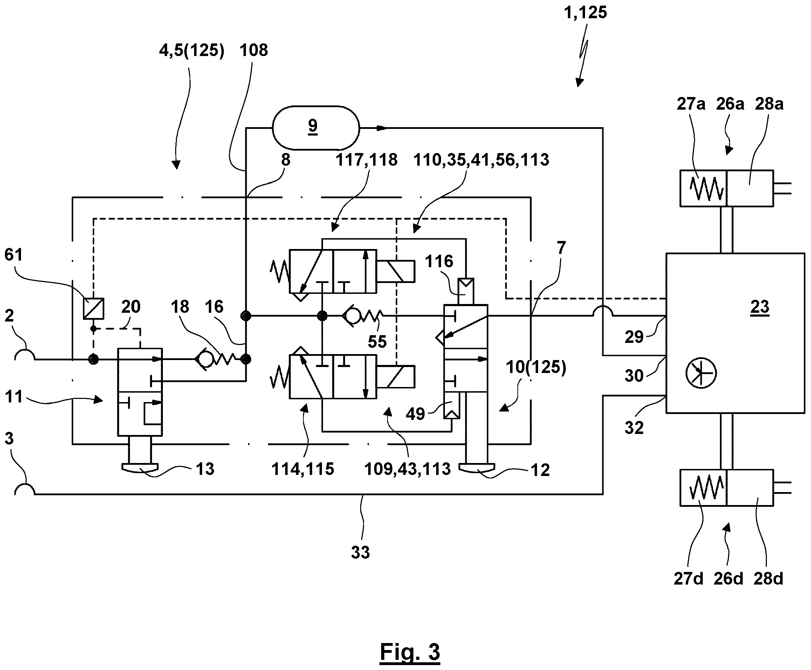

Während gemäß Fig. 2 die Aktuatoren 109, 110 direkt elektronisch gesteuert sind, zeigt **Fig. 3** eine Ausführungsform, in der Aktuatoren 109, 110 elektropneumatisch gesteuert sind. Der Aktuator 109 verfügt über ein Magnetventil 114, welches hier als 3/2-Wege-Magnetventil 115 ausgebildet ist und stromlos infolge der Beaufschlagung durch eine Feder seine Entlüftungsstellung einnimmt, während dieses mit einem elektrischen Steuersignal an dem Steueranschluss 111 in die Belüftungsstellung umgeschaltet werden kann. Über das Magnetventil 114 wird ein pneumatischer Steueranschluss 49 des Parkventils 10 angesteuert, dessen Druckbeaufschlagung zu einer Überführung des Parkventils 10 in die Lösestellung führt. In der Belüftungsstellung verbindet das Magnetventil 114 den Steueranschluss 49 mit dem Vorratsbehälter 9.

Entsprechend ist der Aktuator 110 mit einem Steueranschluss 116 des Parkventils 10, dessen Druckbeaufschlagung das Parkventil 10 in die Parkstellung überführt, und einem Magnetventil 117, hier ebenfalls in Ausgestaltung als 3/2-Wegemagnetventil 118, ausgebildet. Das Magnetventil 117 nimmt ohne Bestromung infolge der Wirkung einer Feder seine Entlüftungsstellung ein, während dieses mit Bestromung seine Belüftungsstellung einnimmt, in der dieses den Vorratsbehälter 9 mit dem Steueranschluss 116 verbindet.

Die mit der Ventileinrichtung 4 gewährleisteten Funktionen entsprechen den Funktionen, die mit der Ventileinrichtung 2 gewährleistet werden können.

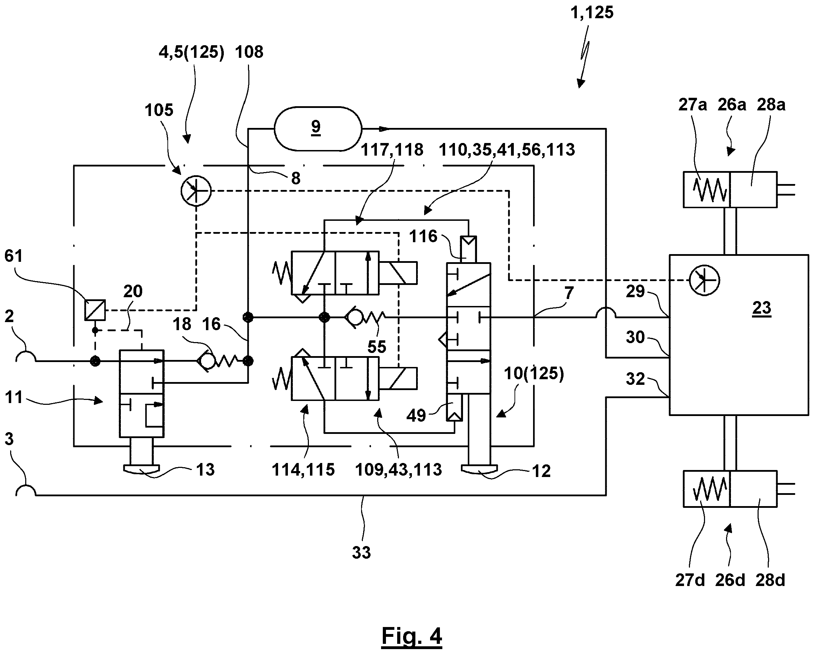

Das in **Fig. 4** dargestellte Ausführungsbeispiel entspricht bis auf Weiteres dem Ausführungsbeispiel gemäß Fig. 3. Allerdings erfolgt hier die Ansteuerung der Magnetventile 114, 117 durch eine elektronische Steuereinheit 105, die in die Ventileinrichtung 4 integriert ist. Die elektronische Steuereinheit 105 kann dabei mit der EBS-Steuereinheit 23 kommunizieren, wobei auch möglich ist, dass die Ansteuerung der Magnetventile 114, 117 redundant durch eine der Steuereinheiten 105, 23 erfolgen kann und/oder die Steuereinheiten 23, 105 jeweils unterschiedliche Teilsteuerfunktionen übernehmen.

Für das Ausführungsbeispiel gemäß Fig. 4 verfügt das Parkventil nicht lediglich über eine Parkstellung und eine Lösestellung. Vielmehr weist das Parkventil 10 in diesem Fall auch eine mittige Sperrstellung auf, in der sämtliche Anschlüsse 17, 21, 22 des Parkventils 10 abgesperrt sind und ein Druck in der Parkbremsleitung 107 aufrechterhalten werden kann. Dies ist insbesondere für die Nutzung der Aktuatoren 109, 110 als Bremsstufeinrichtung 113 wie beschrieben vorteilhaft, da in der mittigen Betriebsstellung des Parkventils 10 ein abgestufter Parkbremsdruck aufrechterhalten werden kann.

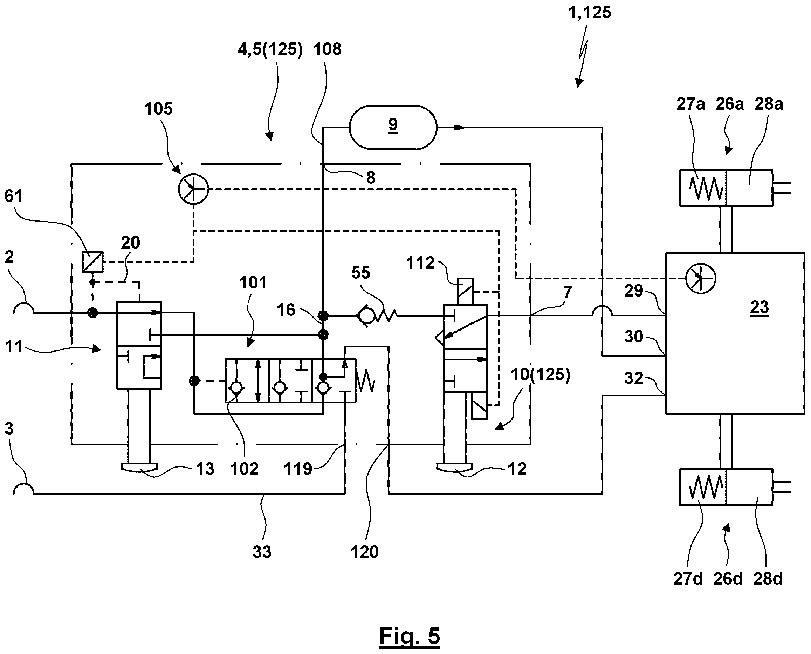

Das in **Fig. 5** dargestellte Ausführungsbeispiel entspricht im Wesentlichen dem Ausführungsbeispiel gemäß Fig. 2, wobei hier entsprechend Fig. 4 auch eine elektronische Steuereinheit 105 in die Ventileinrichtung 4 integriert ist. Allerdings ist hier nicht der Kupplungskopf Bremse 3 unmittelbar mit dem Bremssteueranschluss 32 der EBS-Steuereinheit 23 verbunden. Vielmehr ist hier der Kupplungskopf Bremse 3 über einen Bremssteuereingang 119 der Ventileinrichtung 4 mit dieser verbunden. Ein Bremssteuerausgang 120 der Ventileinrichtung 4 ist mit dem Bremssteuereingang 32 der EBS-Steuereinheit 23 verbunden. In der Ventileinrichtung 4 ist der Bremssteuereingang 119 über ein Anhängerbremsventil 101 mit dem Bremssteuerausgang 120 verbunden. Das Anhängerbremsventil 101 wird von dem Ausgangsdruck des Rangierventils 11 (also je nach Stellung des Rangierventils 11 von dem Druck an dem Kupplungskopf Vorrat 2 oder von dem Druck in dem Behälter 9) angesteuert. Das Anhängerbremsventil 101 ist hier als 4/3-Wege-Ventil ausgebildet. Ein erster Eingang ist mit dem Ausgang des Rangierventils 11 verbunden. Ein zweiter Eingang ist mit dem Kupplungskopf Bremse 3 verbunden. Ein erster Ausgang ist über das Rückschlagventil 55 mit dem Eingangsanschluss 17 des Parkventils 10 verbunden. Ein zweiter Ausgang ist mit dem Vorratsbehälter 9 verbunden.

In einer ersten Betriebsstellung des Anhängerbremsventils 101, die durch eine Feder und ohne pneumatische Ansteuerung eingenommen wird, verbindet das Anhängerbremsventil 101 den mit dem Rangierventil 11 verbundenen Eingangsanschluss über ein Rückschlagventil 102 sowohl mit dem Vorratsbehälter 9 als auch über das Rückschlagventil 55 mit dem Eingangsanschluss 17 des Parkventils 10, während der mit dem Kupplungskopf Bremse 3 verbundene Eingangsanschluss abgesperrt ist. Der erstgenannte Ausgangsanschluss ist auch mit dem Vorratsbehälter 9 verbunden. In dieser Betriebsstellung wird über das Anhängerbremsventil 101 dem Bremssteueranschluss 32 der EBS-Steuereinheit 23 der Druck des Vorratsbehälters 9 zugeführt, so dass bei hinreichendem Druck in dem Vorratsbehälter 9 eine Bremsung des Anhängers über die Betriebsbremsen erfolgen kann. Nimmt das Parkventil die Lösestellung ein, wirkt auf die Federspeicherbremsen des Anhängers ebenfalls der Druck in dem Vorratsbehälter 9 ein. Verringert sich der Druck in dem Vorratsbehälter 9, erfolgt eine zunehmen Erzeugung der Bremswirkung über die Federspeicherbremsen, während die von den Betriebsbremsen erzeugte Bremswirkung entsprechend kleiner wird.

Ist der Kupplungskopf Vorrat 2 an das Zugfahrzeug angekuppelt und liegt eine ordnungsgemäße Druckluftversorgung vor, wird das Anhängerbremsventil 101 in die dritte Ventilstellung überführt. In dieser Ventilstellung ist das Rangierventil 11 über das Rückschlagventil 102 mit dem Ausgang des Anhängerbremsventils 101 verbunden, der sowohl mit dem Vorratsbehälter 9 als auch über das Rückschlagventil 55 mit dem Parkventil 10 verbunden ist. Befindet sich das Parkventil 10 in der Lösestellung, hat dies das Lösen der Federspeicherbremsen zur Folge, so dass der Anhänger fahrbereit ist. In dieser Ventilstellung verbindet das Anhängerbremsventil 101 den Kupplungskopf Bremse 3 mit dem Ausgang des Anhängerbremsventils 101, der über die Bremssteuerleitung 33 mit dem Bremssteueranschluss 32 der EBS-Steuereinheit verbunden ist. Somit kann in dieser Ventilstellung, die der Fahrtstellung entspricht, entsprechend der Vorgabe des Bremssteuerdrucks an dem Kupplungskopf Bremse 3 mittels der EBS-Steuereinheit 23 ein geeigneter Bremssteuerdruck für die Betriebsbremsen ausgesteuert werden.

Sinkt der Druck an dem Steueranschluss des Anhängerbremsventils 101, beispielsweise infolge einer Leckage im Bereich des Kupplungskopfs Vorrat 2, wird das Anhängerbremsventil 101 in eine mittige Ventilstellung (temporär, lediglich zwecks Vermeidung einer Zwitterstellung) umgeschaltet. In dieser mittigen Ventilstellung bleibt die Verbindung des Rangierventils über das Rückschlagventil 102 des Anhängerbremsventils 101 mit dem Vorratsbehälter 9 und über das Rückschlagventil 55 mit dem Eingangsanschluss 17 des Parkventils 10 bestehen. Diese mittlere Ventilstellung wird lediglich in einem kleinen Druckbereich für den vom Versorgungsanschluss 2 bereitgestellten Druck an dem pneumatischen Steueranschluss des Anhängerbremsventils 101 eingenommen. Das Rückschlagventil 102 sichert trotz des Abfalls des Drucks an dem Kupplungskopf Vorrat 2 den Lösedruck in den Federspeicherbremsen, die in der Fahrtstellung des Parkventils 10 weiterhin von dem Druck in dem Vorratsbehälter 9 beaufschlagt werden. In dieser mittigen Betriebsstellung ist die Verbindung des Kupplungskopf Bremse 3 mit dem Bremssteueranschluss 32 der EBS-Steuereinheit 23 unterbrochen. Der weitere Druckabfall an dem Kupplungskopf Vorrat 2 führt dann aber zu der erstgenannten Betriebsstellung mit der Herbeiführung einer Notbremsung. In diesem Fall kann durch Betätigung der Notbremsfunktion-Overrideeinrichtung 43 lediglich die Entlüftung der Federspeicherkammern über das Anhängerbremsventil 101 temporär außer Kraft gesetzt werden, während in der Notbremssituation auch bei Betätigung der Notbremsfunktion-Overrideeinrichtung 43 der Druck des Vorratsbehälters 9 dem Bremssteueranschluss 32 zugeführt wird, womit dann hier eine modulierte gesicherte Abbremsung über die Betriebsbremse erfolgen kann. Erst mit einem hinreichenden Druckabfall in dem Vorratsbehälter 9 kann dann die Notbremsfunktion-Overrideeinrichtung 43 deaktiviert werden, womit die Federspeicherbremse einen Beitrag zur Notbremskraft liefert, wobei dann unter Umständen keine Druckmodulation dieses Beitrags durch die EBS-Steuereinheit 23 erfolgt.

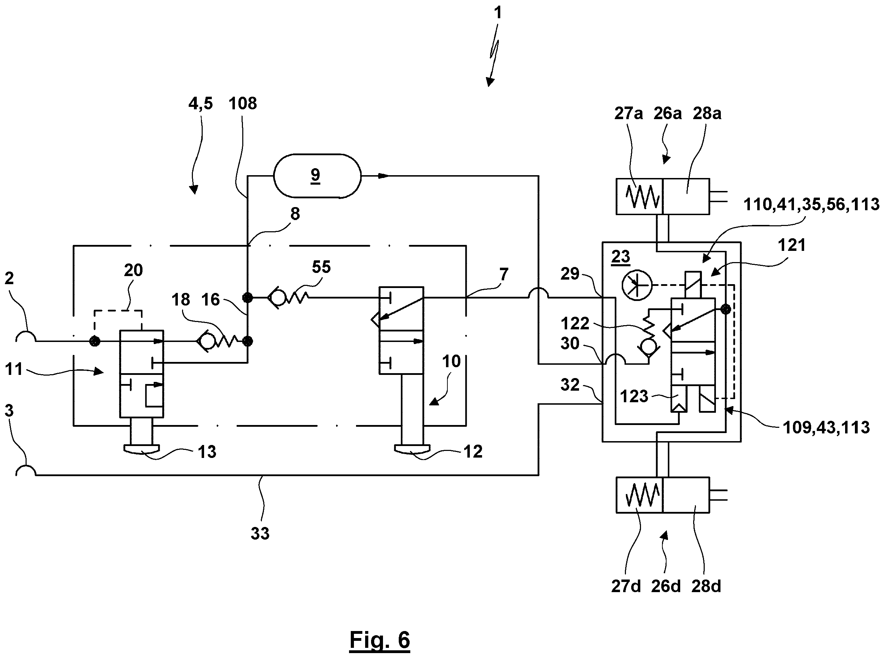

**Fig. 6** zeigt eine Ausgestaltung, bei welcher die Nutzfahrzeuganhänger-Druckluftanlage 1 grundsätzlich entsprechend Fig. 1 ausgebildet ist. Allerdings ist hier neben dem nur manuell betätigten Parkventil 10 ein über die Aktuatoren 109, 110 ansteuerbares zweites Parkventil 121 vorhanden. Dieses zweite Parkventil 121 kann in die Ventileinrichtung 4 integriert sein. Für das Beispiel gemäß Fig. 6 ist allerdings das zweite Parkventil 121 in die EBS-Steuereinheit 23 integriert.

Das zweite Parkventil 121 ist als 3/2-Wegeventil ausgebildet mit einer in Fig. 6 wirksamen Parkstellung, in der das zweite Parkventil 121 die Federspeicherkammern 28 entlüftet, und einer Lösestellung, in der das zweite Parkventil 121 die Federspeicherkammern 28 über ein Rückschlagventil 122 mit dem Behälteranschluss 30 der EBS-Steuereinheit 23 und somit dem Vorratsbehälter 9 verbindet. Der von dem Parkventil 10 ausgesteuerte Parkbremsdruck an dem Parkbremsanschluss 29 der EBS-Steuereinheit beaufschlagt einen pneumatischen Steueranschluss 123 des zweiten Parkventils 121. Über die pneumatische Beaufschlagung des Steueranschlusses 123 kann das zweite Parkventil 121 von der Parkstellung in die Lösestellung überführt werden. Die mit den Aktuatoren 109, 110 des zweiten Parkventils 121 herbeigeführten Funktionalitäten entsprechen den zuvor erläuterten Funktionalitäten.

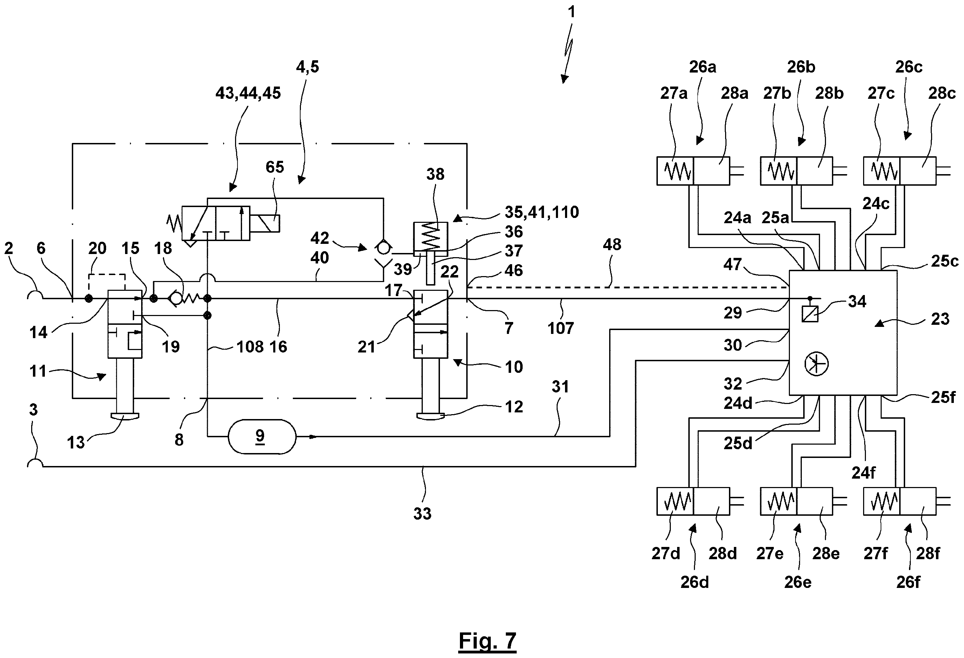

**Fig. 7** zeigt eine Nutzfahrzeuganhänger-Druckluftanlage 1, die über einen Kupplungskopf Vorrat 2 mit einem versorgenden Kupplungskopf des Zugfahrzeugs sowie über einen Kupplungskopf Bremse 3 mit einem einen Bremssteuerdruck vorgebenden Kupplungskopf des Zugfahrzeugs verbunden ist. Hierbei kann der über den Kupplungskopf Bremse 3 übertragene Bremssteuerdruck von dem Fahrer über das Bremspedal vorgegeben werden und/oder von einem autonomen Fahrsystem mit einem automatisch erzeugten Bremssteuersignal vorgegeben werden.

Die Nutzfahrzeuganhänger-Druckluftanlage 1 verfügt über eine Ventileinrichtung 4, die als Baueinheit 5 ausgebildet ist. Die Ventileinrichtung 4 verfügt über einen eingangsseitigen Versorgungsanschluss 6. Der Versorgungsanschluss 6 ist (hier unmittelbar) mit dem Kupplungskopf Vorrat 2 verbunden. Des Weiteren verfügt die Ventileinrichtung 4 ausgangsseitig über einen Parkbremsanschluss 7. Die Ventileinrichtung 4 weist auch einen Behälteranschluss 8 auf. An dem Behälteranschluss 8 ist ein Vorratsbehälter 9 angeschlossen. Für das in Fig. 7 dargestellte Beispiel weist die Ventileinrichtung 4 ausschließlich die pneumatischen Anschlüsse 6, 7, 8 auf, wobei dies nicht zwingend der Fall ist, wie dies auch für andere Fig. noch dargestellt wird.

Die Ventileinrichtung 4 weist ein Parkventil 10 und ein Rangierventil 11 auf. Das Parkventil 10 und das Rangierventil 11 sind jeweils über manuelle Betätigungsknöpfe 12, 13 manuell betätigbar. Das Rangierventil 11 weist einen Eingangs- oder Versorgungsanschluss 14 auf. Der Versorgungsanschluss 14 ist (hier unmittelbar) über den Versorgungsanschluss 6 mit dem Kupplungskopf Vorrat 2 verbunden. Des Weiteren weist das Rangierventil 11 einen Ausgangsanschluss 15 auf, der über eine Verbindungsleitung 16 mit einem Eingangsanschluss 17 des Parkventils 10 verbunden ist. In der Verbindungsleitung 16 ist ein in Richtung des Parkventils 10 öffnendes Rückschlagventil 18 angeordnet. Das Rangierventil 11 weist des Weiteren einen Behälteranschluss 19 auf. Der Behälteranschluss 19 des Rangierventils 11 ist über den Behälteranschluss 8 der Ventileinrichtung 4 mit dem Vorratsbehälter 9 verbunden. Das Rangierventil 11 ist als 3/2-Wegeventil ausgebildet. In der in Fig. 7 wirksamen Schaltstellung, (welche eine Fahrstellung für ordnungsgemäß angekuppelten Kupplungskopf Vorrat 2 ist) verbindet das Rangierventil den Versorgungsanschluss 14 mit dem Ausgangsanschluss 15, während der Behälteranschluss 19 abgesperrt ist. Hingegen verbindet in der in Fig. 7 nicht wirksamen, anderen Schaltstellung (die eine Rangierstellung für abgekuppelten Anhänger ist) das Rangierventil 11 den Behälteranschluss 19 mit dem Ausgangsanschluss 15, während in dieser Betriebsstellung der Versorgungsanschluss 14 abgesperrt ist. Über eine Steuerleitung 20 wird ein Steuerkolben des Rangierventils 11 so mit dem Druck an dem Versorgungsanschluss 14 beaufschlagt, dass bei vorliegendem Druck an dem Versorgungsanschluss 14 das Rangierventil 11 die in Fig. 7 wirksame Stellung einnimmt.

Das Parkventil 10 ist ebenfalls als manuell betätigtes 3/2-Wegeventil ausgebildet und verfügt neben dem Eingangsanschluss 17 über einen Entlüftungsanschluss 21 und einen Parkbremsanschluss 22, der hier unmittelbar mit dem Parkbremsanschluss 7 der Ventileinrichtung 4 verbunden ist. In der in Fig. 7 wirksamen Parkstellung verbindet das Parkventil 10 den Parkbremsanschluss 22 mit dem Entlüftungsanschluss 21, während der Eingangsanschluss 17 abgesperrt ist. Hingegen verbindet das Parkventil 10 in einer Lösestellung den Eingangsanschluss 17 mit dem Parkbremsanschluss 22, während der Entlüftungsanschluss 21 abgesperrt ist.

Die mittels des Parkventils 10 und des Rangierventils 11 gewährleiste Grundfunktion ist wie folgt:
Wird an dem Kupplungskopf Vorrat 2 der Kupplungskopf des Zugfahrzeugs angeschlossen, führt die Druckbeaufschlagung des Versorgungsanschlusses 14 des Rangierventils 11 dazu, dass dieses in die erste Betriebsstellung gemäß Fig. 7 überführt wird. Die Druckluft von dem Zugfahrzeug strömt über den Kupplungskopf Vorrat 2, den Versorgungsanschluss 14, das Rangierventil 11 und den Ausgangsanschluss 15 unter Öffnung des Rückschlagventils 18 durch die Verbindungsleitung 16 zu dem Eingangsanschluss 17 des Parkventils 10. Von der Verbindungsleitung 16 zweigt eine Zweigleitung 108 ab, die zu dem Behälteranschluss 8 und damit zu dem Vorratsbehälter 9 führt. Bei angeschlossenem Kupplungskopf Vorrat 2 kann der Vorratsbehälter 9 somit mittels von dem Zugfahrzeug bereitgestellter Druckluft gefüllt werden. Befindet sich in der beschriebenen Betriebssituation das Parkventil 10 in der Parkstellung, ist der Parkbremsanschluss 22 des Parkventils 10 und damit der Parkbremsanschluss 7 der Ventileinrichtung 4 über den Entlüftungsanschluss 21 entlüftet, was (wie im Folgenden noch beschrieben wird) zur Entlüftung der Federspeicherbremsen und damit Betätigung der Parkbremsen des Anhängers führt. Wird hingegen manuell das Parkventil 10 in die Lösestellung überführt, führt die erläuterte Druckbeaufschlagung der Verbindungsleitung 16 dazu, dass an dem Parkbremsanschluss 22 des Parkventils 10 und damit an dem Parkbremsanschluss 7 der Ventileinrichtung 4 Druckluft ansteht, die (bei hinreichender Höhe des Drucks) dazu führt, dass (wie im Späteren noch im Detail beschrieben wird) die Federspeicherbremsen gelöst werden.

Wird (beispielsweise nach einem Fahrbetrieb) der Kupplungskopf Vorrat 2 abgekuppelt und befindet sich das Parkventil 10 in der Lösestellung, kann der Druck in den Federspeicherbremsen durch die Sicherung mittels des Rückschlagventils 18 aufrechterhalten werden. Eine Betätigung der Federspeicherbremsen setzt somit grundsätzlich voraus, dass eine Überführung des Parkventils 10 in die Parkstellung erfolgt. Soll nach Aktivierung der Parkstellung und somit Betätigung der Federspeicherbremsen, aber bei weiterhin abgekoppeltem Zugfahrzeug ein Rangieren des Anhängers ermöglicht werden, erfordert das Lösen der Federspeicherbremsen (neben der Überführung des Parkventils in die Lösestellung), dass Druckluft in der Verbindungsleitung 16 bereitgestellt wird. Dieses Druckluft wird für abgekuppelten Anhänger bereitgestellt, indem das Rangierventil 11 manuell umgeschaltet wird in die Rangierstellung, in der Druckluft von dem Vorratsbehälter 9 über den Behälteranschluss 8 und die Zweigleitung 108 zu dem Behälteranschluss 19 des Rangierventils 11 strömen kann und von dem Behälteranschluss 19 zu dem Ausgangsanschluss 15 und dem in diese Richtung öffnenden Rückschlagventil 18 in die Verbindungsleitung 16 strömen kann, womit dann letzten Endes zum Rangieren die Federspeicherbremsen belüftet werden können. Wird dann der Kupplungskopf Vorrat 2 wieder mit dem Zugfahrzeug verbunden, führt der Druck an dem Kupplungskopf Vorrat 2 und in der Steuerleitung 20 dazu, dass das Rangierventil 11 automatisch von der Rangierstellung in die in Fig. 7 wirksame andere Ventilstellung überführt wird.

Die Nutzfahrzeuganhänger-Druckluftanlage 1 verfügt des Weiteren über eine elektronische EBS-Steuereinheit 23. Die EBS-Steuereinheit 23 verfügt über ausgangsseitige Parkbremsanschlüsse 24a bis 24f sowie Betriebsbremsanschlüsse 25a bis 25f. Kombi-Bremszylinder 26a bis 26f verfügen jeweils über eine Federspeicherkammer 27a bis 27f und eine Betriebsbremskammer 28a bis 28f. Die Federspeicherkammern 27 sind mit den Parkbremsanschlüssen 24 verbunden, während die Betriebsbremskammern 28 mit den Betriebsbremsanschlüssen 25 verbunden sind.

Die EBS-Steuereinheit 23 weist eingangsseitig einen Parkbremsanschluss 29 auf, der über eine Parkbremsleitung 107 mit dem Parkbremsanschluss 7 der Ventileinrichtung 4 verbunden ist. Des Weiteren verfügt die EBS-Steuereinheit 23 über einen Behälteranschluss 30, der über eine Behälterleitung 31 mit dem Vorratsbehälter 9 verbunden ist. Die EBS-Steuereinheit 23 weist auch einen Bremssteueranschluss 32 auf, der über eine Bremssteuerleitung 33 mit dem Kupplungskopf Bremse 3 verbunden ist.

In die EBS-Steuereinheit 23 kann ein Drucksensor 34 integriert sein, der für das dargestellte Ausführungsbeispiel den Druck an dem Parkbremsanschluss 29 erfasst.

Die Funktion der EBS-Steuereinheit 23 kann beispielsweise wie folgt sein:
Sind die Kupplungsköpfe 2, 3 ordnungsgemäß an die entsprechenden Kupplungsköpfe des Zugfahrzeugs angekoppelt, befindet sich das Rangierventil 11 in der in Fig. 7 dargestellten Betriebsstellung und befindet sich das Parkventil 10 in der Lösestellung, ist der Fahrzeugzug fahrbereit. Erzeugt der Fahrer über ein Bremspedal einen Bremssteuerdruck an dem Kupplungskopf 3, wird diese pneumatische Bremsvorgabe über die Bremssteuerleitung 33 an den Bremssteueranschluss 32 der EBS-Steuereinheit 23 übertragen. Erfolgt kein Blockieren der Fahrzeugräder, erzeugt die EBS-Steuereinheit 23 an den Betriebsbremsanschlüssen 25 geeignete Bremssteuerdrücke für die Betriebsbremskammern 28 der Kombi-Bremszylinder 26, wobei diese Drücke dann entsprechend einer vorgegebenen Abhängigkeit von dem an dem Bremssteueranschluss 32 anliegenden Druck abhängen. Wird hingegen ein Verlust der Traktion und ein Blockieren der Fahrzeugräder festgestellt, nimmt die EBS-Steuereinheit 23 in bekannter Weise eine Reduktion des Drucks vor, mit dem die Betriebsbremskammern 28 beaufschlagt werden, um die Blockade zu vermeiden oder aufzuheben. Hieran anschließend kann der Druck in der Betriebsbremskammer 28 wieder erhöht werden, womit eine Modulation des Drucks für die Betriebsbremskammern 28 erfolgt. Dies kann gemeinsam oder spezifisch für die einzelnen Betriebsbremskammern 28 erfolgen. Für die Erzeugung des Drucks in den Betriebsbremskammern 28 nutzt die EBS-Steuereinheit die Druckluft, die von dem Vorratsbehälter 9 an dem Behälteranschluss 30 bereitgestellt wird.

Darüber hinaus steuert die EBS-Steuereinheit 23 die Druckbeaufschlagung der Federspeicherkammern 27 über die Parkbremsanschlüsse 24 in Abhängigkeit des an dem Parkbremsanschluss 29 anliegenden, von der Ventileinrichtung 4 ausgesteuerten Drucks. Hierbei kann auch ein Anti-Compound-Ventil Einsatz finden, mit dem eine Verknüpfung des Drucks an dem Parkbremsanschluss 29 und dem Bremssteueranschluss 32 erfolgt, um eine übermäßige Beanspruchung der Kombi-Bremszylinder 26 zu vermeiden.

Gemäß Fig. 7 kann die Ventilstellung des Parkventils 10 zusätzlich beeinflusst werden durch einen Aktuator 110, der hier eine Park-Sicherheitseinrichtung 35 und/oder eine Notbremseinrichtung ist. Der Aktuator 110 verfügt über einen Kolben 36 und einen mit dem Kolben 36 gekoppelten, hier starr verbundenen Stößel 37. Auf der dem Stößel 37 abgewandten Seite des Kolbens 36 wirkt auf diesen eine Feder 38 ein.

Hingegen wirkt auf der dem Stößel und dem Parkventil 10 zugewandten Seite auf den Kolben 36 der Druck in einer Druckkammer 39 ein. Ist die Druckkammer 39 nicht (hinreichend) druckbeaufschlagt, beaufschlagt die Feder 38 den Kolben und den Stößel 37 in die in Fig. 7 wirksame Betriebsstellung, in der der Stößel 37 maximal ausgefahren ist. Befindet sich das Parkventil 10 in der Lösestellung, führt das Ausfahren des Stößels 37 durch die Feder 38 dazu, dass das Parkventil 10 in die Parkstellung überführt wird. Hierzu kommt eine Stirnseite des Stößels 37 zur Anlage an ein Ventilelement wie einen Ventilschieber des Parkventils 10 und übt eine Betätigungskraft aus, die zum Wechsel der Betriebsstellung des Parkventils 10 führt. Hingegen kann durch Druckbeaufschlagung der Druckkammer 39 mit einem Druck, der ausreichend ist, um die Feder 38 zu komprimieren, der Stößel 37 eingefahren werden oder in dem eingefahrenen Zustand bleibt. Befindet sich das Parkventil 10 in der Parkstellung, führt das erläuterte Einfahren des Stößels 37 dazu, dass die Stirnseite des Stößels 37 ein Spiel zu dem Ventilelement des Parkventils 10 ausbildet, welches so groß ist, dass das Parkventil 10 ohne Wechselwirkung mit dem Stößel 37 von dem Benutzer manuell in die Parkstellung und die Lösestellung gebracht werden kann. Die Druckkammer 39 ist mit einer Zweigleitung 40 verbunden. Die Zweileitung zweigt zwischen dem Rückschlagventil 18 und dem Rangierventil 11 von der Verbindungsleitung 16 ab. Befindet sich das Rangierventil 11 für angeschlossenen Kupplungskopf Vorrat 2 in der in Fig. 7 wirksamen Lösestellung, gelangt Druckluft von dem Kupplungskopf Vorrat 2 über die Zweigleitung 40 zu der Druckkammer, womit der Stößel 37 keine Einwirkung auf die Betriebsstellung des Parkventils 10 hat. Wird das Parkventil 10 in die Lösestellung überführt, kann der Fahrbetrieb aufgenommen werden. Bricht aber beispielsweise infolge einer Leckage am Kupplungskopf 2 oder einer zugeordneten Versorgungsleitung oder wegen eines Abkuppelns des Kupplungskopfs 2 der Druck ein, führt dies zu einer Reduzierung des Drucks in der Druckkammer 29, womit die Kraft der Feder 38 überwiegt und der Stößel 37 ausgefahren wird. Dies hat die automatische Überführung des Parkventils 10 in die Parkstellung zur Folge, womit eine Betätigung der Feststellbremsen erfolgt. Für das Abkuppeln des Kupplungskopf 2 führt dies somit dazu, dass die von dem Aktuator 110 gebildete Park-Sicherheitseinrichtung 35 zuverlässig gewährleisten kann, dass mit dem Abkuppeln des Kupplungskopfs Vorrat 2 in jedem Fall das Parkventil 10 die Parkstellung einnimmt. Soll dann aber ein Rangieren des Anhängers erfolgen, ohne dass der Kupplungskopf Vorrat 2 angeschlossen ist, ist erforderlich, dass der Benutzer das Rangierventil 11 in die Rangierstellung überführt und gleichzeitig durch hinreichende Betätigungskräfte zur Überwindung der Feder 38 das Parkventil 10 in die Lösestellung überführt wird und in dieser gehalten wird.

Alternativ oder kumulativ möglich ist, dass mit dem Aktuator 110, hier dem Stößel 37, dem Kolben 36 und der Feder 38, eine Notbremseinrichtung 41 gebildet ist, da auch im Fahrbetrieb ein Abfall des Drucks an dem Kupplungskopf Vorrat 2, beispielsweise wegen einer Leckage oder einem Abriss des Kupplungskopfes eine Druckminderung in der Druckkammer 39 erfolgt, die die Umschaltung des Parkventils 10 in die Parkstellung zur Folge hat, womit eine Notbremsung über die Federspeicherbremsen herbeigeführt wird.

Ohne dass dies zwingend der Fall ist, ist für das in Fig. 7 dargestellte Beispiel die Zweigleitung 40 nicht unmittelbar und permanent mit der Druckkammer 39 verbunden. Vielmehr ist die Zweigleitung 40 an einen ersten Eingang eines Wechselventils 42 angeschlossen, dessen Ausgang mit der Druckkammer 39 verbunden ist. Der andere Eingang des Wechselventils 42 ist mit einer Notbremsfunktion-Overrideeinrichtung 43 verbunden, die dann ebenfalls Bestandteil des Aktuators 110 ist. Für das dargestellte Beispiel verfügt die Notbremsfunktion-Overrideeinrichtung 43 über ein Notbremsfunktion-Overrideventil 44. Wird über das Notbremsfunktion-Overrideventil 44 der zweite Eingang des Wechselventils 42 druckbeaufschlagt, kann der Kolben 36 in der Betriebsstellung mit maximaler Komprimierung der Feder 38 gehalten werden unabhängig davon, welcher Druck in der Zweigleitung 40 herrscht. Somit kann durch Druckbeaufschlagung des zweiten Eingangs des Wechselventils die Notbremsfunktion infolge eines Druckabfalls in der Zweigleitung 40 (temporär) deaktiviert werden.

Für das in Fig. 7 dargestellte Beispiel ist das Notbremsfunktion-Overrideventil 44 ein 3/2-Wege-Magnetventil 45. Dieses nimmt infolge der Beaufschlagung durch eine Feder ohne Bestromung seine Entlüftungsstellung ein, während das 3/2-Wege-Magnetventil 45 mit Bestromung desselben eine Entlüftungsstellung einnimmt, in der das 3/2-Wege-Magnetventil 45 den zweiten Eingang des Wechselventils 42 mit dem Vorratsbehälter 9 verbindet.

Vorzugsweise verfügt die Ventileinrichtung 4 über keine elektronische Steuereinheit. Vielmehr sind gemäß Fig. 7 die EBS-Steuereinheit 23 und die Ventileinrichtung 4 jeweils mit elektrischen Steueranschlüssen 46, 47 ausgestattet, die über eine elektrische Steuerleitung 48 miteinander verbunden sind. Über die Steuerleitung 48 ist ermöglicht, dass die Steuerung des Notbremsfunktion-Overrideventils 44 über ein von der EBS-Steuereinheit 23 erzeugtes elektrisches Steuersignal erfolgt.

Wird bei einem Abriss des Kupplungskopfs Vorrats 2 oder einer Leckage von dem Drucksensor 34 ein Druckabfall erkannt, kann zunächst das Notbremsfunktion-Overrideventil 44 in der Belüftungsstellung verbleiben oder in diese überführt werden, womit trotz des Druckabfalls das Parkventil 10 in der Lösestellung verbleibt und die Federspeicherbremsen nicht einfallen. Vielmehr ist weiterhin die Betriebsbremsung, u. U. auch mit einer Modulation, über die Vorgabe des Bremssteuerdrucks an dem Kupplungskopf Bremse 3 möglich. Mit weiterem Druckabfall, der von dem Drucksensor 34 gemessen wird, kann die EBS-Steuereinheit 23 mit dem Unterschreiten eines Schwellwerts ein Steuersignal in der Steuerleitung 48 erzeugen, mit dem dann die Umschaltung des Notbremsfunktion-Overrideventils 44 in die Entlüftungsstellung erfolgt, womit dann die Notbremsfunktion herbeigeführt wird, indem der Stößel 37 das Parkventil 10 in die Parkstellung überführt.

Die Ausführungsbeispiele der folgenden Figuren können zumindest teilweise mindestens einer Ausführungsform einer vorangegangenen Figur entsprechen, so dass auf die wiederholte Beschreibung hinsichtlich dieser Teile verzichtet wird.

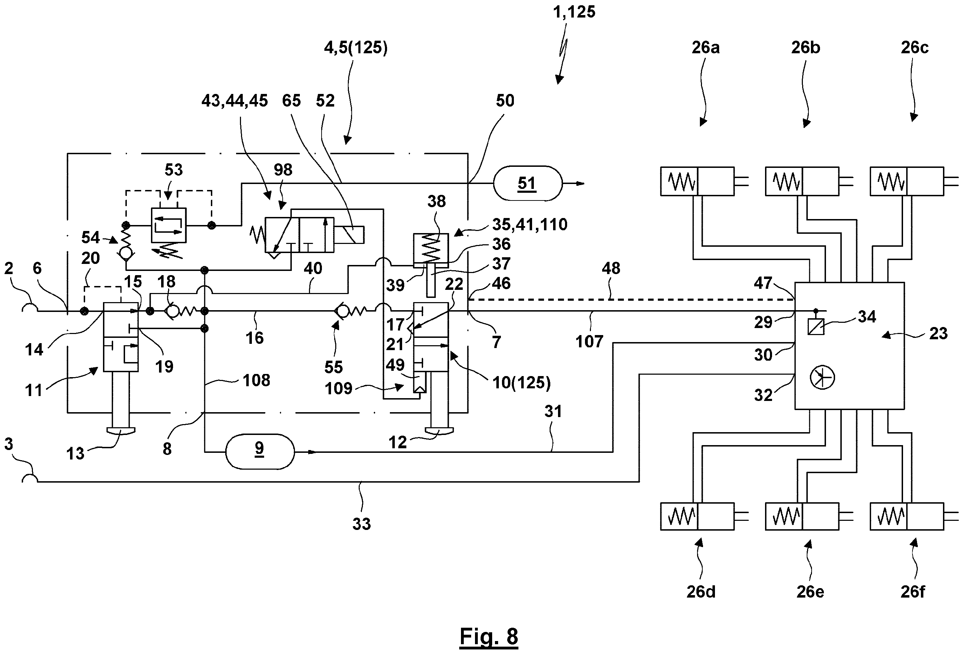

Abweichend zu Fig. 7 ist gemäß Fig. 8 die Zweigleitung 40 ohne Einsatz des Wechselventils 42 unmittelbar an die Druckkammer 39 angeschlossen. Somit würde ein Druckabfall an dem Kupplungskopf Vorrat 2 unterhalb eines durch die Feder 38 vorgegebenen Schwellwerts zu einer Ausführung der Notbremsfunktion führen. In diesem Fall ist die von dem Aktuator 109 gebildete Notbremsfunktion-Overrideeinrichtung 43, hier ein Notbremsfunktion-Overrideventil 44 in Ausbildung als 3/2-Wege-Magnetventil 45, mit einem Steueranschluss 49 des Parkventils 10 verbunden. Die Beaufschlagung des Steueranschlusses 49 führt dazu, dass ein Ventilelement wie ein Ventilschieber des Parkventils 10 von dem an dem Steueranschluss 49 anliegenden Druck in eine Richtung beaufschlagt wird, die entgegengesetzt ist zur Beaufschlagungsrichtung infolge des Ausfahrens des Stößels 37. Wird somit das Notbremsfunktion-Overrideventil 44 in die Belüftungsstellung geschaltet, kann das Parkventil 10 in der Lösestellung gehalten werden, auch wenn infolge des Druckabfalls an dem Kupplungskopf Vorrat 2 und in der Zweigleitung 40 sowie in der Druckkammer 39 an sich die Notbremsfunktion ausgeführt würde, indem der Stößel 37 ausgefahren wird und Parkventil 10 in die Parkstellung überführt wird. Hierbei erfolgt die Dimensionierung der Kolbenfläche des Parkventils 10, auf die der Druck an dem Steueranschluss 49 wirkt, und der Feder 38 derart, dass bei an dem Steueranschluss 49 anliegendem Steuerdruck die Kraft, die dieser Steuerdruck erzeugt, in jedem Fall größer ist als eine entgegengesetzt wirkende Kraft der Feder 38. Ansonsten entspricht die Funktion der Park-Sicherheitseinrichtung 35 und der Notbremseinrichtung 41 sowie der Notbremsfunktion-Overrideeinrichtung 43 der für das Beispiel in Fig. 7 beschriebenen Funktion.

Für das in Fig. 8 dargestellte Ausführungsbeispiel verfügt die Ventileinrichtung 4 über einen weiteren Behälteranschluss 50 für einen Luftfederkreis, der hier einen Vorratsbehälter 51 aufweist. Der Behälteranschluss 50 ist über eine Zweigleitung 52 mit der Verbindungsleitung 16 (stromabwärts des Rückschlagventils 18) verbunden. In der Zweigleitung 52 ist ein Überströmventil 53, hier mit begrenzter Rückströmung, angeordnet. Optional kann, wie ebenfalls in Fig. 8 zu erkennen ist, zwischen dem Überströmventil 53 und der Verbindungsleitung 16 in der Zweigleitung 52 ein in Richtung des Behälteranschlusses 50 öffnendes Rückschlagventil 54 angeordnet sein. Für das in Fig. 8 dargestellte Ausführungsbeispiel ist optional des Weiteren dem Eingangsanschluss 17 des Parkventils 10 ein weiteres, in Richtung des Parkventils 10 öffnendes Rückschlagventil 55 vorgeordnet.

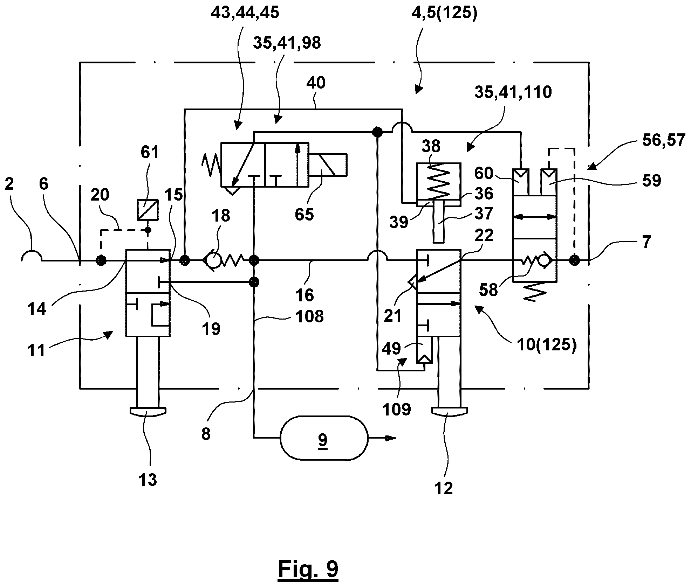

In **Fig. 9** ist lediglich die Ventileinrichtung 4 dargestellt, die entsprechend den anderen Ausführungsbeispielen in die Nutzfahrzeuganhänger-Druckluftanlage 1 integriert sein kann. Hierbei ist die Ventileinrichtung 4 grundsätzlich entsprechend der Ventileinrichtung 4 in Fig. 8 ausgebildet. Allerdings ist hier zwischen dem Parkbremsanschluss 4 der Ventileinrichtung 4 und dem Parkbremsanschluss 22 des Parkventils 10 eine Immobilisiereinrichtung 56 angeordnet, die ein Immobilisierventil 57 aufweist. Das Immobilisierventil 57 ist dabei als 2/2-Wegeventil ausgebildet. Infolge der Beaufschlagung durch eine Feder nimmt das Immobilisierventil 57 die in Fig. 9 wirksame Immobilisierstellung ein. In dieser Immobilisierstellung ist der Eingangsanschluss des Immobilisierventils 57 mit dem Ausgangsanschluss desselben über ein in Richtung des Parkbremsanschlusses 7 der Ventileinrichtung 4 sperrendes Rückschlagventil 58 miteinander verbunden. In dieser Immobilisierstellung des Immobilisierventils 57 kann über das in diese Richtung öffnende Rückschlagventil 58 eine Entlüftung der Federspeicherbremsen erfolgen, wenn das Parkventil 10 seine Parkstellung einnimmt. Auch wenn aber das Parkventil seine Lösestellung einnimmt, kann infolge der Sperrung durch das Rückschlagventil 58 kein Lösen der Federspeicherbremsen erfolgen. Dies ist hingegen erst möglich, wenn das Immobilisierventil 57 umgeschaltet wird in die Mobilisierstellung, in welcher die beiden Anschlüsse des Immobilisierventils 57 ohne Rückschlagventil miteinander verbunden sind, so dass eine Belüftung und eine Entlüftung der Federspeicherbremsen möglich ist.

Zur Umschaltung des Immobilisierventils 57 in die Mobilisierstellung ist einerseits der Parkbremsanschluss 7 der Ventileinrichtung 4 mit einem Steueranschluss 59 verbunden, dessen hinreichende Druckbeaufschlagung eine Überführung des Immobilisierventils 57 von der Immobilisierstellung in die Mobilisierstellung herbeiführt. Ist somit ein hinreichender Druck an dem Parkbremsanschluss 7 der Ventileinrichtung vorhanden und sind somit die Federspeichebremsen mit einem hinreichenden Druck belüftet, wird das Immobilisierventil 57 automatisch durch den die Druckbeaufschlagung des Steueranschlusses 59 in der Mobilisierstellung gehalten.

Sind hingegen durch Betätigung des Parkventils 10 die Federspeicherbremsen entlüftet, können diese nicht ohne Weiteres und insbesondere nicht durch Überführung des Parkventils 10 in die Lösestellung wieder belüftet werden, da in der Immobilisierstellung das Rückschlagventil 58 die Belüftung sperrt. Vielmehr muss für eine Belüftung der Federspeicherbremsen eine Belüftung eines Steueranschlusses 60 des Immobilisierventils 57 erfolgen. Die Druckbeaufschlagung des Steueranschlusses 60 kann dabei gesteuert werden über das Notbremsfunktion-Overrideventil 44, dessen Ausgangsanschluss für dieses Ausführungsbeispiel nicht lediglich mit dem Steueranschluss 49 des Parkventils 10 verbunden ist, sondern auch mit dem Steueranschluss 60 des Immobilisierventils 57.

Die Funktion der Ventileinrichtung 4 gemäß Fig. 9 ist wie folgt:
Ist der Anhänger geparkt, indem die Federspeicherbremsen durch die Überführung des Parkventils 10 entlüftet sind, kann eine Bewegung des Anhängers nicht einfach dadurch ermöglicht werden, dass das Parkventil 10 in die Lösestellung überführt wird, da sich ohne Bestromung des Notbremsfunktion-Overrideventils 44 das Immobilisierventil 57 in der Immobilisierstellung befindet. Vielmehr erfordert die Herstellung der Fahrbereitschaft des Anhängers durch Belüftung der Federspeicherbremsen die elektronische Umschaltung des Notbremsfunktion-Overrideventils 44. Ist eine entsprechende Authentifizierung vorhanden, kann die Umschaltung des Notbremsfunktion-Overrideventils 44 erfolgen, womit das Immobilisierventil 57 in seine Mobilisierstellung gesteuert wird und eine Belüftung der Federspeicherbremsen ermöglicht ist. Die Umschaltung des Notbremsfunktion-Overrideventils 44 in die Belüftungsstellung führt gleichzeitig dazu, dass das Parkventil 10 in die Lösestellung überführt wird. Die Federspeicherbremsen werden somit belüftet und es kann die Fahrt angetreten werden.

Ein Druckimpuls des Notbremsfunktion-Overrideventils 44 kann dabei ausreichen, um einen hinreichenden Druck an dem Parkbremsanschluss 7 der Ventileinrichtung 4 zu erzeugen, der dann auch an dem Steueranschluss 59 wirkt und das Immobilisierventil 57 in der Mobilisierstellung hält.

Kommt es dann zu einer Notbremssituation mit einem Abfall des Drucks an dem Kupplungskopf Vorrat, können die Park-Sicherheitseinrichtung 35 und die Notbremseinrichtung 41 sowie das Notbremsfunktion-Overrideventil 44 so wirksam werden, wie dies zuvor beschrieben worden ist, ohne dass eine Beeinträchtigung der Funktion durch die Immobilisiereinrichtung 56 erfolgt.

Für das in Fig. 9 dargestellte Ausführungsbeispiel erfasst ein Drucksensor 61 den Druck in der Steuerleitung 20, der dem Druck an dem Versorgungsanschluss 14 bzw. dem Kupplungskopf Vorrat 2 entspricht. Dies kann alternativ oder kumulativ zu der Erfassung des Drucks durch den Drucksensor 34 in der EBS-Steuereinheit 23 erfolgen.

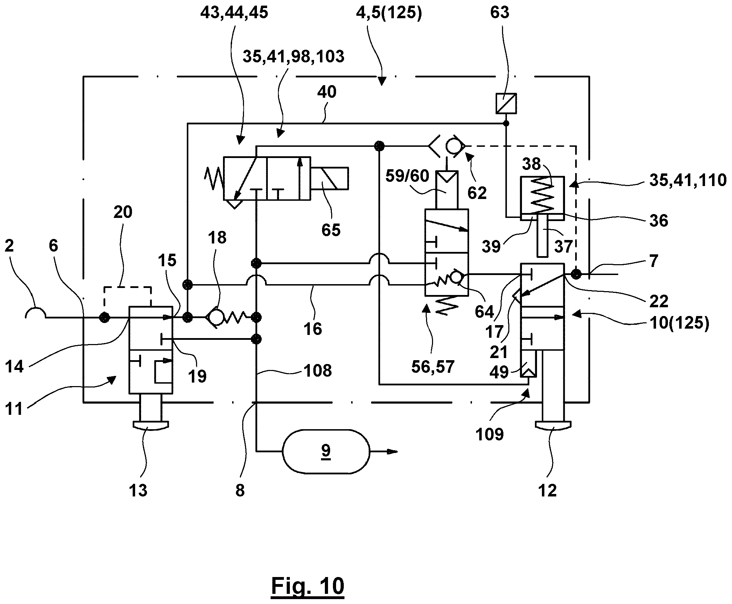

Für das in **Fig. 10** dargestellte Ausführungsbeispiel sind abweichend zu Fig. 9 nicht zwei Steueranschlüsse 59, 60 vorhanden. Vielmehr wird hier ein einziger Steueranschluss 59/60 des Immobilisierventils 57 über einen Ausgang eines Wechselventils 62 beaufschlagt. Ein erster Eingang des Wechselventils 62 ist in diesem Fall verbunden mit dem Notbremsfunktion-Overrideventil 44, während ein zweiter Eingang des Wechselventils 62 verbunden ist mit dem Parkbremsanschluss 7 der Ventileinrichtung 4 über die in Fig. 10 gestrichelt dargestellte Steuerleitung.

Für dieses Ausführungsbeispiel wird der Druck in der Druckkammer 39 über einen Drucksensor 63 erfasst.

Das Immobilisierventil 57 ist abweichend zu Fig. 9 in der Verbindungsleitung 16 zwischen dem Parkventil 10 und dem Rangierventil 11 angeordnet. In diesem Fall ist das Rückschlagventil 18 nicht in diese Verbindungsleitung 16 integriert, sondern in die Leitung, die über eine Verzweigung sowohl zu dem Vorratsbehälter 9 als auch zu dem Notbremsfunktion-Overrideventil 44 führt.

Für das Ausführungsbeispiel gemäß Fig. 10 ist das Immobilisierventil 57 als 3/2-Wegeventil ausgebildet. Infolge der Beaufschlagung durch eine Feder nimmt dies eine Immobilierstellung ein, in der das Immobilisierventil 57 die Verbindungsleitung 16 mit dem Parkventil 10 über ein Rückschlagventil 64 verbindet, wobei das Rückschlagventil 64 in Richtung des Rangierventils 11 für eine Entlüftung der Federspeicherbremsen öffnet, aber für eine Strömung in Richtung des Parkventils 10 zum Belüften der Federspeicherbremsen sperrt. Hingegen kann das Immobilisierventil 57 durch Druckbeaufschlagung des Steueranschlusses 59/60 umgeschaltet werden in die Mobilisierstellung. In der Mobilisierstellung ist die Verbindungsleitung 16 abgesperrt, während in der Mobilisierstellung das Immobilisierventil 57 den Eingangsanschluss 17 des Parkventils 10 mit dem Behälter 9 verbindet, womit zur Belüftung der Federspeicherbremsen eine Belüftung des Eingangsanschlusses 17 des Parkventils 10 erfolgt.

Die sich für die Ausführungsform gemäß Fig. 10 ergebende Funktion entspricht der zuvor erläuterten Ausführungsform: Für die Umschaltung des Immobilisierventils 57 von der Immobilisierstellung gemäß Fig. 10, in der keine Belüftung der Federspeicherbremsen möglich ist, in die Mobilisierstellung ist eine Umschaltung des Notbremsfunktion-Overrideventils 44 in die Belüftungsstellung erforderlich, was nach geeigneter Authentifizierung des Benutzers oder Fahrzeugs erfolgen kann. Für einmal gelöste Federspeicherbremsen und hinreichenden Druck an dem Parkbremsanschluss 7 liegt in der gestrichelt dargestellten Steuerleitung und damit an dem Steueranschluss 59/60 ein hinreichender Druck vor, um die Mobilisierstellung des Immobilisierventils 57 aufrechtzuerhalten. Das Immobilisierventil 57 beeinträchtigt die weiteren Funktionen der Ventileinrichtung (insbesondere die Notbremsfunktion und die Notbremsfunktion-Overridefunktion sowie die Park-Sicherheitseinrichtung 35) nicht.

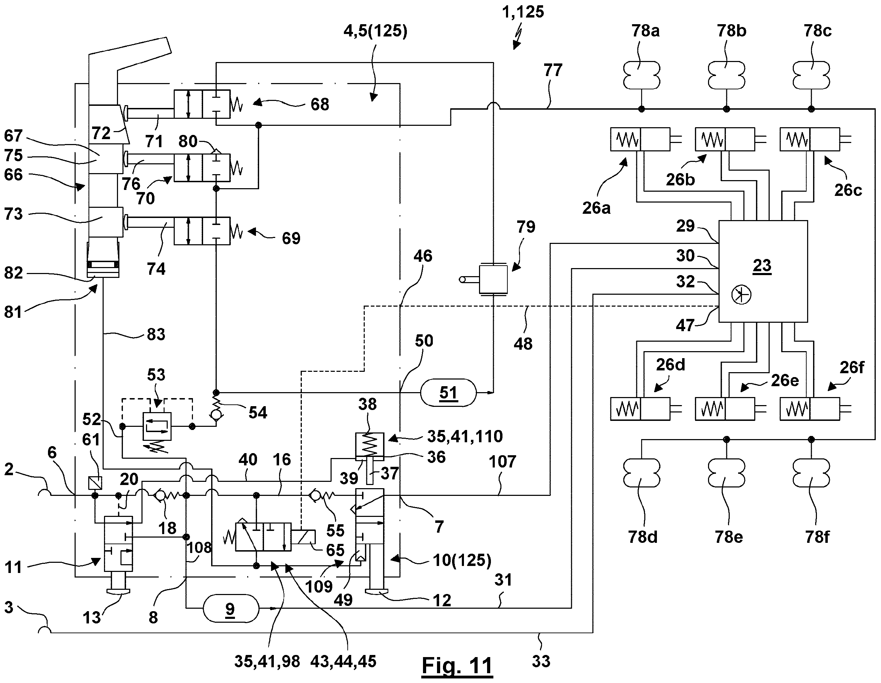

In **Fig. 11** entspricht die Ausgestaltung der Ventileinrichtung 4 mit dem Parkventil 10, dem Rangierventil 11, dem Notbremsfunktion-Overrideventil 44, der Park-Sicherheitseinrichtung 35, der Notbremseinrichtung 41 und dem Überströmventil 53 und dem Rückschlagventil 54 bei geringfügig veränderter Leitungsführung, aber entsprechender Funktion grundsätzlich der Ausführungsform gemäß Fig. 8. Allerdings ist hier das Rückschlagventil 54 abweichend zu Fig. 8 zwischen dem Überströmventil 53 und dem Vorratsbehälter 51 in die Ventileinrichtung 4 integriert.

Des Weiteren ist für das Ausführungsbeispiel gemäß Fig. 11 in die Ventileinrichtung 4 eine manuell betätigte Hebe-Senk-Ventileinrichtung 66 integriert. Hinsichtlich der Ausgestaltung einer derartigen manuell betätigten Hebe-Senk-Ventileinrichtung 66 wird insbesondere Bezug genommen auf eine Darstellung und Erläuterung einer derartigen Hebe-Senk-Ventileinrichtung in der Druckschrift DE 41 20 824 C1. Die Hebe-Senk-Ventileinrichtung 66 verfügt über ein Ventilelement 67 (insbesondere eine Schaltwelle oder ein Schaltschieber), welches vorzugsweise in Stellungen Heben, Senken, Stopp und Fahrt überführbar ist. Während es sich hierbei grundsätzlich jeweils um Schwenkstellungen handeln kann, findet für das in Fig. 11 dargestellte Ausführungsbeispiel eine Hebe-Senk-Ventileinrichtung 66 Einsatz, bei der das Ventilelement 67 von einer mittigen Schwenkstellung Stopp in zwei Richtungen Heben und Senken verschwenkbar ist und aus der mittigen Schwenkstellung Stopp durch axiale Verschiebung in eine Stellung Fahrt translatorisch verschiebbar ist.

Die unterschiedlichen Betriebsstellungen haben wie folgt die Betätigung eines Fahrt-Ventils 68, eines Hebe-Ventils 69 und eines Senken-Ventils 70 zur Folge:
Wird das Ventilelement 67 zur Herbeiführung der Stellung Fahrt manuell oder durch eine im Folgenden noch näher beschriebene Reset-to-Ride-Funktion aus der Ventileinrichtung 4 herausbewegt, gleitet ein Ventilstößel 71 des Fahrt-Ventils 68 entlang einer Rampe 72 des Ventilelements 67, womit das Fahrt-Ventil 68 von einer Sperrstellung in eine Durchlassstellung überführt wird. In der Stellung Fahrt befinden sich das Heben-Ventil 69 und das Senken-Ventil 70 in ihren Sperrstellungen.

Ist das Ventilelement 67 in die Ventileinrichtung 4 hineingeschoben (vgl. Fig. 11), befinden sich das Heben-Ventil 69 und Senken-Ventil 70 in der mittigen Stellung Stopp jeweils in ihrer Sperrstellung, wie dies in Fig. 11 zu erkennen ist.

Erfolgt eine Verschwenkung des Ventilelements 67 aus dieser Stellung Stopp in Richtung der Stellung Heben, betätigt ein Nocken 73 des Ventilelements 67 einen Ventilstößel 74 des Heben-Ventils 69 während das Senken-Ventil 70 in seiner Sperrstellung verbleibt.

Hingegen führt die Verschwenkung des Ventilelements 67 in die Stellung Senken dazu, dass ein Nocken 75 einen Ventilstößel 76 des Senken-Ventils 70 betätigt, womit das Senken-Ventil 70 in seine Entlüftungsstellung überführt wird, während das Heben-Ventil 69 in seiner Sperrstellung verbleibt.

Gemäß Fig. 11 ist der Luftfederkreis einkreisig ausgebildet mit an eine gemeinsame Luftfederleitung 77 angeschlossenen Luftfederbälgen 78.

In der Stellung Fahrt sind die Luftfederbälge 78 über die Luftfederleitung 77 und das Fahrt-Ventil 68 in seiner Durchlassstellung über ein mechanisches Niveauregelventil 79 mit dem Vorratsbehälter 51 verbunden. Das mechanische Niveauregelventil 79 nimmt in an sich bekannter Weise eine Druckbeaufschlagung der Luftfederbälge 78 entsprechend der Einfederung der Achsen vor, um ein konstantes Fahrniveau zu gewährleisten.

Will der Fahrer beispielsweise an einer Rampe das Fahrzeug entladen und die Höhe des Fahrzeugaufbaus an die Höhe der Rampe anpassen, betätigt der Fahrer zunächst das Ventilelement 67 manuell von der Stellung Fahrt in die Stellung Stopp. Zum Anheben des Fahrzeugaufbaus überführt der Fahrer dann das Ventilelement 67 in die Stellung Heben, in der das Heben-Ventil 69 den Vorratsbehälter 51 mit der Luftfederleitung 77 und damit mit den Luftfederbälgen 78 verbindet.

Verschwenkt hingegen der Benutzer das Ventilelement 67 in die Stellung Senken, stellt das Senken-Ventil 70 eine Verbindung der Luftfederleitung 77 mit einer Entlüftung 80 des Senken-Ventils 70 her.

Als Besonderheit verfügt die Hebe-Senk-Ventileinrichtung 66 über eine Reset-to-Ride-Einrichtung 81. Für die in Fig. 11 dargestellte Ausführungsform verfügt die Reset-to-Ride-Einrichtung 81 über eine Druckkammer 82, die in der Art eines Kolbens von einer Stirnseite des Ventilelements 67 beaufschlagt ist. Mittels einer Druckbeaufschlagung der Druckkammer 82 kann das Ventilelement 67 von der Stellung Stopp in die Stellung Fahrt überführt werden. Zur Druckbeaufschlagung der Druckkammer 82 ist dieser über eine Reset-to-Ride-Leitung 83 mit dem Ausgangsanschluss des Notbremsfunktion-Overrideventils 44 verbunden, der auch mit dem Steueranschluss 49 des Parkventils 10 verbunden ist. Somit kann mittels der Umschaltung des Notbremsfunktion-Overrideventils 44 in die Belüftungsstellung die Reset-to-Ride-Funktion ausgeführt werden.

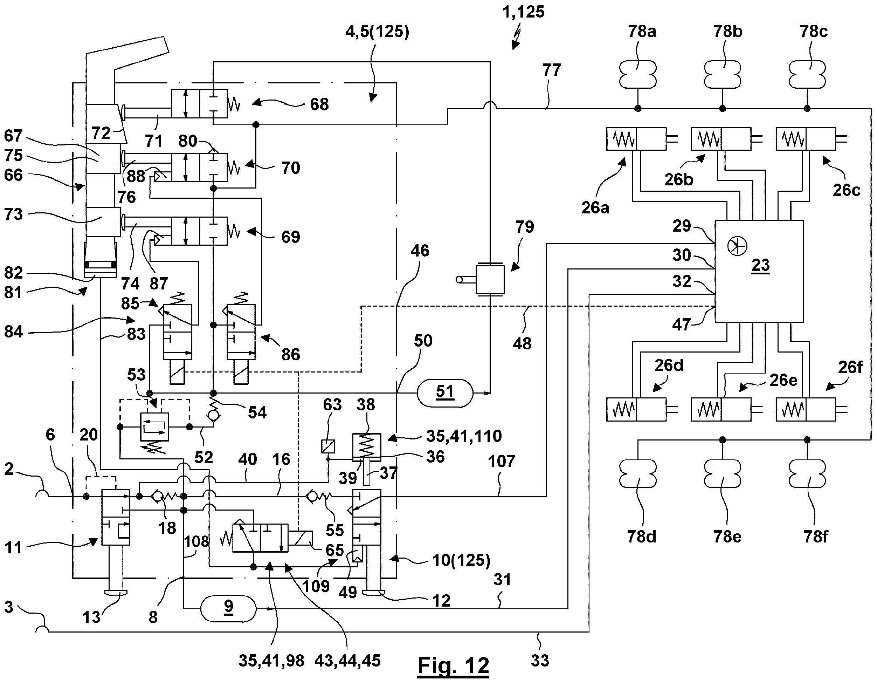

Das in **Fig. 12** dargestellte Ausführungsbeispiel entspricht im Wesentlichen dem in Fig. 11 dargestellten Ausführungsbeispiel. Allerdings ist hier zusätzlich eine elektronische Niveauregeleinrichtung in die Ventileinrichtung 4 integriert. Somit kann hierbei nicht nur das Niveau der Luftfederbälge 78 manuell über die Hebe-Senk-Ventileinrichtung 66 beeinflusst werden, sondern auch mittels der elektronischen Niveauregeleinrichtung 84. Hierzu verarbeitet die Niveauregeleinrichtung 84 und eine zugeordnete Steuereinheit, hier die EBS-Steuereinheit 23, ein Niveausignal der Luftfederbälge 78 mit dem Regelungsziel, ein vorbestimmtes Niveau zu halten. Für das in Fig. 12 dargestellte Ausführungsbeispiel basiert die elektronische Niveauregeleinrichtung 84 auf einer elektropneumatischen Vorsteuerung des Heben-Ventils 69 und des Senken-Ventils 70 zusätzlich zu deren mechanischer Betätigung über das Ventilelement 67. Die Niveauregeleinrichtung 84 verfügt zu dem Zweck der Vorsteuerung über Magnetventile 85, 86, die hier als 3/2-Wege-Magnetventile ausgebildet sind. Das Heben-Ventil 69 und das Senken-Ventil 70 verfügen jeweils über einen Steueranschluss 87, 88. Das Magnetventil 85 verfügt über eine Belüftungsstellung, in der der Steueranschluss 87 des Heben-Ventils 69 mit dem Vorratsbehälter 51 verbunden wird, was zur Umschaltung des Heben-Ventils 69 aus der Sperrstellung in die Belüftungsstellung führt, sowie eine Entlüftungsstellung, in der das Heben-Ventil 69 infolge der Wirkung der Feder (ohne Betätigung des Ventilstößels 74) seine Sperrstellung einnimmt. Entsprechend weist das Magnetventil 86 eine Belüftungsstellung auf, in der dieses den Vorratsbehälter 51 mit dem Steueranschluss 88 des Senken-Ventils 70 verbindet, womit dieses umgeschaltet wird in die Durchlassstellung, sowie eine Entlüftungsstellung auf, welche zur Folge hat, dass das Senken-Ventil 70 (ohne mechanische Betätigung des Ventilstößels 71) seine Sperrstellung einnimmt. Vorzugsweise nehmen die Magnetventile 85, 86 ohne Bestromung die Entlüftungsstellung ein. Die Magnetventile 85, 86 werden hier von der EBS-Steuereinheit 23 elektronisch gesteuert. Diese elektronische Niveauregelung kann auch manuell gesteuert werden, indem die EBS-Steuereinheit 23 ein elektrisches Signal des Benutzers zum Heben oder Senken, welches dieser über einen Schalter oder ein anderes elektrisch Vorgabeelement vorgibt, verarbeitet, und/oder es erfolgt eines automatische elektronische Regelung des Niveaus zur Gewährleistung einer Soll-Fahrhöhe durch die EBS-Steuereinheit 23.

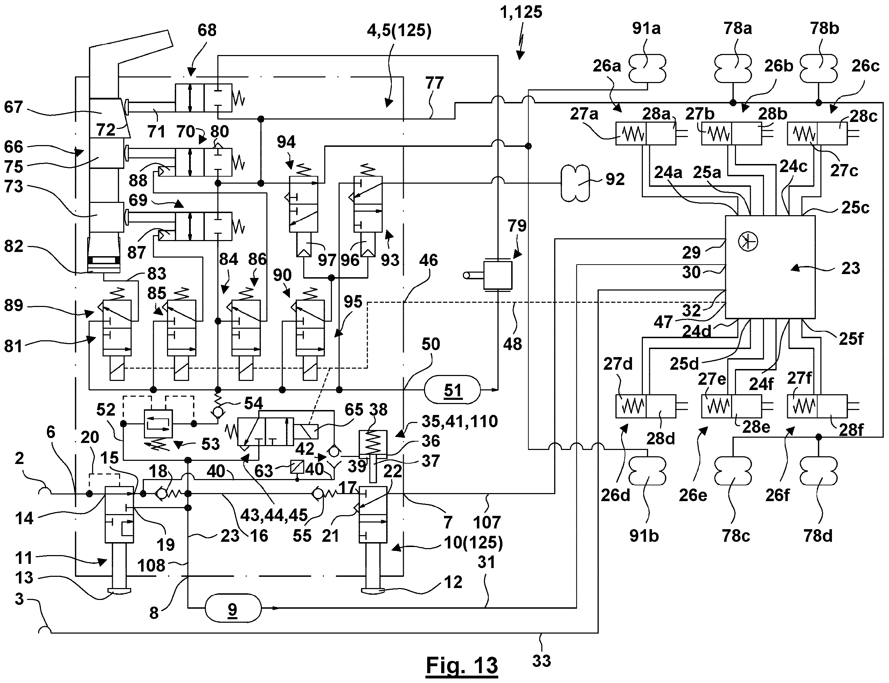

Für das in **Fig. 13** dargestellte Beispiel entspricht zunächst die Integration des Parkventils 10, des Rangierventils 11, des Notbremsfunktion-Overrideventils 44 und der Park-Sicherheitseinrichtung 35 und der Notbremseinrichtung 41 sowie des Wechselventils 42 in die Ventileinrichtung 4 dem Beispiel gemäß Fig. 7. Zusätzlich ist in die Ventileinrichtung 4 die Hebe-Senk-Ventileinrichtung 66 mit dem Ventilelement 67, dem Fahr-Ventil 68, dem Heben-Ventil 69 und dem Senken-Ventil 70 sowie die elektronische Niveauregeleinrichtung 84 mit den Magnetventilen 85, 86 zur Vorsteuerung integriert. In diesem Fall ist die Reset-to-Ride-Einrichtung 81 mit einem Reset-to-Ride-Magnetventil 89 ausgebildet, welches hier als be- und entlüftendes 3/2-Wege-Magnetventils ausgebildet ist, mit dem Vorratsbehälter 51 verbunden ist und ausschließlich der Druckbeaufschlagung der Druckkammer 82 der Hebe-Senk-Ventileinrichtung 66 dient.

Zusätzlich ist hier in die Ventileinrichtung 4 eine Liftachsventileinrichtung 90 integriert. Die Liftachsventileinrichtung 90 ermöglicht beladungs- und achslastabhängig eine gegenläufige Be- und Entlüftung einerseits von Tragbälgen 91 einer Liftachse sowie andererseits eines Liftbalgs 92 der Liftachse.

Für das in Fig. 13 dargestellte Beispiel verfügt die Liftachsventileinrichtung 90 über ein den Liftbalg 92 be- und entlüftendes Liftbalgventil 93 sowie ein die Tragbälge 91 ent- und belüftendes Tragbalgventil 94. Das Liftbalgventil 93 und das Tragbalgventil 94 verfügen über umgekehrte Ventilstellungen, so dass infolge der Beaufschlagung durch eine Feder das Liftbalgventil 93 ohne Ansteuerung seine Entlüftungsstellung einnimmt, während infolge der Beaufschlagung durch eine Feder das Tragbalgventil 94 ohne Ansteuerung seine Belüftungsstellung einnimmt. Dies hat den Vorteil, dass das Liftbalgventil 93 und das Tragbalgventil 94 mit demselben Steuersignal beaufschlagt werden können.

Für das Beispiel gemäß Fig. 13 sind das Liftbalgventil 93 und das Tragbalgventil 94 elektropneumatisch vorgesteuert durch ein Vorsteuerventil 95. Das Vorsteuerventil 95 ist mit den Steueranschlüssen 96, 97 des Liftbalgventils 93 und des Tragbalgventils 94 verbunden. Das Vorsteuerventil 95 ist als be- und entlüftendes 3/2-Wege-Magnetventil ausgebildet und verbindet in der Belüftungsstellung die Steueranschlüsse 96, 97 mit dem Vorratsbehälter 51.

In der Belüftungsstellung verbindet das Tragbalgventil 94 die Tragbälge 91 einerseits mit dem Ausgang des Fahrt-Ventils 68 und damit auch mit dem Niveauregelventil 79 in der Durchlassstellung des Fahrt-Ventils 68, so dass für aktivierte Liftachse auch eine mechanische Niveauregelung der Tragbälge 91 durch das Niveauregelventil 79 erfolgen kann. Andererseits ist der Eingang des Tragbalgventils 94 auch mit dem Heben-Ventil 69 und Senken-Ventil 70 verbunden, so dass bei aktivierter Liftachse auch eine manuelle Verstellung des Niveaus der Tragbälge 91 möglich ist.

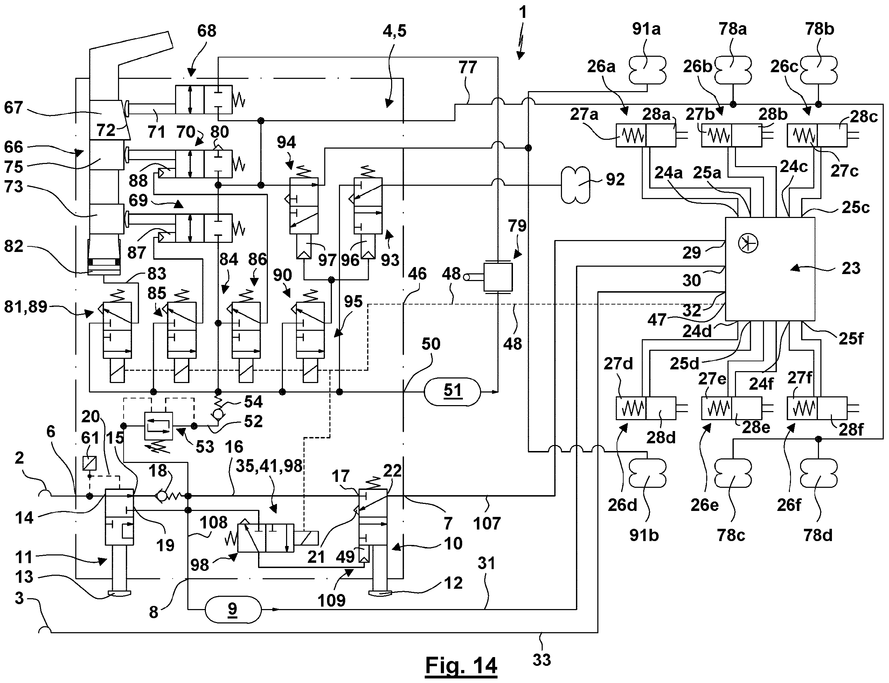

Grundsätzlich entspricht die Nutzfahrzeuganhänger-Druckluftanlage 1 gemäß Fig. 14 der Nutzfahrzeuganhänger-Druckluftanlage 1 gemäß Fig. 13. Allerdings ist hier die Park-Sicherheitseinrichtung 35 und/oder die Notbremseinrichtung 41 anders ausgebildet und es ist keine Notbremsfunktion-Overrideeinrichtung 43 vorhanden. Hier ist die Park-Sicherheitseinrichtung 35 und die Notbremseinrichtung 41 mit einem mit dem Vorratsbehälter 9 verbundenen und be- und entlüftenden Magnetventil 98 ausgebildet, welches den Steueranschluss 49 des Parkventils 10 be- und entlüftet. Das Magnetventil 98 ist hier als 3/2-Wege-Magnetventil ausgebildet. In bestromten Zustand nimmt dieses seine Belüftungsstellung ein, die zur Folge hat, dass das Parkventil 10 aus der Parkstellung in die Lösestellung überführt wird. Dies hat zur Folge, dass für den Fahrbetrieb das Magnetventil 98 permanent zu bestromen ist, während dieses für die Ausführung der Notbremsfunktion oder die Gewährleistung der Park-Sicherheitsfunktion nicht bestromt werden muss.

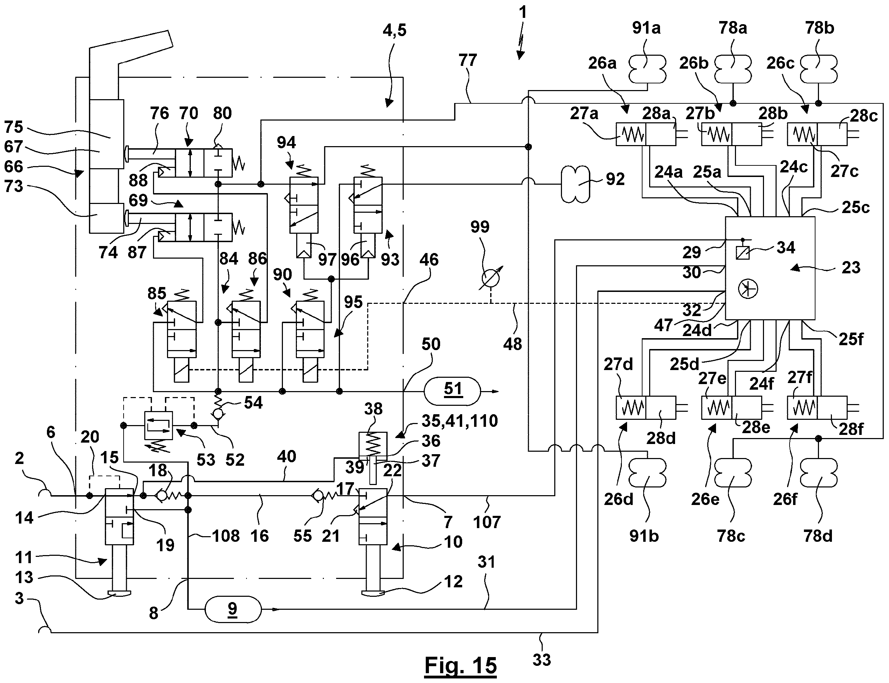

Gemäß Fig. 15 sind zunächst die Ventilelemente in die Ventileinrichtung 4 integriert, wie dies grundsätzlich in Fig. 8 dargestellt ist. Allerdings ist hier keine Notbremsfunktion-Overrideeinrichtung 43 in die Ventileinrichtung 4 integriert, so dass das Parkventil 10 auch keinen Steueranschluss 49 aufweist. Die Integration der der Luftfederung einschließlich der Liftachse zugeordneten Ventilelemente in die Ventileinrichtung 4 entspricht grundsätzlich dem in Fig. 13 dargestellten Beispiel.

Allerdings verfügt hier die Hebe-Senk-Ventileinrichtung 66 ausschließlich über das Heben-Ventil 69 und das Senken-Ventil 70, ohne dass ein Fahrt-Ventil 68 vorhanden ist und auch keine Reset-to-Ride-Einrichtung vorhanden ist, so dass keine Druckkammer 82 vorhanden ist und kein Reset-to-Ride-Magnetventil 89 vorhanden ist.

In Fig. 15 ist auch ein Wegsensor 99 dargestellt, auf Grundlage welcher die automatische elektronische Niveauregelung durch die elektronische Niveauregeleinrichtung 84 erfolgt.

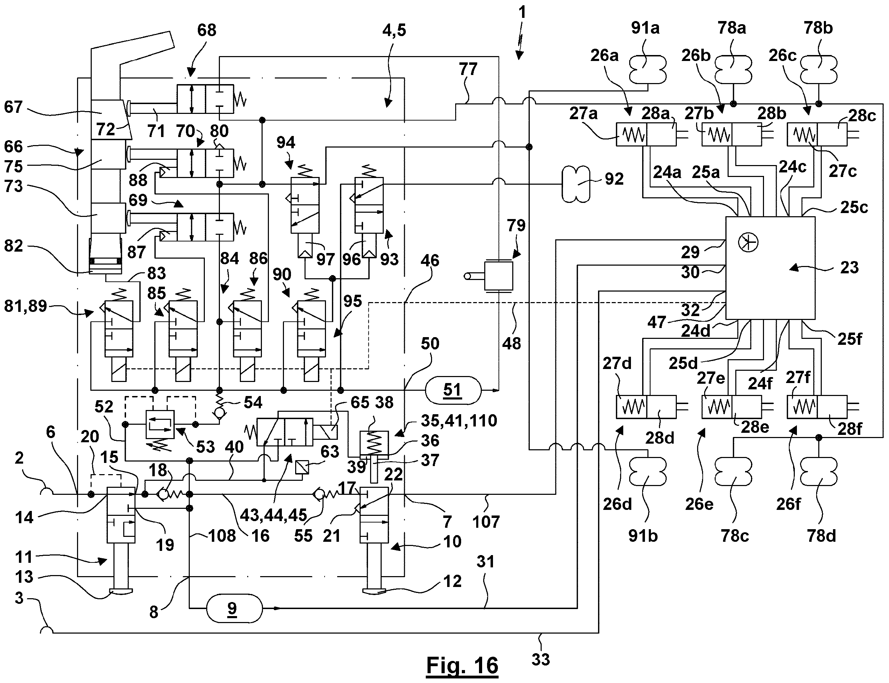

Das in Fig. 16 dargestellte Beispiel entspricht hinsichtlich der Integration der der Luftfederung einschließlich der Liftachse zugeordneten pneumatischen Bauelemente in die Ventileinrichtung 4 grundsätzlich dem in Fig. 13 dargestellten Beispiel.

Abweichend zu Fig. 13 wirkt hier aber das Notbremsfunktion-Overrideventil 44 nicht über das Wechselventil 42 auf die Druckkammer 39 der Park-Sicherheitseinrichtung 35 und/oder der Notbremseinrichtung 41 ein. Vielmehr ist der Ausgang des Notbremsfunktion-Overrideventils 44 unmittelbar mit der Druckkammer 39 verbunden, während ein Eingang des Notbremsfunktion-Overrideventils 44 mit dem Vorratsbehälter 9 verbunden ist und ein anderer Eingang des Notbremsfunktion-Overrideventils 44 mit der Verbindungsleitung 16 verbunden ist, hier zwischen dem Rangierventil 11 und dem Rückschlagventil 18, womit dieselbe Funktionalität gewährleistet werden kann.

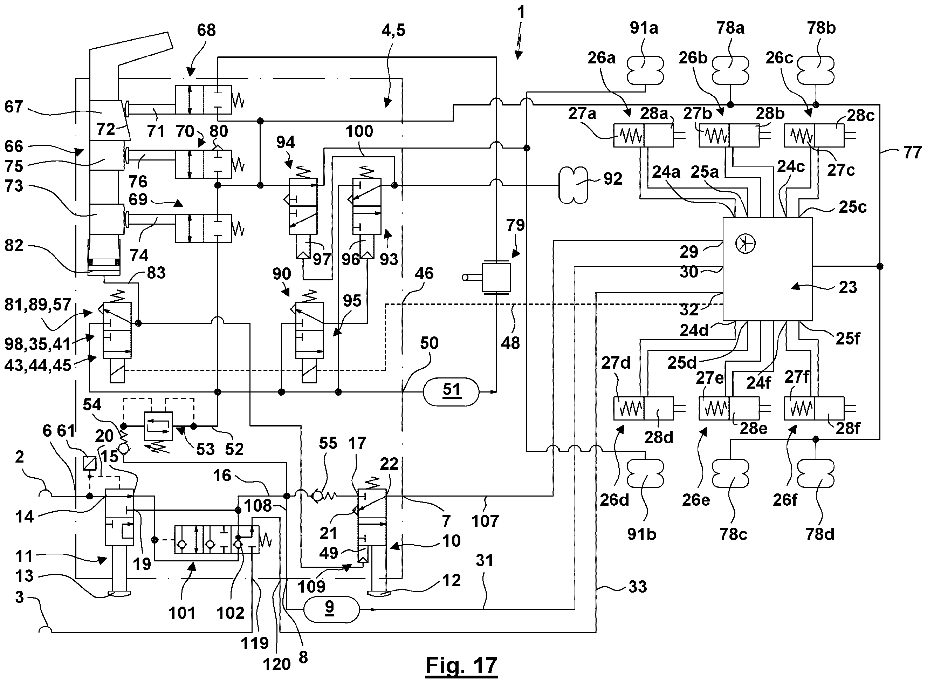

Für das in **Fig. 17** dargestellte Beispiel ist ein Reset-to-Ride-Magnetventil 89 multifunktional ausgebildet, indem dieses nicht nur zur Steuerung der Reset-to-Ride-Funktion mit der Druckkammer 82 verbunden ist, sondern über eine Zweigleitung auch mit dem Steueranschluss 49 des Parkventils 10 verbunden ist. Somit bildet das Reset-to-Ride-Magnetventil 89 auch ein Immobilisierventil 57.

Des Weiteren ist in Fig. 17 die Liftachsventileinrichtung 90 anders ausgebildet: Das Vorsteuerventil 95 wirkt hier lediglich auf den Steueranschluss 96 des Liftbalgventils 93 ein. In diesem Fall zweigt von der Verbindungsleitung des Liftbalgs 92 mit dem Liftbalgventil 93 eine Zweigleitung 100 ab, die mit dem Steueranschluss 97 des Tragbalgventils 94 verbunden ist, womit dieselbe Funktionalität gewährleistet werden kann.

Wie in Fig. 17 zu erkennen ist, ist auch möglich, dass in die Ventileinrichtung 4 ein Anhängerbremsventil 101 integriert ist. Das Anhängerbremsventil 101 wird von dem Ausgangsdruck des Rangierventils 11 (also je nach Stellung des Rangierventils 11 von dem Druck an dem Kupplungskopf Vorrat 2 oder von dem Druck in dem Behälter 9) angesteuert. Das Anhängerbremsventil 101 ist hier als 4/3-Wege-Ventil ausgebildet. Ein erster Eingang ist mit dem Ausgang des Rangierventils 11 verbunden. Ein zweiter Eingang ist mit dem Kupplungskopf Bremse 3 verbunden. Ein erster Ausgang ist über ein Rückschlagventil 55 mit dem Eingangsanschluss 17 des Parkventils 10 verbunden. Ein zweiter Ausgang ist mit dem Vorratsbehälter 9 verbunden. In einer ersten Betriebsstellung des Anhängerbremsventils 101, die durch eine Feder und ohne pneumatische Ansteuerung eingenommen wird, verbindet das Anhängerbremsventil 101 den mit dem Rangierventil 11 verbundenen Eingangsanschluss über ein Rückschlagventil 102 sowohl mit dem Vorratsbehälter 9 als auch über das Rückschlagventil 55 mit dem Eingangsanschluss 17 des Parkventils 10, während der mit dem Kupplungskopf Bremse 3 verbundene Eingangsanschluss abgesperrt ist. Der erstgenannte Ausgangsanschluss ist auch mit dem Vorratsbehälter 9 verbunden. In dieser Betriebsstellung wird über das Anhängerbremsventil 101 dem Bremssteueranschluss 32 der EBS-Steuereinheit 23 der Druck des Vorratsbehälters 9 zugeführt, so dass bei hinreichendem Druck in dem Vorratsbehälter 9 eine Bremsung des Anhängers über die Betriebsbremsen erfolgt. Nimmt das Parkventil die Lösestellung ein, wirkt auf die Federspeicherbremsen des Anhängers ebenfalls der Druck in dem Vorratsbehälter 9 ein. Verringert sich der Druck in dem Vorratsbehälter, erfolgt eine zunehmende Erzeugung der Bremswirkung über die Federspeicherbremsen, während die von den Betriebsbremsen erzeugte Bremswirkung entsprechend kleiner wird.

Ist der Kupplungskopf Vorrat 2 an das Zugfahrzeug angekuppelt und liegt eine ordnungsgemäße Druckluftversorgung vor, wird das Anhängerbremsventil 101 in die dritte Ventilstellung überführt. In dieser Ventilstellung ist das Rangierventil 11 über das Rückschlagventil 102 mit dem Ausgang des Anhängerbremsventils 101 verbunden, der sowohl mit dem Vorratsbehälter 9 als auch über das Rückschlagventil 55 mit dem Parkventil 10 verbunden ist. Befindet sich das Parkventil 10 in der Lösestellung, hat dies das Lösen der Federspeicherbremsen zur Folge, so dass der Anhänger fahrbereit ist. In der Ventilstellung verbindet das Anhängerbremsventil 101 den Kupplungskopf Bremse 3 mit dem Ausgang des Anhängerbremsventils 101, der über die Bremssteuerleitung 33 mit dem Bremssteueranschluss 32 der EBS-Steuereinheit verbunden ist. Somit kann in dieser Ventilstellung, die der Fahrtstellung entspricht, entsprechend der Vorgabe des Bremssteuerdrucks an dem Kupplungskopf Bremse 3 mittels der EBS-Steuereinheit 23 ein geeigneter Bremssteuerdruck für die Betriebsbremsen ausgesteuert werden.

Sinkt der Druck an dem Steueranschluss des Anhängerbremsventils 101, beispielsweise infolge einer Leckage im Bereich des Kupplungskopfs Vorrat 2, wird das Anhängerbremsventil 101 in eine mittige Ventilstellung umgeschaltet. In dieser mittigen Ventilstellung bleibt die Verbindung des Rangierventils über das Rückschlagventil 102 des Anhängerbremsventils 101 mit dem Vorratsbehälter 9 und über das Rückschlagventil 55 mit dem Eingangsanschluss 17 des Parkventils 10 bestehen. Das Rückschlagventil 102 sichert trotz des Abfalls des Drucks an dem Kupplungskopf Vorrat 2 den Lösedruck in den Federspeicherbremsen, die in der Lösestellung des Parkventils 10 weiterhin von dem Druck in dem Vorratsbehälter 9 beaufschlagt bleiben. In dieser mittigen Betriebsstellung ist die Verbindung des Kupplungskopfs Bremse 3 mit dem Bremssteueranschluss 32 der EBS-Steuereinheit unterbrochen.

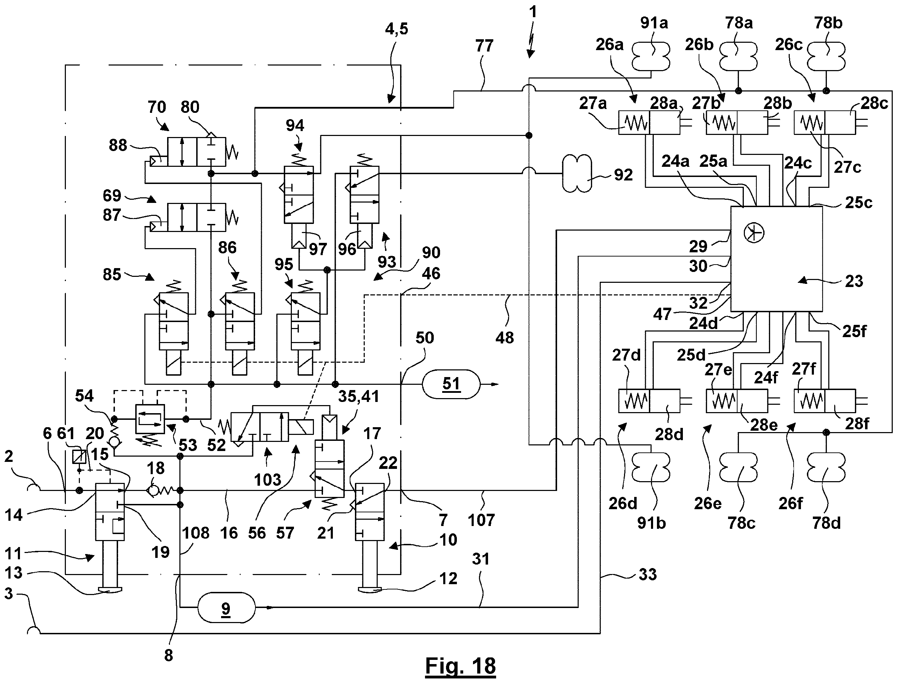

In dem in **Fig. 18** dargestellten Beispiel ist die manuelle Hebe-Senk-Ventileinrichtung 66 entfallen. Hier ist ausschließlich eine elektronische Niveauregeleinrichtung 84 vorhanden, bei der grundsätzlich entsprechend Fig. 12 das nicht über Ventilstößel mechanisch betätigte Heben-Ventil 69 und Senken-Ventil 70 über Magnetventile 85, 86 vorgesteuert werden. Des Weiteren ist in die Ventileinrichtung 4 eine Liftachsventileinrichtung 90 integriert, bei der grundsätzlich entsprechend Fig. 13 ein Vorsteuerventil 95 ein Liftbalgventil 93 und Tragbalgventil 94 gemeinsam ansteuert.

Gemäß Fig. 18 ist eine Immobilisiereinrichtung 56 gebildet mit einem Immobilisierventil 57, welches in die Verbindungsleitung 16 integriert ist und eine bei Ansteuerung eingenommene Durchlassstellung sowie eine ohne Ansteuerung infolge der Wirkung einer Feder eingenommene Entlüftungsstellung aufweist. Ohne dass dies zwingend der Fall ist, ist gemäß Fig. 18 das Immobilisierventil 57 elektropneumatisch vorgesteuert durch ein Vorsteuerventil 103. Dieses nimmt ohne elektrische Ansteuerung federbeaufschlagt seine Entlüftungsstellung ein, während das Vorsteuerventil 103 mit elektrischer Ansteuerung, hier ebenfalls durch die EBS-Steuereinheit 23, seine Belüftungsstellung einnimmt, in welcher der Steueranschluss des Immobilisierventils 57 mit dem Vorratsbehälter 9 verbunden wird.

Erfolgt keine elektrische Freigabe, indem durch elektrische Bestromung das Vorsteuerventil 103 in die Belüftungsstellung geschaltet wird, wird über das Immobilisierventil 57 die Federspeicherbremse entlüftet, auch wenn sich das Parkventil 10 in der Lösestellung befindet. Damit kann ohne Autorisierung keine Bewegung des Anhängers erfolgen.

Während eines Fahrbetriebs muss eine permanente Bestromung des Vorsteuerventils 103 erfolgen. Denkbar ist auch, dass für die Herbeiführung einer Notbremsung über die Federspeicherbremsen die Bestromung des Vorsteuerventils beseitigt wird, womit die Immobilisiereinrichtung 56 auch die Funktion einer Notbremseinrichtung 41 erfüllen kann.

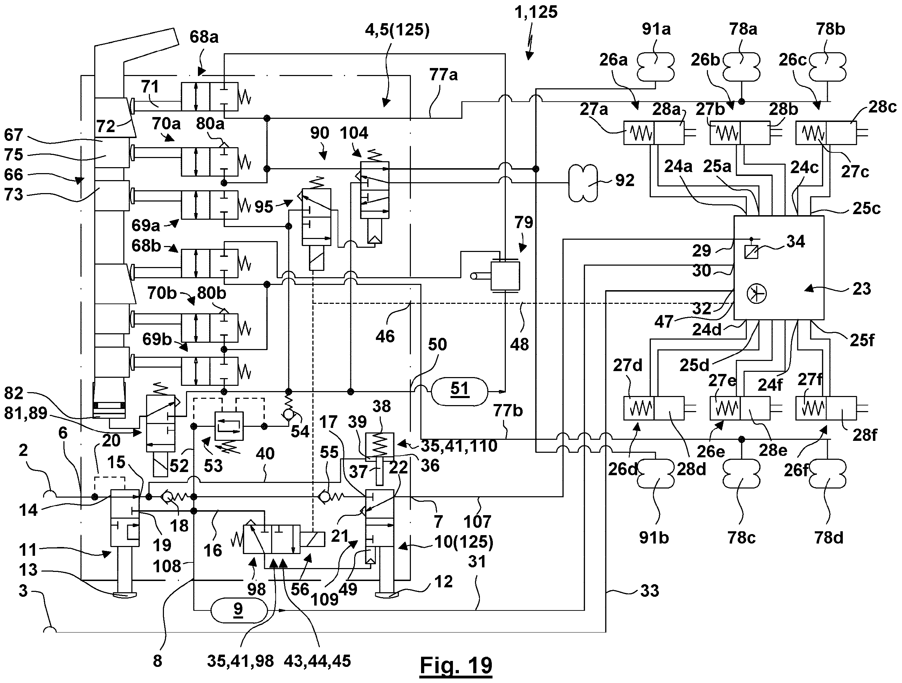

Gemäß **Fig. 19** ist die Luftfederungsanlage zweikreisig ausgebildet, was zur Folge hat, dass in der Hebe-Senk-Ventileinrichtung 66 jeweils zwei Fahrt-Ventile 68a, 68b, zwei Heben-Ventile 69a, 69b und zwei Senken-Ventile 70a, 70b vorgesehen sind, über welche jeweils die Druckbeaufschlagung in den beiden Kreisen gesteuert werden kann.

In der Liftachsventileinrichtung 90 sind das Liftbalgventil 93 und das Tragbalgventil 94 zusammengefasst zu einem Kombiventil 104, welches als 5/2-Wegeventil ausgebildet ist und in einer Betriebsstellung die Tragbälge 91 belüftet und den Liftbalg 92 entlüftet und den in der anderen Betriebsstellung die Tragbälge entlüftet und den Liftbalg 92 belüftet. Das Kombiventil 104 ist elektropneumatisch vorgesteuert durch ein Vorsteuerventil 95.

Die nicht die Luftfederung betreffenden Ventilelemente, die in die Ventileinrichtung 4 integriert sind, entsprechen in Fig. 19 im Wesentlichen dem in Fig. 8 dargestellten Ausführungsform mit den entsprechenden gewährleisteten Funktionen.

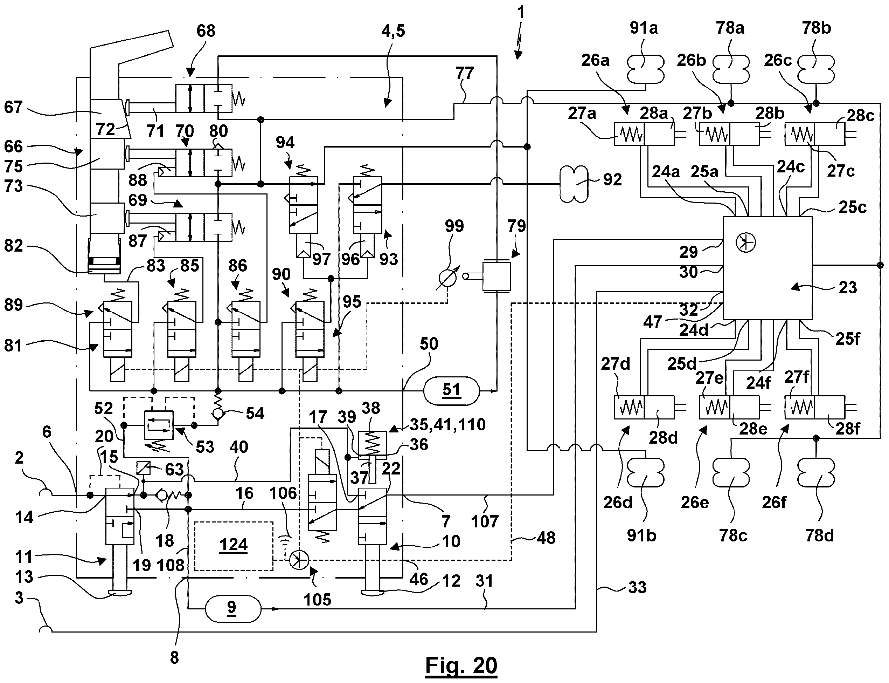

Für das in **Fig. 20** dargestellte Beispiel wird der EBS-Steuereinheit 23 der die Luftfederbälge 78 beaufschlagende Druck zugeführt, so dass der Druck in den Luftfederbälgen 78 für die Regelung der elektronischen Niveauregeleinrichtung 84 berücksichtigt werden kann.

Die die Luftfederung betreffenden, in die Ventileinrichtung 4 integrierten pneumatischen Bauelemente entsprechen grundsätzlich der Ausgestaltung gemäß Fig. 13. Für das in Fig. 20 dargestellte Beispiel verfügt die Ventileinrichtung 4 über eine eigene elektronische Steuereinheit 105. Die elektronische Steuereinheit 105 kommuniziert einerseits über die Steuerleitung 48 mit der EBS-Steuereinheit 23. Andererseits verfügt die elektronische Steuereinheit 105 über eine drahtlose Sende- und/oder Empfangseinrichtung 106, mit der die elektronische Steuereinheit 105 mit Sensoren, der EBS-Steuereinheit 23 und/oder anderen Steuereinheiten drahtlos Daten austauschen kann. Der elektronischen Steuereinheit 105 wird vorzugsweise auch ein Messsignal eines Wegsensor für die Erfassung eines Niveaus zugeführt. Die elektronische Steuereinheit 105 steuert elektrisch die Magnetventile der Ventileinrichtung 4, hier das Reset-to-Ride-Magnetventil 89, die Magnetventile 85, 86 und das Vorsteuerventil 95.

Für das in Fig. 20 dargestellte Beispiel ist in der Verbindungsleitung 16 entsprechend Fig. 18 ein Immobilisierventil 57 dem Parkventil 10 vorgeordnet. Abweichend zu Fig. 18 ist das Immobilisierventil 57 aber nicht elektropneumatisch vorgesteuert. Vielmehr wird dieses (unter Gewährleistung der zu Fig. 18 beschriebenen Funktionen) direkt durch die elektronische Steuereinheit 105 elektrisch gesteuert.

Gemäß Fig. 20 verfügt die Ventileinrichtung 4 über eine Eingabe- und/oder Ausgabeeinrichtung 124, bei der es sich um ein Display, eine akustische Signaleinrichtung, einen Touchscreen, Schalter, eine Tastatur u. ä. handeln kann. Eine derartige Eingabe- und/oder Ausgabeeinrichtung 124 kann auch bei den anderen dargestellten und beschriebenen Ausführungsbeispielen vorhanden sein. Die Eingabe- und/oder Ausgabeeinrichtung 124 dient der Kommunikation mit einem Benutzer in Form der Übermittlung von Betriebszuständen des Zugfahrzeugs, des Anhängers und/oder der Nutzfahrzeuganhänger-Druckluftanlage 1 an den Benutzer und zur Eingabe von Wünschen durch den Benutzer hinsichtlich einer Änderung des Betriebszustands derselben.

Eine Kommunikation einer elektronischen Steuereinheit 23 und/oder 105 mit einer anderen Steuereinheit und/oder Sensoren sowie der Eingabe- und/oder Ausgabeeinrichtung 124 kann über übliche drahtgebundene oder drahtlose Verbindungen, Bussysteme, CAN, LIN oder eine Funkschnittstelle erfolgen.

Für eine Ausgestaltung der Erfindung ist in die das Parkventil 10 und das Rangierventil 11 aufweisende Ventileinrichtung 4 ein elektronisch gesteuertes Ventil integriert. Hierbei erfolgt vorzugsweise die elektronische Steuerung dieses mindestens einen elektronisch gesteuerten Ventils durch die EBS-Steuereinheit 23.

Für die dargestellten Ausführungsbeispiele werden der EBS-Steuereinheit 23 zwei unterschiedliche Bremsdrücke zugeführt, nämlich einerseits der Druck des Parkbremsanschlusses 7 der Ventileinrichtung 4 und andererseits der Bremssteuerdruck an dem Kupplungskopf Bremse 3, was durch unmittelbare Verbindung des Kupplungskopfs Bremse 3 mit dem Bremssteueranschluss 32 der EBS-Steuereinheit 23 erfolgen kann oder über die Ventileinrichtung, insbesondere unter Zwischenschaltung eines in die Ventileinrichtung 4 integrierten Bremssteuerventils 101, erfolgen kann. Möglich ist, dass der EBS-Steuereinheit 23 ausschließlich diese beiden Drücke zugeführt werden. Es ist aber auch möglich, dass der EBS-Steuereinheit 23 ein weiterer Druck zugeführt wird. Hierbei kann es sich um den Druck einer Luftfederanlage handeln, wobei dann dieser Druck in der EBS-Steuereinheit (oder ein entsprechendes Drucksignal) verarbeitet wird, um einen geeigneten Betriebsbremsdruck für die Betriebsbremskammern 28 auszusteuern, der beispielsweise abhängig sein kann von einer Achslast, die mit dem Druck in der Luftfederanlage bzw. einem Luftfederbalg der jeweiligen Achse korreliert.

Für Ausführungsformen der Erfindung kann ein Vorratsbehälter 9 sowohl mit dem Behälteranschluss 8 der Ventileinrichtung 4 als auch mit dem Behälteranschluss 30 der EBS-Steuereinheit 23 verbunden sein.

Zuvor wurde erläutert, dass die Override-Funktion der Override-Ventileinrichtung 43 dann deaktiviert wird, wenn der Druck in dem Vorratsbehälter 9 einen Schwellwert unterschreitet, welcher für die Durchführung ordnungsgemäßer Betriebsbremsungen erforderlich ist. Möglich ist, dass für die Ausführung der Override-Funktion durch die Notbremsfunktion-Overrideeinrichtung 43 alternativ oder kumulativ geprüft wird, ob die elektrischen, elektropneumatischen oder mechanischen Komponenten der Ventileinrichtung 4 noch funktionsfähig sind, was beispielsweise aus den Signalen für die Bestromung der Magnetventile und/oder einem erfassten Druck in der Ventileinrichtung ermittelt werden kann.

Möglich ist auch, dass neben der Übertragung des Bremssteuerdrucks über den Kupplungskopf Bremse 3 auch ein elektrisches Signal über ein geeignetes Interface zwischen Zugfahrzeug und Anhänger übertragen wird. In diesem Fall kann sogar dann, wenn an dem Kupplungskopf Bremse 3 kein ordnungsgemäßes Bremssteuersignal vorliegt, mittels der EBS-Steuereinheit 23 auf Grundlage des elektrisch übertragenen Bremssignals eine Abbremsung des Anhängers über die Betriebsbremsen je nach Vorgabe durch das Zugfahrzeug erfolgen kann.

Möglich ist, dass eine erfindungsgemäß Drucklufteinrichtung 125 für die beschriebenen und dargestellten Ausführungsbeispiele von der Nutzfahrzeuganhänger-Druckluftanlage 1 gebildet ist. Möglich ist aber auch, dass die erfindungsgemäße Drucklufteinrichtung 125 von einem Teil der Nutzfahrzeuganhänger-Druckluftanlage 1, hier insbesondere nur von dem Parkventil 10 oder von der als Baueinheit 5 ausgebildete Ventileinrichtung 4, ausgebildet ist.

Da für die Beispiele gemäß Fig. 1, 6, 7, 13 bis 18 und 20 das Parkventil 10 nicht über die beiden Aktuatoren 109, 110 verfügt, sind diese Beispiele nicht vom Wortlaut der Patentansprüche umfasst und fallen somit nicht in den Geltungsbereich der Erfindung gemäß der beigefügten Patentansprüche.

### BEZUGSZEICHENLISTE

- 1: Nutzfahrzeuganhänger-Druckluftanlage
- 2: Kupplungskopf Vorrat
- 3: Kupplungskopf Bremse
- 4: Ventileinrichtung
- 5: Baueinheit
- 6: Versorgungsanschluss
- 7: Parkbremsanschluss
- 8: Behälteranschluss
- 9: Vorratsbehälter
- 10: Parkventil
- 11: Rangierventil
- 12: Betätigungsknopf
- 13: Betätigungsknopf
- 14: Eingangs- oder Versorgungsanschluss
- 15: Ausgangsanschluss
- 16: Verbindungsleitung
- 17: Eingangsanschluss
- 18: Rückschlagventil
- 19: Behälteranschluss
- 20: Steuerleitung
- 21: Entlüftungsanschluss
- 22: Parkbremsanschluss
- 23: EBS-Steuereinheit
- 24: Parkbremsanschluss
- 25: Betriebsbremsanschluss
- 26: Kombi-Bremszylinder
- 27: Federspeicherkammer
- 28: Betriebsbremskammer
- 29: Parkbremsanschluss
- 30: Behälteranschluss
- 31: Behälterleitung
- 32: Bremssteueranschluss
- 33: Bremssteuerleitung
- 34: Drucksensor
- 35: Park-Sicherheitseinrichtung
- 36: Kolben
- 37: Stößel
- 38: Feder
- 39: Druckkammer
- 40: Zweigleitung
- 41: Notbremseinrichtung
- 42: Wechselventil
- 43: Notbremsfunktion-Overrideeinrichtung
- 44: Notbremsfunktion-Overrideventil
- 45: 3/2-Wege-Magnetventil
- 46: Steueranschluss
- 47: Steueranschluss
- 48: Steuerleitung
- 49: Steueranschluss
- 50: Behälteranschluss
- 51: Vorratsbehälter
- 52: Zweigleitung
- 53: Überströmventil
- 54: Rückschlagventil
- 55: Rückschlagventil
- 56: Immobilisiereinrichtung
- 57: Immobilisierventil
- 58: Rückschlagventil
- 59: Steueranschluss
- 60: Steueranschluss
- 61: Drucksensor
- 62: Wechselventil
- 63: Drucksensor
- 64: Rückschlagventil
- 65: Steueranschluss
- 66: Hebe-Senk-Ventileinrichtung
- 67: Ventilelement
- 68: Fahrt-Ventil
- 69: Heben-Ventil
- 70: Senken-Ventil
- 71: Ventilstößel
- 72: Rampe
- 73: Nocken
- 74: Ventilstößel
- 75: Nocken
- 76: Ventilstößel
- 77: Luftfederleitung
- 78: Luftfederbalg
- 79: Mechanisches Niveauregelventil
- 80: Entlüftung
- 81: Reset-to-Ride-Einrichtung
- 82: Druckkammer
- 83: Reset-to-Ride-Leitung
- 84: Niveauregeleinrichtung
- 85: Magnetventil
- 86: Magnetventil
- 87: Steueranschluss
- 88: Steueranschluss
- 89: Reset-to-Ride-Magnetventil
- 90: Liftachsventileinrichtung
- 91: Tragbalg
- 92: Liftbalg
- 93: Liftbalgventil
- 94: Tragbalgventil
- 95: Vorsteuerventil
- 96: Steueranschluss
- 97: Steueranschluss
- 98: Magnetventil
- 99: Wegsensor
- 100: Zweigleitung
- 101: Anhängerbremsventil
- 102: Rückschlagventil
- 103: Vorsteuerventil
- 104: Kombiventil
- 105: elektronische Steuereinheit
- 106: Sende- und/oder Empfangseinrichtung
- 107: Parkbremsleitung
- 108: Zweigleitung
- 109: Aktuator
- 110: Aktuator
- 111: Steueranschluss
- 112: Steueranschluss
- 113: Bremsstufeinrichtung
- 114: Magnetventil
- 115: 3/2-Wege-Magnetventil
- 116: Steueranschluss
- 117: Magnetventil
- 118: 3/2-Wege-Magnetventil
- 119: Bremssteuereingang
- 120: Bremssteuerausgang
- 121: zweites Parkventil
- 122: Rückschlagventil
- 123: Steueranschluss
- 124: Eingabe- und/oder Ausgabeeinrichtung
- 125: Drucklufteinrichtung

## Patentansprüche

1. Drucklufteinrichtung (125) für einen Anhänger eines Nutzfahrzeugs mit
a) einem Parkventil (10) mit
aa) einem Parkbremsanschluss (22) und
ab) einer Parkstellung, in der Parkbremsanschluss (22) entlüftet ist, und
ac) einer Lösestellung, in der der Parkbremsanschluss (22) belüftet ist und
ad) mindestens einem manuellen Betätigungselement, mit dessen manueller Betätigung das Parkventil (10)
- von der Parkstellung in die Lösestellung überführbar ist und
- von der Lösestellung in die Parkstellung überführbar ist, und
ae) einem ersten elektrisch betätigbaren Aktuator (109), welcher das Parkventil (10) von der Parkstellung in die Lösestellung überführt und/oder in der Lösestellung hält,
**dadurch gekennzeichnet, dass**
b) das Parkventil (10) einen zweiten elektrisch betätigbaren Aktuator (110) aufweist, welcher das Parkventil (10) von der Lösestellung in die Parkstellung überführt und/oder in der Parkstellung hält,
c) eine elektronische Steuereinheit (23; 105) mit Steuerlogik vorhanden ist, die
ca) eine Berechtigung für den Betrieb des Anhängers prüft und bei fehlender Berechtigung eine Immobilisierfunktion ausführt, indem der zweite Aktuator (110) so betätigt wird, dass das Parkventil (10) von der Lösestellung in die Parkstellung überführt wird oder in der Parkstellung gehalten wird, und/oder
cb) das Vorliegen eines Notbremskriteriums prüft und bei Vorliegen des Notbremskriteriums eine Notbremsfunktion ausführt, indem der zweite Aktuator (110) so betätigt wird, dass das Parkventil (10) von der Lösestellung in die Parkstellung überführt wird oder in der Parkstellung gehalten wird, und/oder
cc) das Vorliegen eines Notbremskriteriums und das Vorliegen eines Drucks in einem Vorratsbehälter (9) für eine Betriebsbremse oberhalb eines Schwellwertes prüft und bei Vorliegen des Notbremskriteriums und bei Vorliegen des Drucks oberhalb des Schwellwerts eine Notbremsfunktion-Overridefunktion durchführt, indem der zweite Aktuator (110) nicht so betätigt wird, dass das Parkventil (10) von der Lösestellung in die Parkstellung überführt wird oder in der Parkstellung gehalten wird, und/oder indem der erste Aktuator (109) so betätigt wird, dass das Parkventil (10) von der Parkstellung in die Lösestellung überführt wird oder in der Lösestellung gehalten wird, und/oder
cd) das Vorliegen einer Parksituation prüft und bei Vorliegen einer Parksituation den zweiten Aktuator (110) so betätigt wird, dass eine Parksicherheitsfunktion ausgeführt wird, indem das Parkventil (10) von der Lösestellung in die Parkstellung überführt wird und/oder in der Parkstellung gehalten wird.

2. Drucklufteinrichtung (125) nach Anspruch 1, wobei
a) das Parkventil (10), ein Rangierventil (11), eine Hebe-Senk-Ventileinrichtung (66), eine Niveauregelventileinrichtung (84), eine Liftachsventileinrichtung (90), ein Drucksensor (61), ein Überströmventil (53) oder ein Anhängerbremsventil (101) in eine Ventileinrichtung (4) integriert ist und
b) die Ventileinrichtung (4) als Baueinheit (5) ausgebildet ist.

3. Drucklufteinrichtung (125) nach Anspruch 2, wobei die elektronische Steuereinheit (105) Teil der Ventileinrichtung (4) und der von dieser gebildeten Baueinheit (5) ist.

4. Drucklufteinrichtung (125) nach Anspruch 2, wobei die Steuereinheit als EBS-Steuereinheit (23) ausgebildet ist und das Parkventil (10) oder die Ventileinrichtung (4) einen elektrischen Steueranschluss (46) aufweist, über den die EBS-Steuereinheit (23) den ersten Aktuator (109) und/oder den zweiten Aktuator (110) steuert.

5. Drucklufteinrichtung (125) nach einem der Ansprüche 2 bis 4, wobei die oder eine EBS-Steuereinheit (23)
a) unter Umgehung der Ventileinrichtung (4) mit einem Kupplungskopf Bremse (3) verbunden ist und
b) mit dem Parkbremsanschluss (7) des Parkventils (10) verbunden ist.

6. Drucklufteinrichtung (125) nach einem der vorhergehenden Ansprüche, wobei
a) der zweite Aktuator (110) eine Druckkammer (39), die mit dem Druck an einem Versorgungsanschluss (6) beaufschlagt ist, und einen die Druckkammer (39) begrenzenden und federbeaufschlagten Kolben (36) aufweist,
b) der Kolben (36) mit einem Stößel (37) gekoppelt ist, der für eine Überführung des Parkventils (10) von der Lösestellung in die Parkstellung eine mechanische Antriebsverbindung mit einem Ventilelement des Parkventils (10) ausbildet.

7. Drucklufteinrichtung (125) nach Anspruch 6, wobei
a) die Druckkammer (39) mit dem Versorgungsanschluss (6) über ein elektrisches Notbremsfunktion-Overrideventil (44) verbindbar ist und
b) bei einem Abfall des Druckes an dem Versorgungsanschluss (6) die Notbremsfunktion-Overridefunktion ausgeführt wird, indem das Notbremsfunktion-Overrideventil (44) die Druckkammer (39) mit einem Vorratsbehälter (9) verbindet.

8. Drucklufteinrichtung (125) nach Anspruch 6, wobei ein elektrisches Notbremsfunktion-Overrideventil (44) in einer Overridestellung einen Steueranschluss (49) des Parkventils (10) mit einem Vorratsbehälter (9) verbindet, wodurch das Parkventil (10) in die Lösestellung überführt wird oder das Parkventil (10) in der Lösestellung gehalten wird, ohne dass das Parkventil (10) durch die Notbremsfunktion in die Parkstellung überführt werden kann.

9. Drucklufteinrichtung (125) nach Anspruch 8, wobei der zweite Aktuator (110) ein Immobilisierventil (57) aufweist, welches
a) dem Parkventil (10) vorgeordnet oder nachgeordnet ist und
b) eine Immobilisier-Betriebsstellung aufweist, in der eine Strömung von dem Parkventil (10) zu der oder einer EBS-Steuereinheit (23) nicht möglich ist, aber eine Strömung von der EBS-Steuereinheit (23) zu dem Parkventil (10) möglich ist, und
c) eine Mobilisier-Betriebsstellung aufweist, in der sowohl eine Strömung von dem Parkventil (10) zu der EBS-Steuereinheit (23) als auch eine Strömung von der EBS-Steuereinheit (23) zu dem Parkventil (10) möglich ist.

10. Drucklufteinrichtung (125) nach Anspruch 9, wobei das Immobilisierventil (57) die Mobilisier-Betriebsstellung einnimmt oder aufrecht erhält, wenn der Druck in der zu der EBS-Steuereinheit (23) führenden Parkbremsleitung (107) einen Schwellwert überschreitet.

11. Drucklufteinrichtung (125) nach Anspruch 9 oder 10, wobei das Immobilisierventil (57) durch ein Vorsteuerventil (103) elektropneumatisch vorgesteuert ist, wobei das Vorsteuerventil (103) vorzugsweise als Notbremsfunktion-Overrideventil (44) ausgebildet ist.

12. Drucklufteinrichtung (125) nach Anspruch 11, wobei ein pneumatischer Steueranschluss (59/60) des Immobilisierventils (57) alternativ
a) mit dem Vorsteuerventil (103) oder Notbremsventil-Overrideventil (44) und
b) einer Parkbremsleitung (107)
verbindbar ist.

13. Drucklufteinrichtung (125) nach einem der vorhergehenden Ansprüche, wobei der erste Aktuator (109) eine multifunktionales Notbremsfunktion-Overrideventil (44) aufweist, welches sowohl die Notbremsventil-Overridefunktion als auch eine Reset-to-Ride-Funktion einer oder der Hebe-Senk-Ventileinrichtung (66) steuert.

14. Drucklufteinrichtung (125) nach einem der Ansprüche 2 und 3 oder einem der Ansprüche 4 bis 13 in Rückbeziehung auf einen der Ansprüche 2 und 3, wobei die Ventileinrichtung (4)
a) eine drahtlose Sende- und/oder Empfangseinrichtung (106) und/oder
b) eine Eingabe- und/oder Ausgabeeinrichtung (124) aufweist.

## Claims

1. Compressed air device (125) for a trailer of a commercial vehicle comprising
a) a parking valve (10) with
aa) a parking brake port (22) and
ab) a parking position wherein the parking brake port (22) is de-aerated and
ac) a released position wherein the parking brake port (22) is aerated and
ad) at least one manual actuation element, the manual actuation of which transfers the parking valve (10),
- from the parking position into the released position and
- from the released position into the parking position and
ae) a first electrically actuated actuator (109) which transfers the parking valve (10) from the parking position into the released position and/or holds the parking valve (10) in the released position,
**characterized in that**
b) the parking valve (10) comprises a second electrically actuatable actuator (110) which transfers the parking valve (10) from the released position into the parking position and/or holds the parking valve (10) in the parking position,
c) an electronic control unit (23; 105) with control logic is provided which
ca) analyses the authorization for the operation of the trailer and in the case of a missing authorisation executes an immobilising function by actuating the second actuator (110) such that the parking valve (10) is transferred from the released position into the parking positing or the parking valve (10) is held in the parking position and/or
cb) analyses the presence of an emergency brake criterion and in the case that the emergency brake criterion is present executes an emergency brake function by actuating the second actuator (110) such that the parking valve (10) is transferred from the released position into the parking position or the parking valve (10) is held in the parking position and/or
cc) analyses the presence of an emergency brake criterion and the presence of a pressure in a supply reservoir (9) for a service brake above a threshold and in the case that the emergency brake criterion is present and the pressure is above the threshold executes an emergency brake function override function by not actuating the second actuator (110) in a way such that the parking valve (10) is transferred from the released position into the parking position or the parking valve (10) is held in the parking position, and/or by actuating the first actuator (109) in a way such that the parking valve (10) is transferred from the parking position into the released positing or the parking valve (10) is held in the released position and/or
cd) analyses the presence of a parking situation and in the case that a parking situation is present actuates the second actuator (110) in a way such that a parking securing function is executed by transferring the parking valve (10) from the released position into the parking position and/or by holding the parking valve (10) in the parking position.

2. Compressed air device (125) of claim 1, **wherein**
a) the parking valve (10), a shunting valve (11), a lifting-lowering-valve device (66), a level control valve device (84), a lift axle valve device (90), a pressure sensor (61), an overflow valve (53) or a trailer brake valve (101) is integrated into a valve device (4) and
b) the valve device (4) is embodied as a constructional unit (5).

3. Compressed air device (125) of claim 2, **wherein** the electronic control unit (105) is part of the valve device (4) and of the constructional unit (5) formed by the same.

4. Compressed air device (125) of claim 2, **wherein** the control unit is embodied as EBS-control unit (23) and the parking valve (10) or the valve device (4) comprises an electric control port (46) by which the EBS-control unit (23) controls the first actuator (109) and/or the second actuator (110).

5. Compressed air device (125) of one of claims 2 to 4, **wherein** the or a EBS-control unit (23)
a) is connected to a coupling head brake (3) while bypassing the valve device (4) and
b) is connected to the parking brake port (7) of the parking valve (10).

6. Compressed air device (125) of one of the preceding claims, **wherein**
a) the second actuator (110) comprises a pressure chamber (39) which is biased by the pressure at a supply port (6) and a piston (36) limiting the pressure chamber (39) and biased by a spring,
b) the piston (39) is coupled to a stem (37) which when transferring the parking valve (10) from the released position into the parking position establishes a mechanical driving connection to a valve element of the parking valve (10).

7. Compressed air device (125) of claim 6, **wherein**
a) the pressure chamber (39) is connectable to the supply port (6) via an electric emergency brake function override valve (44) and
b) in the case of a pressure drop at the supply port (6) the emergency brake function override function is executed by connecting the pressure chamber (39) to a supply reservoir (9) via the emergency brake function override valve (44).

8. Compressed air device (125) of claim 6, **wherein** an electric emergency brake function override valve (44) in an override position connects a control port (49) of the parking valve (10) to a supply reservoir (9), in this way the parking valve (10) being transferred into the released position or the parking valve (10) being held in the released position so that it is not possible that the parking valve (10) is transferred by the emergency brake function into the parking position.

9. Compressed air device (125) of claim 8, **wherein** the second actuator (110) comprises an immobilising valve (57) which
a) is arranged upstream or downstream from the parking valve (10) and
b) comprises an immobilising operating position wherein a flow from the parking valve (10) to the or a EBS-control unit (23) is not possible whereas a flow from the EBS-control unit (23) to the parking valve (10) is possible, and
c) comprises a mobilising operating position wherein both a flow from the parking valve (10) to the EBS-control unit (23) as well as a flow from the EBS-control unit (23) to the parking valve (10) is possible.

10. Compressed air device (125) of claim 9, **wherein** in the immobilizing valve (57) is transferred into the mobilizing operating position or upholds the same when the pressure in the parking brake line (107) leading to the EBS-control unit (23) exceeds a threshold.

11. Compressed air device (125) of claim 9 or 10, **wherein** the immobilizing valve (57) is electro-pneumatically pilot controlled by a pilot control valve (103), the pilot control valve (103) preferably being embodied as emergency brake function override valve (44).

12. Compressed air device (125) of claim 11, **wherein** a pneumatic control port (59/60) of the immobilizing valve (57) can be alternatively connected
a) to the pilot control valve (103) or emergency brake valve override valve (44) and
b) a parking brake line (107).

13. Compressed air device (125) of one of the preceding claims, **wherein** the first actuator (109) comprises a multifunctional emergency brake function override valve (44) which controls both the emergency brake valve override function as well as a reset-two-ride-function of a or the lifting-lowering-valve device (66).

14. Compressed air device (125) of one of claims 2 and 3 or one of claims 4 to 13 when referring back to one of claims 2 and 3, **wherein** the valve device (4) comprises
a) a wireless transmitting and/or receiving device (106) and/or
b) an input device and/or output device (124).

## Revendications

1. Dispositif à air comprimé (125) pour une remorque d'un véhicule utilitaire avec
a) une soupape de stationnement (10) avec
aa) un raccordement de freinage de stationnement (22) et
ab) une position de stationnement dans laquelle le raccordement de freinage de stationnement (22) est purgé et
ac) une position de relâchement dans laquelle le raccordement de freinage de stationnement (22) est ventilé et
ad) au moins un élément d'actionnement manuel avec l'actionnement manuel duquel la soupape de stationnement (10)
- peut être déplacée de la position de stationnement vers la position de relâchement et
- peut être déplacée de la position de relâchement vers la position de stationnement et
ae) un actionneur actionnable électriquement (109) qui déplace la soupape de stationnement (10) de la position de stationnement vers la position de relâchement et/ou la maintient dans la position de relâchement,
**caractérisé en ce que**
b) la soupape de stationnement (10) comprend un deuxième actionneur actionnable électriquement (110) qui déplace la soupape de stationnement (10) de la position de relâchement vers la position de stationnement et/ou la maintient dans la position de stationnement,
c) une unité de commande électronique (23 ; 105) avec une logique de commande est prévue, qui
ca) vérifie une autorisation pour le fonctionnement de la remorque et, en cas d'absence d'une autorisation, exécute une fonction d'immobilisation en actionnant le deuxième actionneur (110) de sorte que la soupape de stationnement (10) est déplacée de la position de relâchement vers la position de stationnement ou est maintenue dans la position de stationnement et/ou
cb) vérifier l'existence d'un critère de freinage d'urgence et, dans le cas de l'existence du critère de freinage d'urgence, exécute une fonction de freinage d'urgence en actionnant le deuxième actionneur (110) de sorte que la soupape de stationnement (10) est déplacée de la position de relâchement vers la position de stationnement ou est maintenue dans la position de stationnement et/ou
cc) vérifie l'existence d'un critère de freinage d'urgence et l'existence d'une pression dans un réservoir (9) pour un frein de service au-dessus d'une valeur seuil et, dans le cas de l'existence du critère de freinage d'urgence et de l'existence de la pression au-dessus de la valeur seuil, exécute une fonction de contournement de fonction de freinage d'urgence, grâce au fait que le deuxième actionneur (110) n'est pas actionné de sorte que la soupape de stationnement (10) est déplacée de la position de relâchement vers la position de stationnement ou est maintenue dans la position de stationnement et/ou grâce au fait que le premier actionneur (109) est actionné de sorte que la soupape de stationnement (10) est déplacée de la position de stationnement vers la position de relâchement ou est maintenue dans la position de relâchement et/ou
cd) vérifie l'existence d'une situation de stationnement et, dans le cas de l'existence d'une situation de stationnement, le deuxième actionneur (110) est actionné de sorte qu'une fonction de sécurité de stationnement est exécutée en déplaçant la soupape de stationnement (10) de la position de relâchement vers la position de stationnement et/ou en la maintenant dans la position de stationnement.

2. Dispositif à air comprimé (125) selon la revendication 1, dans lequel
a) la soupape de stationnement (10), une soupape de manoeuvre (11), un dispositif à soupape de levage-abaissement (66), un dispositif à soupape de régulation de niveau (84), un dispositif à soupape d'essieu relevable (90), un capteur de pression (61), une soupape de décharge (53) ou une soupape de freinage de remorque (101) est intégré dans un dispositif à soupape (4) et
b) le dispositif à soupape (4) est conçu comme un module (5).

3. Dispositif à air comprimé (125) selon la revendication 2, dans lequel l'unité de commande électronique (105) fait partie du dispositif à soupape (4) et du module (5) constitué de celui-ci.

4. Dispositif à air comprimé (125) selon la revendication 2, dans lequel l'unité de commande est conçue comme une unité de commande EBS (23) et la soupape de stationnement (10) ou le dispositif à soupape (4) comprend un raccord de commande électrique (46), par l'intermédiaire duquel l'unité de commande EBS (23) contrôle le premier actionneur (109) et/ou le deuxième actionneur (110).

5. Dispositif à air comprimé (125) selon l'une des revendications 2 à 4, dans lequel l'unité ou une unité de commande EBS (23)
a) est reliée avec un frein de tête de couplage (3) en contournant le dispositif à soupape (4) et
b) est reliée avec le raccord de freinage de stationnement (7) de la soupape de stationnement (10).

6. Dispositif à air comprimé (125) selon l'une des revendications précédentes, dans lequel
a) le deuxième actionneur (110) comprend une chambre de pression (39) qui est sollicitée avec la pression au niveau d'un raccord d'alimentation (6) et un piston (36) délimitant la chambre de pression (39) et sollicité par un ressort,
b) le piston (36) est couplé avec un poussoir (37), qui forme, pour un déplacement de la soupape de stationnement (10) de la position de relâchement vers la position de stationnement, une liaison d'entraînement mécanique avec un élément de la soupape de stationnement (10).

7. Dispositif à air comprimé (125) selon la revendication 6, dans lequel
a) la chambre de pression (39) peut être reliée avec le raccord d'alimentation (6) par l'intermédiaire d'une soupape de contournement de fonction de freinage d'urgence (44) et
b) lors d'une chute de pression au niveau du raccord d'alimentation (6), la fonction de contournement de la fonction de freinage d'urgence est exécutée, grâce au fait que la soupape de contournement de fonction de freinage d'urgence (44) relie la chambre de pression (39) avec un réservoir (9).

8. Dispositif à air comprimé (125) selon la revendication 6, dans lequel une soupape de contournement de fonction de freinage d'urgence (44) électrique relie, dans une position de contournement, un raccord de commande (49) de la soupape de stationnement (10) avec un réservoir (9), ce qui déplace la soupape de stationnement (10) vers la position de relâchement ou la soupape de stationnement (10) est maintenue dans la position de relâchement, sans que la soupape de stationnement (10) puisse être déplacée par la fonction de freinage d'urgence vers la position de stationnement.

9. Dispositif à air comprimé (125) selon la revendication 8, dans lequel le deuxième actionneur (110) comprend une soupape d'immobilisation (57) qui
a) est disposée en amont ou en aval de la soupape de stationnement (10) et
b) présente une position de mode d'immobilisation dans laquelle un écoulement de la soupape de stationnement (10) vers l'unité ou une unité de commande EBS (23) n'est pas possible, mais un écoulement de l'unité de commande EBS (23) vers la soupape de stationnement (10) est possible et
c) présente une position de mode de mobilisation dans laquelle aussi bien un écoulement de la soupape de stationnement (10) vers l'unité de commande EBS (23) qu'un écoulement de l'unité de commande EBS (23) vers la soupape de stationnement (10) est possible.

10. Dispositif à air comprimé (125) selon la revendication 9, dans lequel la soupape d'immobilisation (57) adopte ou maintient la position de mode de mobilisation lorsque la pression dans la conduite de freinage de stationnement (107) conduisant à l'unité de commande EBS (23) dépasse une valeur seuil.

11. Dispositif à air comprimé (125) selon la revendication 9 ou 10, dans lequel la soupape d'immobilisation (57) est pilotée de manière électropneumatique par une soupape de pilotage (103), dans lequel la soupape de pilotage (103) est conçue de préférence comme une soupape de contournement de fonction de freinage d'urgence (44).

12. Dispositif à air comprimé (125) selon la revendication 11, dans lequel un raccord de commande pneumatique (59/60) de la soupape d'immobilisation (57) peut être relié alternativement
a) avec la soupape de pilotage (103) ou la soupape de contournement de la soupape de freinage d'urgence (44) et
b) une conduite de freinage de stationnement (107).

13. Dispositif à air comprimé (125) selon l'une des revendications précédentes, dans lequel le premier actionneur (109) comprend une soupape de contournement de fonction de freinage d'urgence (44) qui contrôle aussi bien la fonction de contournement de la soupape de freinage d'urgence qu'une fonction « reset-to-ride » d'un dispositif ou du dispositif à soupape de levage-abaissement (66).

14. Dispositif à air comprimé (125) selon l'une des revendications 2 et 3 ou l'une des revendications 4 à 13, en référence à une des revendications 2 et 3, dans lequel le dispositif à soupape (4) comprend
a) un dispositif d'émission et/ou de réception sans fil (106) et/ou
b) un dispositif d'entrée et/ou de sortie (124).
